# EUROPEAN PATENT APPLICATION

(11) **EP 4 815 327 A2**
(43) Date of publication of application: **30.09.2026**
(21) Application number: 26162329.2
(22) Date of filing: 04.03.2026
(51) Int. Cl.: H04B 7/06

(54) **METHOD PERFORMED BY USER EQUIPMENT, METHOD PERFORMED BY NETWORK DEVICE, AND USER EQUIPMENT**

(30) Priority: 28.03.2025 US 202563779314 P; 26.02.2026 US 202619550299
(71) Applicant: Acer Incorporated, New Taipei City 221 (TW)
(72) Inventor: LO, Li-Chung, 221 New Taipei City 221 (TW); LEE, Chien-Min, 221 New Taipei City 221 (TW); CHEN, Jen-Hsien, New Taipei City 221 (TW)
(74) Representative: Haseltine Lake Kempner LLP

(57) **Abstract**

A method performed by a user equipment (UE), a method performed by a network device (NW), and a user equipment (UE) are provided. In the method, a configuration for channel state information, CSI, report associated with a first event type is received. One or more event instances for a first reference signal configured by a resource set for a new beam is determined based on the first event type in a case that a reference signal receiving power, RSRP, value of the first reference signal is greater than a RSRP value of a second reference signal. An indicator for the CSI report is transmitted according to the determined event instance.

## Description

### TECHNICAL FIELD

The present disclosure generally relates to a method performed by a user equipment (UE), a method performed by a network device, and a UE.

### BACKGROUND

In modern wireless communication systems, such as 5G New Radio (NR) and beyond, Beam Management (BM) and Multi-Input Multi-Output (MIMO) technologies are essential for ensuring high-speed data transmission. To manage beam switching, a network device typically uses Transmission Configuration Indicator (TCI) framework to inform user equipment (UE) about quasi-co-location (QCL) relationship between downlink reference signals and physical channel ports.

Current TCI state activation procedures introduce significant latency. When UE detects a new beam with better quality, it must wait for the network device to update the MAC CE activation list and provide DCI indication. Furthermore, UE may need to perform time-frequency synchronization with the synchronization signal block (SSB) associated with the new beam, which can take up to 160ms. Long beam application latency can result in performance loss or service interruption.

### SUMMARY

Accordingly, the present disclosure is directed to a method performed by a user equipment (UE), a method performed by a network device, and a UE.

According to one or more exemplary embodiments of the disclosure, a method performed by user equipment (UE) is provided. The method includes: receiving a configuration for channel state information (CSI) report, wherein the configuration is associated with a first event type; determining at least one event instance for a first reference signal configured by a resource set for a new beam based on the first event type in a case that a reference signal receiving power (RSRP) value of the first reference signal is greater than a RSRP value of a second reference signal; and transmitting an indicator for the CSI report according to at least one determined event instance.

According to one or more exemplary embodiments of the disclosure, a UE includes a transceiver and a processor. The processor is coupled to the transceiver. The processor is configured for: receiving a configuration for CSI report, wherein the configuration is associated with a first event type; determining at least one event instance for a first reference signal configured by a resource set for a new beam based on the first event type in a case that a RSRP value of the first reference signal is greater than a RSRP value of a second reference signal; and transmitting an indicator for the CSI report according to at least one determined event instance.

According to one or more exemplary embodiments of the disclosure, a method performed by a network device is provided. The method includes: transmitting a configuration for CSI report, wherein the configuration is associated with a first event type; and receiving an indicator for the CSI report according to at least one determined event instance, wherein at least one event instance for a first reference signal configured by a resource set for a new beam based on the first event type is determined in a case that a RSRP value of the first reference signal is greater than a RSRP value of a second reference signal.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram illustrating beam application latency in a wireless communication system.
FIG. 2 is a schematic diagram illustrating a transmission configuration indicator (TCI) state application.
FIG. 3 is a schematic diagram illustrating TCI state activation by MAC CE.
FIG. 4 is a schematic diagram illustrating active TCI state switching delay.
FIG. 5A is a schematic diagram illustrating a unified TCI framework for DCI without DL assignment.
FIG. 5B is a schematic diagram illustrating a unified TCI framework for DCI with DL assignment.
FIG. 6A is a schematic diagram illustrating UE-initiated beam reporting with triggering events.
FIG. 6B is a schematic diagram illustrating beam report transmission procedures.
FIG. 7 is a schematic diagram illustrating a radio communication network architecture according to an exemplary embodiment of the present disclosure.
FIG. 8 is a schematic diagram illustrating function modularization according to an exemplary embodiment of the present disclosure.
FIG. 9 is a schematic diagram illustrating multiple procedures according to an exemplary embodiment of the present disclosure.
FIG. 10 is a flowchart illustrating a method performed by a user equipment (UE) according to an exemplary embodiment of the present disclosure.
FIG. 11 is a schematic diagram illustrating DCI field according to an exemplary embodiment of the present disclosure.
FIG. 12 is a schematic diagram illustrating beam indication DCI according to an exemplary embodiment of the present disclosure.
FIG. 13 is a schematic diagram illustrating beam indication DCI according to an exemplary embodiment of the present disclosure.
FIG. 14 is a schematic diagram illustrating TCI state activation list determination according to an exemplary embodiment of the present disclosure.
FIG. 15 is a schematic diagram illustrating a CSI report according to an exemplary embodiment of the present disclosure.
FIG. 16 is a schematic diagram illustrating an association of RS, QCL type, and TCI state according to an exemplary embodiment of the present disclosure.
FIG. 17 is a schematic diagram illustrating configured RS type according to an exemplary embodiment of the present disclosure.
FIG. 18 is a schematic diagram illustrating an association of reported beam and TCI state pool according to an exemplary embodiment of the present disclosure.
FIG. 19 is a schematic diagram illustrating a selection based on the association of reported beam and TCI state pool according to an exemplary embodiment of the present disclosure.
FIG. 20 is a schematic diagram illustrating a selection based on the association of reported beam and TCI state pool according to an exemplary embodiment of the present disclosure.
FIG. 21 is a schematic diagram illustrating a selection based on the association of reported beam and TCI state pool according to an exemplary embodiment of the present disclosure.
FIG. 22 is a schematic diagram illustrating an association of reported beam and TCI state pools according to an exemplary embodiment of the present disclosure.
FIG. 23 is a schematic diagram illustrating a selection based on the association of reported beam and TCI state pools according to an exemplary embodiment of the present disclosure.
FIG. 24 is a schematic diagram illustrating a selection based on the association of reported beam and TCI state pools according to an exemplary embodiment of the present disclosure.
FIG. 25 is a schematic diagram illustrating an association of reported beam and TCI state pools according to an exemplary embodiment of the present disclosure.
FIG. 26 is a schematic diagram illustrating a selection based on the association of reported beam and TCI state pools according to an exemplary embodiment of the present disclosure.
FIG. 27 is a schematic diagram illustrating a selection based on the association of reported beam and TCI state pools according to an exemplary embodiment of the present disclosure.
FIG. 28 is a schematic diagram illustrating a selection of TCI state for activation according to an exemplary embodiment of the present disclosure.
FIG. 29 is a schematic diagram illustrating an association of reported beam and TCI state pool according to an exemplary embodiment of the present disclosure.
FIG. 30 is a schematic diagram illustrating a selection based on the association of reported beam and TCI state pool according to an exemplary embodiment of the present disclosure.
FIG. 31 is a schematic diagram illustrating a selection based on the association of reported beam and TCI state pool according to an exemplary embodiment of the present disclosure.
FIG. 32 is a schematic diagram illustrating a selection based on the association of reported beam and TCI state pool according to an exemplary embodiment of the present disclosure.
FIG. 33 is a schematic diagram illustrating an association of reported beam and TCI state pool according to an exemplary embodiment of the present disclosure.
FIG. 34 is a schematic diagram illustrating a selection based on the association of reported beam and TCI state pool according to an exemplary embodiment of the present disclosure.
FIG. 35 is a schematic diagram illustrating a selection TCI state associated with reported RS(s) satisfying triggering condition according to an exemplary embodiment of the present disclosure.
FIG. 36 is a schematic diagram illustrating MAC CE based latency reduction according to an exemplary embodiment of the present disclosure.
FIG. 37 is a schematic diagram illustrating TCI state activation by MAC CE according to an exemplary embodiment of the present disclosure.
FIG. 38 is a schematic diagram illustrating TCI state activation by MAC CE according to an exemplary embodiment of the present disclosure.
FIG. 39 is a schematic diagram illustrating a CSI report according to an exemplary embodiment of the present disclosure.
FIG. 40 is a schematic diagram illustrating an association of RS and TCI state pool according to an exemplary embodiment of the present disclosure.
FIG. 41 is a schematic diagram illustrating an association of reported beam and TCI state pool according to an exemplary embodiment of the present disclosure.
FIG. 42 is a schematic diagram illustrating an association of reported beam and TCI state pool according to an exemplary embodiment of the present disclosure.
FIG. 43 is a schematic diagram illustrating a TCI state list according to an exemplary embodiment of the present disclosure.
FIG. 44 is a schematic diagram illustrating an association of reported beam and TCI state pool according to an exemplary embodiment of the present disclosure.
FIG. 45 is a schematic diagram illustrating a selection of TCI states associated with reported RS satisfying triggering condition according to an exemplary embodiment of the present disclosure.
FIG. 46 is a schematic diagram illustrating an association of reported beam and TCI state pool according to an exemplary embodiment of the present disclosure.
FIG. 47 is a schematic diagram illustrating TCI state activation by MAC CE according to an exemplary embodiment of the present disclosure.
FIG. 48 is a schematic diagram illustrating TCI state activation by MAC CE according to an exemplary embodiment of the present disclosure.
FIG. 49 is a schematic diagram illustrating TCI state activation by MAC CEs according to an exemplary embodiment of the present disclosure.
FIG. 50 is a schematic diagram illustrating a new field for TCI state activation/ deactivation according to an exemplary embodiment of the present disclosure.
FIG. 51 is a schematic diagram illustrating a new field for TCI state activation/ deactivation according to an exemplary embodiment of the present disclosure.
FIG. 52 is a schematic diagram illustrating reusing field for TCI state activation/ deactivation according to an exemplary embodiment of the present disclosure.
FIG. 53 is a schematic diagram illustrating TCI state activation by MAC CE according to an exemplary embodiment of the present disclosure.
FIG. 54 is a schematic diagram illustrating RS for new beam measurement according to an exemplary embodiment of the present disclosure.
FIG. 55 is a schematic diagram illustrating an association of reported beam and SSB according to an exemplary embodiment of the present disclosure.
FIG. 56 is a schematic diagram illustrating a CSI report according to an exemplary embodiment of the present disclosure.
FIG. 57 is a schematic diagram illustrating a CSI report according to an exemplary embodiment of the present disclosure.
FIG. 58 is a schematic diagram illustrating a CSI report for T/F synchronization according to an exemplary embodiment of the present disclosure.
FIG. 59 is a schematic diagram illustrating a CSI report for T/F synchronization according to an exemplary embodiment of the present disclosure.
FIG. 60 is a schematic diagram illustrating a CSI report for T/F synchronization according to an exemplary embodiment of the present disclosure.
FIG. 61 is a schematic diagram illustrating a CSI report for T/F synchronization according to an exemplary embodiment of the present disclosure.
FIG. 62 is a schematic diagram illustrating a CSI report for T/F synchronization according to an exemplary embodiment of the present disclosure.
FIG. 63 is a schematic diagram illustrating a selection of SSB for T/F synchronization according to an exemplary embodiment of the present disclosure.
FIG. 64 is a schematic diagram illustrating an association of reported beam and SSB according to an exemplary embodiment of the present disclosure.
FIG. 65 is a schematic diagram illustrating an association of reported beam, RS, and SSB according to an exemplary embodiment of the present disclosure.
FIG. 66 is a schematic diagram illustrating a selection of SSB based on the association of reported beam, RS, and SSB according to an exemplary embodiment of the present disclosure.
FIG. 67 is a schematic diagram illustrating a selection of SSB based on the association of reported beam, RS, and SSB according to an exemplary embodiment of the present disclosure.
FIG. 68 is a schematic diagram illustrating a selection of SSB based on the association of reported beam, RS, and SSB according to an exemplary embodiment of the present disclosure.
FIG. 69 is a schematic diagram illustrating a selection of SSB based on the association of reported beam, RS, and SSB according to an exemplary embodiment of the present disclosure.
FIG. 70 is a schematic diagram illustrating a selection of SSB based on the association of reported beam, RS, and SSB according to an exemplary embodiment of the present disclosure.
FIG. 71 is a schematic diagram illustrating a selection of SSB based on the association of reported beam, RS, and SSB according to an exemplary embodiment of the present disclosure.
FIG. 72 is a schematic diagram illustrating a CSI report according to an exemplary embodiment of the present disclosure.
FIG. 73 is a schematic diagram illustrating an association of reported beam and SSB according to an exemplary embodiment of the present disclosure.
FIG. 74 is a schematic diagram illustrating an association of reported beam, RS, and SSB according to an exemplary embodiment of the present disclosure.
FIG. 75 is a schematic diagram illustrating a selection of SSB based on the association of reported beam, RS, and SSB according to an exemplary embodiment of the present disclosure.
FIG. 76 is a schematic diagram illustrating a selection of SSB based on the association of reported beam, RS, and SSB according to an exemplary embodiment of the present disclosure.
FIG. 77 is a schematic diagram illustrating a selection of SSB based on the association of reported beam, RS, and SSB according to an exemplary embodiment of the present disclosure.
FIG. 78 is a schematic diagram illustrating a selection of SSB based on the association of reported beam, RS, and SSB according to an exemplary embodiment of the present disclosure.
FIG. 79 is a schematic diagram illustrating a selection of SSB according to an exemplary embodiment of the present disclosure.
FIG. 80 is a flowchart illustrating a method performed by a network device according to an exemplary embodiment of the present disclosure.
FIG. 81 is a block diagram that illustrates a communication device according to an exemplary embodiment of the present disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings:

| Abbreviation | Full name |
|---|---|
| BWP | bandwidth part |
| CC | component carrier |
| CG | configured-grant |
| CRI | CSI-RS resource indicator |
| CSI | Channel state information |
| CSI-RS | Channel state information reference signal |
| CORESET | Control Resource Set |
| CQI | channel quality indicator |
| CRC | Cyclic Redundancy Check |
| DCI | downlink control information |
| DL | downlink |
| DM-RS | Demodulation RS |
| FDRA | frequency domain resource assignment |
| gNodeB(gNB): | e.g., next Generation Node B |
| HARQ-ACK | Hybrid Automatic Repeat request- acknowledgment |
| ID | identity |
| L1 | layer 1 |
| MAC | medium access control |
| MAC CE | MAC control element |
| MCS | modulation and code scheme |
| NDI | new data indicator |
| NW | Network |
| NZP | non-zero power |
| PCI | Physical Cell Identities |
| PMI | procoder matrix indicator |
| PDCCH | Physical downlink control channel |
| PDSCH | Physical downlink shared channel |
| PUCCH | physical uplink control channel |
| PUSCH | physical uplink shared channel |
| QCL | quasi co-located |
| RI | rank indicator |
| RNTI | Radio Network Temporary Identifier |
| RRC | radio resource control |
| RS | reference signal |
| RSRP | Reference signal receiving power |
| RSRQ | Reference signal receiving quality |
| RV | Redundancy version |
| SINR | single to interference noise ratio |
| SR | scheduling request |
| SRS | Sounding reference signal |
| SS | search space |
| SSB | Synchronization signal block |
| SSBRI | SSB resource indicator |
| SBFD | Sub-Band Full Duplex |
| TCI | Transmission configuration indication |
| TDD | Time Division Duplex |
| TDRA | time domain resource assignment |
| T/F | time/frequency |
| TRS | tracing reference signal |
| TRP | transmission reception point |
| Tx beam | transmitted beam |
| UE | user equipment |
| UEIBM | UE initiated beam management |
| UEIBR | UE initiated beam report |
| UL | uplink. |

Downlink in this disclosure may be uplink, flexible, SBFD, non-SBFD.

Beam indication DCI in this disclosure may be DL assignment DCI, DCI format 1_0, 1_1, 1_2, or 1_3.

Reported beam RS in this disclosure may be reported RS, RS indicated by CRI/SSBRI, CSI-RS, SSB.

Stop beam report may be equal to:
stop the procedure of UE initial beam report;
set counter to zero, wherein the counter is associated with an event type and/or aCSI-RS resource set.

"Establish" in this disclosure may be "determine".

Current beam RS in this disclosure may be
the reference signal indicated by the DCI field *tci-PresentInDCI* in a same CC of *CSI-ReportConfig,* or provided by a RRC parameter in the *CSI-ReportConfig, if* the *NZP-CSI-RS-ResourceSet* is configured with *repetition* set to 'on', else
the SSB which may be QCLed with the measured reference signal.

List indication in this disclosure may be response, or acknowledgement, confirmation.

New beam RS in this disclosure may be RS, new RS, CSI-RS, QCL RS, reported RS, reported new beam RS, reported beam, reported CSI, CSI-RS resource set associated with event type, *nrofReportedRS-UEIBR,* or *enabledCurrentBeamReport.*

Event type in this disclosure may be report type, triggering type.

At least one RS (or new beam RS) configured by the new Beam Resource Set of one event in a CSI Report Configuration, or provided by carrier in the CSI-ReportConfig.

Quasi co-location (QCL) relationship in this disclosure may be QCL assumption.

CSI Report quantity may be L1-RSRP, L1-SINR, RI, PMI, CQI, or capability.

Beam report in this disclosure may be UE-initiated beam report, CSI report, CSI report configuration, event type.

A cell in this disclosure may be a serving cell, a carrier or a CC (component carrier), a serving cell, MCG (master cell group), SCG (second cell group)..., but not limited herein.

"Configured" in this disclosure may be default/predefined/fixed/configured/activated/indicated, ..., but not limited herein.

RRC in this disclosure may be MAC CE, DCI, ..., but not limited herein.

UL in this disclosure may be PUSCH, PUCCH, PRACH, SRS, RS, ..., but not limited herein.

DL in this disclosure may be PDSCH, PDCCH, SSB, CSI-RS, RS, ..., but not limited herein.

gNB in this disclosure may be a NCR, a NCR group, UE, TRP, gNB, panel ..., but not limited herein.

PDSCH in this disclosure may be aperiodic CSI-RS.

TCI states in this disclosure may be QCL assumption, QCL type, reference RS, channel property, ..., but not limited herein.

Resource type in this disclosure may be:
DL;
UL;
SBFD;
Non-SBFD;
special;
flexible;
the symbols/slots with UL sub-band and/or UL sub-band.

SBFD in this disclosure may be:
Special;
the symbols/slots with UL sub-band and/or UL sub-band;
other than DL, UL or flexible.

Note: RS in this disclosure may be DL RS and/or UL RS.

A DL RS configuration in this disclosure may be:
a DM-RS group;
a DM-RS group index;
a DM-RS resource;
a DM-RS resource index;
a DM-RS port index;
a DM-RS port;
a CSI-RS resource set index;
a CSI-RS resource set;
a CSI-RS resource index;
a CSI-RS resource;
a CSI-RS port index;
a CSI-RS port;
a SSB resource set index;
a SSB resource set;
a SSB resource index;
a SSB resource;
a SSB port index;
a SSB port;
etc, but not limited herein.

A UL RS configuration in this disclosure may be:
a DM-RS group;
a DM-RS group index;
a DM-RS resource;
a DM-RS resource index;
a DM-RS port index;
a DM-RS port;
a RACH group;
a RACH group index;
a RACH resource;
a RACH resource index;
a SRS resource set index;
a SRS resource set;
a SRS resource index;
a SRS resource;
a SRS port index;
a SRS port;
etc, but not limited herein.

A beam in this disclosure may be represented by:
an antenna,
an antenna port,
an antenna element,
a group of antenna,
a group of antenna port,
a group of antenna element,
a spatial domain filter,
a reference signal resource,
a QCL assumption,
a TXRU,
etc, but not limited herein. For example, a first beam may be represented as a first antenna port, a first group of antenna port, or a first spatial domain filter. For example, a first beam direction may be represented as a QCL assumption or a spatial domain filter.

A Rx beam in the configuration in this disclosure may be:
a spatial Rx parameter,
a spatial domain receive filter,
a panel,
etc, but not limited herein.

A Tx beam in the configuration in this disclosure may be
a spatial Tx parameter,
a spatial domain transmission filter,
a panel,
etc, but not limited herein.

An index or an identity in this disclosure may be
CORESETPoolIndex,
TRP ID,
Panel ID,
etc, but not limited herein.

A Cell TRP (e.g., transmission reception point) in this disclosure may be:
a TRP,
a serving cell,
a gNodeB (e.g., next Generation Node B),
a panel,
an unlicensed cell,
an unlicensed serving cell,
an unlicensed TRP,
a gNodeB,
an eNodeB (evolved NodeB),
an eNB,
etc., but not limited herein.

Communication device in this disclosure may be represented by UE, or gNodeB, but not limited herein.

Combinations of embodiments disclosed in this disclosure is not precluded.

All steps in the embodiment may not be performed in a step-by-step way.

Embodiments disclosed in this disclosure may apply for unlicensed band, licensed band, non-DRX mode, DRX mode, or power saving, but not limited herein.

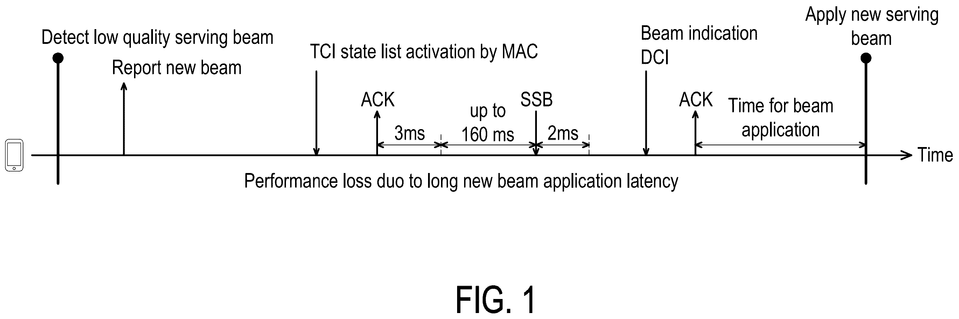

FIG. 1 is a schematic diagram illustrating beam application latency in a wireless communication system. Beam application latency refers to the time duration from a user equipment (UE) detecting serving beam quality degradation (or a new better beam) to actual application of the new serving beam for data reception. As shown in FIG. 1, after the UE detects low quality of the serving beam, a UE performs measurements and transmits a beam report to the network device (e.g., gNB). Upon receiving the report, a network device processes information and transmits beam indication downlink control information (DCI). This entire loop involves multiple delays: report transmission delay (e.g., 10ms), network processing and TCI state activation delay (e.g., 170ms), and beam indication delay (e.g., 5ms). If the new beam is not time/frequency (T/F) synchronized, the UE must wait for the synchronization signal block (SSB) associated with a new beam. Since the SSB periodicity can be up to 160ms, total latency often exceeds 180ms, leading to significant performance loss or service interruption.

If the TCI state associated with the new beam RS is not activated, the UE needs to receive the TCI state activation command by MAC CE before applying the TCI state associated with the new beam. However, there is a long new beam application latency, resulting in performance loss with poor quality of serving beam and service break off with increasing the probability of beam failure. Therefore, there is a need for maintaining the system performance and for a low beam failure probability, and the beam application latency reduction is needed after a UE-initiated beam report is sent.

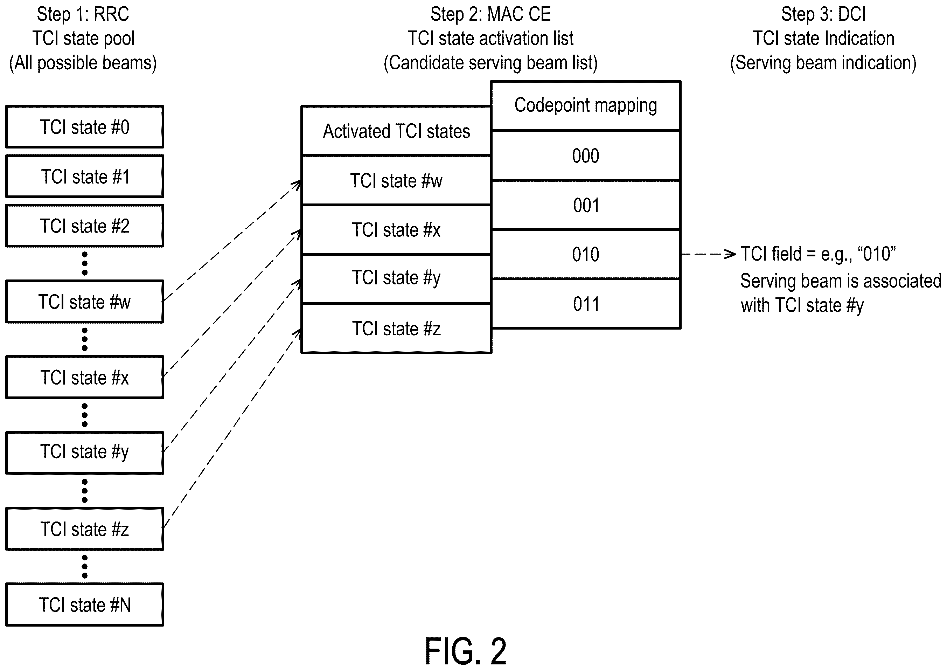

FIG. 2 is a schematic diagram illustrating a transmission configuration indicator (TCI) state application. Referring to FIG. 2, TCI state is a configuration that informs UE about quasi-co-location (QCL) relationship between downlink reference signals (RS) and demodulation reference signal (DM-RS) ports of physical channels (e.g., PDSCH, PDCCH). As illustrated, the network device configures TCI state pool via Radio Resource Control (RRC). From pool, the network device activates a subset of TCI states. Finally, DCI indicates a specific TCI state for active communication. This hierarchical structure ensures flexibility but introduces signaling overhead. For example, QCL Type may be associated with at least one of QCL-type, e.g., typeA, typeB, typeC, and/or typeD, e.g.,
1st QCL type = typeA, typeB, or typeC;
2nd QCL type = typed.

If the TCI state is configured with the 1st QCL type, the time domain is related QCL assumption, e.g., average delay, delay spread, and the frequency domain is related QCL assumption, e.g., Doppler shift, Doppler spread. If the TCI state is configured with the 2nd QCL type, the spatial domain is related QCL assumption, e.g., spatial Rx parameter.

Antenna port(s) may be the DM-RS ports of the PDSCH/PUSCH, the DM-RS port of PDCCH/PUCCH, the SRS port(s) of an SRS resource or the CSI-RS port(s) of a CSI-RS resource.

The UE may be configured with a list of up to M TCI-State configurations within the higher layer parameter PDSCH-Config to decode PDSCH according to a detected PDCCH with DCI intended for the UE and the given serving cell,
where M may depend on the UE capability *maxNumberConfiguredTCIstatesPerCC.*

The quasi co-location relationship may be configured by the higher layer parameter qcl-Type1 for the first DL RS, and qcl-Type2 for the second DL RS (if configured).

For the case of two DL RSs, the QCL types may not be the same, regardless of whether the references are to the same DL RS or different DL RSs.

The quasi co-location types corresponding to each DL RS may be given by the higher layer parameter qcl-Type in QCL-Info and may take one of the following values:
'typeA': {Doppler shift, Doppler spread, average delay, delay spread},
'typeB': {Doppler shift, Doppler spread},
'typeC': {Doppler shift, average delay},
'typeD': {Spatial Rx parameter}.

TCI state may be configured with *additionalPCI.*

Indicates the physical cell IDs (PCI) of the SSBs when referenceSignal is configured as SSB for both QCL-Type1 and QCL-Type2. In case the cell is present, the additionalPCI refers to a PCI value configured in the list configured using additionalPCI-ToAddModList in the serving cell indicated by the field cell. Otherwise, it refers to a PCI value configured in a list *additionalPCI-ToAddModList* configured in the serving cell where the TCI-State is applied by the UE. When this field is present, the cell for qcl-Type1 and qcl-Type2 is configured with the same value, if present.

The UE may be configured with a list of up to 128 TCI-State configurations, within the higher layer parameter dl-OrJointTCI-StateList in PDSCH-Config for providing a reference signal for the quasi co-location for DM-RS of PDSCH and DM-RS of PDCCH in a BWP/CC, for CSI-RS, and to provide a reference signal with qcl-Type set to 'typeD', if applicable, for determining UL TX spatial filter for dynamic-grant and configured-grant based PUSCH and PUCCH resource in a BWP/CC, and SRS.

The UE may receive an activation command, used to map up to 8 TCI states and/or pairs of TCI states, with one TCI state for DL channels/signals and/or one TCI state for UL channels/signals to the codepoints of the DCI field *'Transmission Configuration Indication'* for one or for a set of CCs/DL BWPs, and/or up to 8 sets of TCI states, where each set may be comprised of up to two TCI state(s) for DL and UL signals/channels, or up to two TCI state(s) for DL channels/signals and up to two TCI state(s) for UL channels/signals to the codepoints of the DCI field *'Transmission Configuration Indication'* for one or for a set of CCs/DL BWPs, and if applicable, for one or for a set of CCs/UL BWPs.

For the DM-RS of PDCCH, if the UE is configured with dl-OrJointTCI-StateList, the UE may expect that an indicated TCI-State indicates one of the following quasi co-location type(s):
'typeA' with a CSI-RS resource in a NZP-CSI-RS-ResourceSet configured with higher layer parameter trs-Info and, when applicable, 'typeD' with the same CSI-RS resource, or
'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition.

For the DM-RS of PDSCH, if the UE is configured with dl-OrJointTCI-StateList, the UE may expect that an indicated TCI-State indicates one of the following quasi co-location type(s):
'typeA' with a CSI-RS resource in a NZP-CSI-RS-ResourceSet configured with higher layer parameter trs-Info and, when applicable, 'typeD' with the same CSI-RS resource, or
'typeA' with a CSI-RS resource in a NZP-CSI-RS-ResourceSet configured with higher layer parameter trs-Info and, when applicable, 'typeD' with a CSI-RS resource in an NZP-CSI-RS-ResourceSet configured with higher layer parameter repetition.

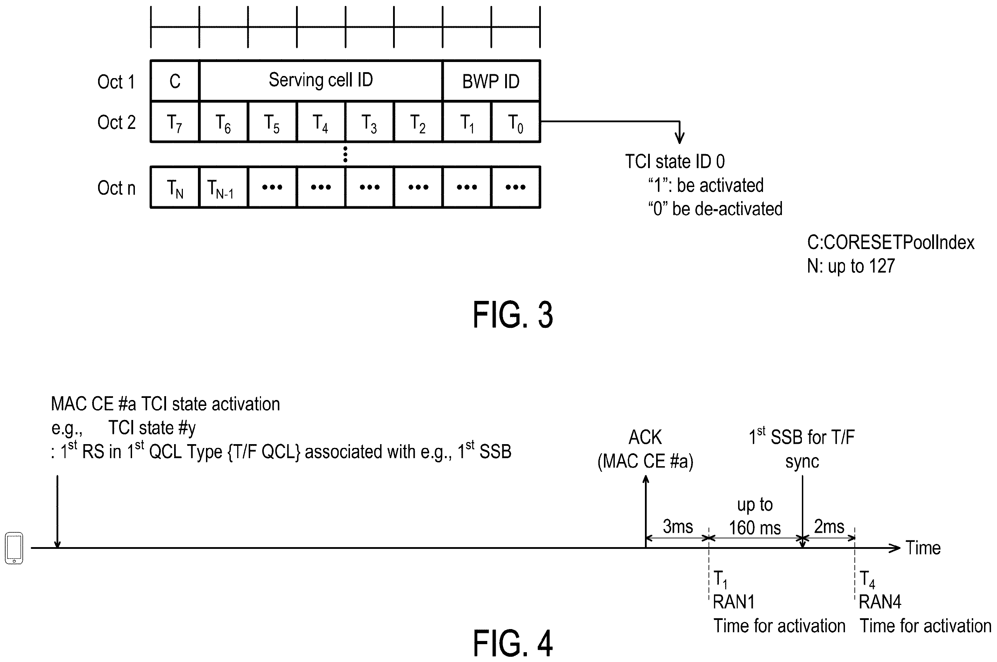

FIG. 3 is a schematic diagram illustrating TCI state activation by MAC CE. The Medium Access Control Control Element (MAC CE) is used to update an "activation list" (a subset of TCI states) from the RRC-configured pool. Then, the TCI state indication may be associated one TCI state (e.g., codepoint "010" for TCI state #y in the TCI field) from the activation list.

In one embodiment, the TCI States Activation/Deactivation for UE-specific PDSCH MAC CE may be identified by a MAC:
Serving Cell ID: This field may indicate the identity of the Serving Cell for which the MAC CE applies.
BWP ID: This field may indicate a DL BWP for which the MAC CE applies as the codepoint of the DCI bandwidth part indicator field.
Ti: This field may indicate the activation/deactivation status of the TCI state with TCI-StateId i.
The Ti field may be set to 1 to indicate that the TCI state with TCI-StateId i shall be activated and mapped to the codepoint of the DCI Transmission Configuration Indication field.
The Ti field may be set to 0 to indicate that the TCI state with TCI-StateId i shall be deactivated and is not mapped to the codepoint of the DCI Transmission Configuration Indication field.
The codepoint to which the TCI State is mapped may be determined by its ordinal position among all the TCI States with Ti field set to 1,
i.e., the first TCI State with Ti field set to 1 may be mapped to the codepoint value 0, the second TCI State with Ti field set to 1 may be mapped to the codepoint value 1, and so on.
The maximum number of activated TCI states may be 8.
The activated TCI states may be associated with at most one PCI different from the Serving Cell PCI at a time.
CORESET Pool ID: This field may indicate that mapping between the activated TCI states and the codepoint of the DCI Transmission Configuration Indication set by field Ti is specific to the ControlResourceSetld configured with CORESET Pool ID.
This field set to 1 may indicate that this MAC CE shall be applied for the DL transmission scheduled by CORESET with the CORESET pool ID equal to 1, otherwise, this MAC CE may be applied for the DL transmission scheduled by CORESET pool ID equal to 0.
In one embodiment, if the coresetPoolIndex is not configured for any CORESET, MAC entity may ignore the CORESET Pool ID field in this MAC CE when receiving the MAC CE.
In one embodiment, if the Serving Cell in the MAC CE is configured in a cell list that contains more than one Serving Cell, the CORSET Pool ID field may be ignored when receiving the MAC CE.

FIG. 4 is a schematic diagram illustrating active TCI state switching delay. As described in the unified TCI framework, even after the TCI state is activated in the MAC CE activation list, a UE requires a beam indication DCI to perform the actual switch. The process involves a DCI decoding time and a time for applying a spatial domain filter. Specifically, the network device first configures the TCI state pool (RRC), then activates the candidate list (MAC CE), and finally indicates the target beam (DCI). UE may not buffer the T/F information of the SSB, when UE performs a new beam RS measurement. Therefore, MAC-CE based TCI state switch delay/ Active TCI state list update delay may occur. UE may be able to receive PDCCH with target TCI state of the serving cell on which TCI state switch occurs at a first slot, where the first slot may be after slot n+ T_HARQ + 3*N_slot^(subframe,µ)+ TO_k*(T_{first-SSB} + T_{SSB-proc}) / NR slot length. The UE may be able to receive PDCCH with the old TCI state until slot n+ T_HARQ + 3*N_slot^(subframe,µ). The first SSB may be associated with a RS configured in the QCL-TypeA or QCL-TypeC to target TCI state.

In one embodiment, there are some known conditions for TCI state:
The TCI state may be known if the following conditions are met:
During the period from the last transmission of the RS resource used for the L1-RSRP measurement reporting for the target TCI state to the completion of the active TCI state switch, where the RS resource for L1-RSRP measurement may be the RS in the target TCI state or QCLed to the target TCI state.
TCI state switch command may be received within 1280 ms upon the last transmission of the RS resource for beam reporting or measurement.
The UE has sent at least 1 L1-RSRP report for the target TCI state before the TCI state switch command.

The TCI state may remain detectable during the TCI state switching period.

The SSB associated with the TCI state remains detectable during the TCI switching period. For example, SNR of the TCI state ≥ -3dB.
Otherwise, the TCI state may be unknown.

In one embodiment, UE may not buffer the T/F information of the SSB, when UE performs new beam RS measurement. There may have MAC-CE based TCI state switch delay/ Active TCI state list update delay. In one embodiment, if the target TCI state is known, upon receiving PDSCH carrying MAC-CE for activation/deactivation of UE-specific PDSCH TCI state at slot n; and/or
If the target TCI state is known, upon receiving PDSCH carrying MAC-CE for indication of UE-specific PDCCH TCI state in slot n,
UE may be able to receive PDCCH with target TCI state of the serving cell on which TCI state switch occurs at the first slot that is after slot n+ T_HARQ + 3 *N_slot^(subframe,µ)+ TO_k*(T_{first-}SSB + TSSB-proc) / NR slot length.
In one embodiment, the UE may be able to receive PDCCH with the old TCI state until slot n+ T_HARQ + 3*N_slot^(subframe,µ), where T_HARQ is the timing between DL data transmission and acknowledgement, T_{first-SSB} may be the time to first SSB transmission after MAC CE command is decoded by the UE.
In one embodiment, the first SSB may be associated with a RS configured in the QCL-TypeA or QCL-TypeC to target TCI state,
if the RS is a second SSB, the first SSB may be the second SSB, and/ or
if the RS is a CSI-RS, and/or the CSI-RS may be configured with a second TCI state, the first SSB is a second RS configured in the QCL-TypeA or QCL-TypeC of the second TCI state.

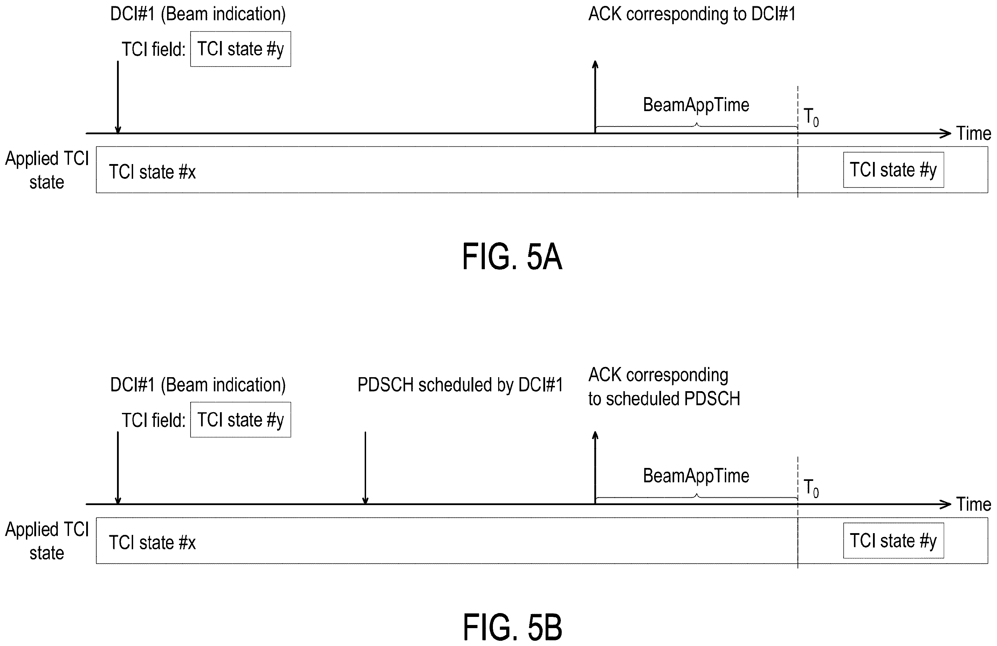

FIG. 5A is a schematic diagram illustrating a unified TCI framework for DCI without DL assignment, and FIG. 5B is a schematic diagram illustrating a unified TCI framework for DCI with DL assignment. Referring to FIG. 5A, in the case of "DCI without DL assignment", a specific DCI format for the beam indication carries the TCI field to be applied. After the UE transmits an ACK corresponding to this DCI, there is a period (e.g., T₀) for the beam application with the indicated TCI state (e.g., TCI state #y). Then, the TCI state #y is applied. Referring to FIG. 5B, the TCI field within the DCI scheduling a PDSCH simultaneously updates the active TCI state for subsequent transmissions.

In one embodiment, regarding the beam indication through DCI, the UE with activated TCI-State configured with TCI-State ID may receive DCI (e.g., format 1_1/1_2) providing indicated TCI-State with TCI-State ID. In one embodiment, the DCI (e.g., format 1_1/1_2) may be with or without, if applicable, DL assignment. In one embodiment, if the DCI (e.g., format 1_1/1_2) is without DL assignment, the UE may assume the following:
RNTI may be used to scramble the CRC for the DCI;
The values of the following DCI fields may be set as follows:
RV = all '1's;
MCS = all '1's;
NDI = 0;
May set to all '0's for FDRA Type 0, or all '1's for FDRA Type 1, or all '0's for dynamicSwitch.

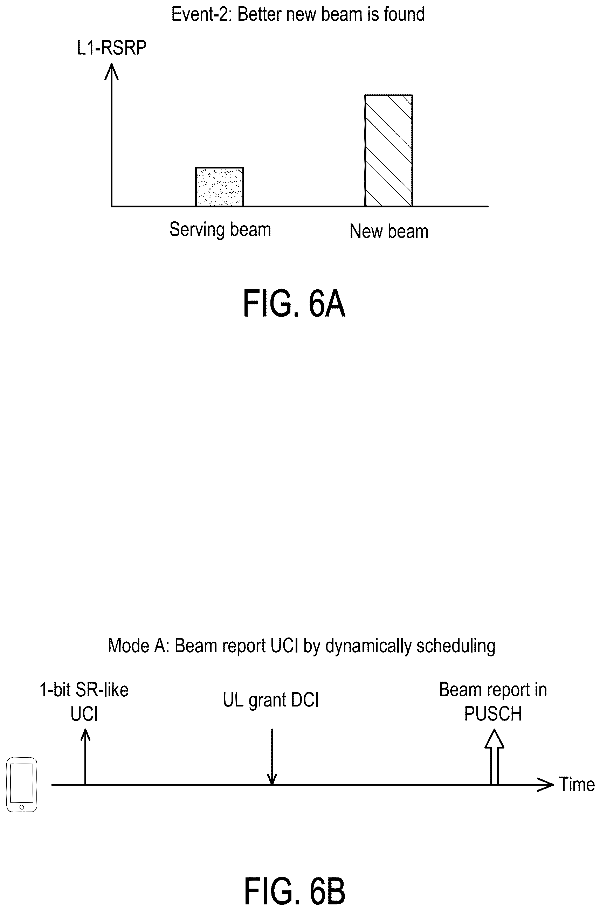

UE-initiated beam reporting may lead to timely beam reports with reduced reporting overhead. FIG. 6A is a schematic diagram illustrating UE-initiated beam reporting with triggering events. Referring to FIG. 6A, a "Triggering Event" is configured to monitor signal quality changes. For instance, the UE compares a Reference Signal Receiving Power (RSRP) of a candidate new beam (First RS) against the serving beam (Second RS). As shown in the figure, if the measurement of the new beam exceeds the serving beam by a pre-configured offset (e.g., 3dB) for a certain duration, the event is considered "triggered", for example. FIG. 6B is a schematic diagram illustrating beam report transmission procedures. Referring to FIG. 6B, a beam report is transmitted on the PUSCH scheduled by the UL grant DCI.

In one embodiment, a UE may be configured with a *CSI-ReportConfig* with the higher layer parameter *eventType-r19,* where the periodic reference signals are with the same periodicity. In one embodiment, (When *eventType-r19* set to 'event2', ) if [during the *eventDetectionTimeWindowLength-r19],* the L1-RSRP value determined for each occurrence of any of the reference signals configured by the *newBeamResourceSetEvent2-r19* (in a same CC of *CSI-ReportConfig,* or provided by the *carrier* in the *CSI-ReportConfig*) may be at least *eventInstanceCount-r19* times an *eventThreshold-r19* greater than the L1-RSRP of
the reference signal indicated by the DCI field *tci-PresentInDCI* in the same CC of *CSI-ReportConfig,* or provided by a RRC parameter in the *CSI-ReportConfig, if* the *NZP-CSI-RS-ResourceSet* is configured with *repetition* set to 'on', else
the SSB, which may be QCLed with the measured reference signal.
In one embodiment, (When *eventType-r19* set to 'event7', ) if [during the *eventDetectionTimeWindowLength-r19],* the L1-RSRP value determined for each occurrence of any of the periodic activated TCI state reference signals configured by *tci-StatesToAddModList* may be at least *eventInstanceCount-r19* times an *eventThreshold-r19* greater than the L1-RSRP of the reference signal with the *valueOfQ-r19* highest L1-RSRP out of the activated TCI state reference signals,
(When *eventType-r19* set to 'event1', ) if during the *eventDetectionTimeWindowLength-r19,* the L1-RSRP value determined for each occurrence of
the reference signal indicated by the DCI field *tci-PresentInDCI if* the *NZP-CSI-RS-ResourceSet* is configured with *repetition* set to 'on', else
the SSB which may be QCLed with the measured reference signal,
may be at least *eventInstanceCount-r19* times less than *eventThreshold-r19.*

In one embodiment, the UE may transmit PUCCH format 0 or format 1 in the PUCCH resource configured by *firstPUCCHResourceConfig-UEIBR-r19* in the *CSI-ReportConfig,* and (When *eventType-r19* set to 'event2', ) the UE may report *nrofReportedRS-UEIBR-r19* CRIs or SSBRIs, and, when *enabledCurrentBeamReport-r19* is configured as 'yes', the reference signal indicated by the DCI field *tci-PresentInDCI,* or the SSB which may be QCLed with this reference signal:
(When *eventType-r19* set to 'event7', ) the UE may report *nrofReportedRS-UEIBR-r19* CRIs:
(When *eventType-r19* set to 'event1', ) the UE may report *nrofReportedRS-UEIBR-r19* CRIs and, when *enabledCurrentBeamReport-r19* is configured as 'yes', the reference signal indicated by the DCI field *tci-PresentInDCI,* or the SSB which may be QCLed with this reference signal:
on PUSCH indicated by the DCI format 0_1/0_2 if *reportTransmissionMode-r19* is configured as 'ModeA' and the CSI trigger state in the CSI request field may be indicated in the DCI format 0_1/0_2, or
on type 1 CG-PUSCH configured by *configuredResourceForSecondChannelOfModeB-r19 and X* symbols after the end of the PUCCH if *reportTransmissionMode-r19* is configured as 'ModeB' and/or as indicated by *configuredResourceForSecondChannelOfModeB-r19* and *X* symbols after sending the PUCCH, and where the periodicity of the PUCCH and CG-PUSCH channels may be the same.

In one embodiment, regarding resetting counter, the value of event instance counter index e, running from 0 to *eventInstanceCount-r19,* may be set to zero:
if the DCI field tci-PresentInDCI is updated compared to the previously indicated one, or
at each CSI report (re)configuration, or
receive a response from NW corresponding to CSI/beam report associated with UE-initiated beam report (or event type).

In one embodiment, regarding cross-CC, the UE does not expect that the reference signal indicated by the DCI field *tci-PresentInDCI* is in a different CC from the reference signals configured by *newBeamResourceSetEvent2-r19.*

In one embodiment, UE may be configured with at least one parameter in the e.g., CSI report configuration.

**Table (1)**

| Parameter | Description |
|---|---|
| reportTransmissionMode-r19 | This parameter may be used to inform one report transmission mode on UCI based beam report procedure for UE-initiated/event-driven beam reporting. |
| | - ModeA: UCI in a dynamically scheduled PUSCH |
| | - ModeB: UCI in a pre-configured UL resource(s) |
| eventThreshold-r19 | This parameter may be used to inform a threshold value for trigger event detection regarding Event-2. |
| eventThresholdEvent1-r19 | This parameter may be used to inform a threshold value for trigger event detection regarding Event-1. |
| eventThresholdEvent7-r19 | This parameter may be used to inform a threshold value for trigger event detection regarding Event-7. |
| eventDetectionTimeWindowLength-r19 | This parameter may be used to inform the time window length for triggering event determination regarding Event-2 |
| eventInstanceCount-r19 | This parameter may be used to inform the number of event 2 instances for at least one same new beam within a configured time window that the UE can initiate UEIBM report |
| enabledCurrentBeamReport-r19 | This parameter may be to enable or disable whether current beam is always reported. |
| | - When enabled by RRC, the current beam + N beams from the measurement RSs for new beam(s) may be reported |
| | - When disabled by RRC, N beams may be reported. |

**Table (2)**

| Parameter | Description |
|---|---|
| nrofReportedRS-UEIBR-r19 | This parameter may be used to inform the number of reported RS(s) in a report format for UE-initated/event-driven beam reporting. |
| newBeamResourceSetr19 | This parameter may be used to configure the RS resource set for new beam(s) for Event 1, Event 2 and Event 7 |
| eventType-r19 | This parameter may be used to inform an event type for UE-initiated/event-driven beam reporting. |
| | - Event-1:Quality of the current beam may be worse than a certain threshold. |
| | - Event-2: Quality of at least one new beam, such as L1-RSRP, becomes a threshold value better than the current beam. |
| | - Event-7: Quality of at least one new beam, such as L1-RSRP, becomes a threshold value better than the RS derived from the activated TCI state with the Q-th best quality. |
| valueOfQ-r19 | This parameter may be used to inform the value of Q for Event-7 |
| | - Event-7: Quality of at least one new beam, such as L1-RSRP, becomes a threshold value better than the RS derived from the activated TCI state with the Q-th best quality. |
| configuredResourceForSecondChan nelOfModeB-r19 | This parameter may be used to inform Type-1 CG PUSCH resource for second channel in mode-B |
| | This parameter may be configured with configuredGrantConfigIndex, UL bwp-Id, or serving cell index |
| firstPUCCHResourceConfig-UEIBR-r19 | This parameter nay be used to configure the periodic PUCCH resource for first PUCCH for both mode-A and mode-B. |
| | This parameter may be configured with periodicity AndOffset, PUCCH-ResourceID |
| valueOfX-r19 | This parameter may be used to configure the number of time-domain offset for determining available transmission occasion of second PUSCH in Mode-B |

In one embodiment, regarding the triggering event determination, if within a time window (which is configurable), the number of Event-2 instance(s) for at least one same new beam may be greater than or equal to a configurable number M, UE initiated beam report occurs. In one embodiment, on the measurement window for initiating the UE-initiated/event-driven beam reporting procedure:
The measurement window may be from T_PUCCH - T_proc - T_window to T_PUCCH - T_proc, where T_PUCCH may be a transmission occasion of a first PUCCH, and T_proc is RRC configured.
The measurement window may be from T_Instance - T_window to T_Instance, where T_Instance may be an evaluation occasion of event instance, and T_proc may be RRC configured.
The UEI beam report in the second PUSCH may be based on the most recent measurement for new/current beam RS(s).
The length, slot offset and periodicity of a measurement window may be configured per CSI report configuration by NW.
If an Event-2 instance for a new beam is obtained at the time t, UE may (re)start the timer for the new beam, where the expiry time of the timer may be equal to the NW-configured length of the time window (T_window).

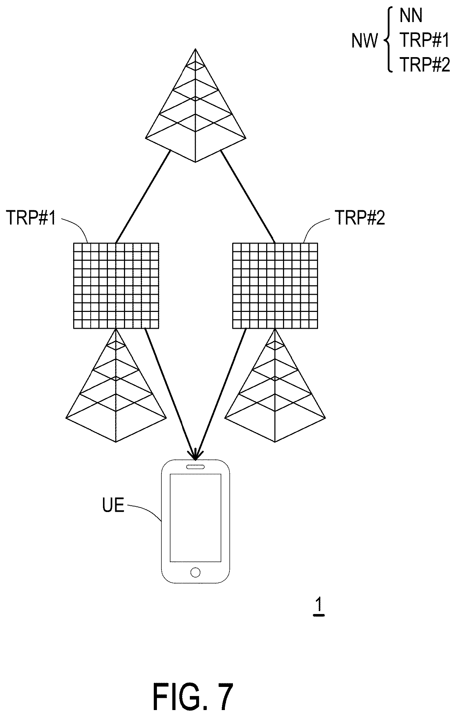

FIG. 7 is a schematic diagram illustrating a radio communication network architecture 1 according to an exemplary embodiment of the present disclosure. Referring to FIG. 7, a radio communication network architecture 1 (e.g., a Long Term Evolution (LTE) system, an LTE-Advanced (LTE-A) system, an LTE-Advanced Pro system, or a 5G NR Radio Access Network (RAN)) typically includes at least one base station (BS) NW, at least one UE, and one or more optional network elements that provide connection towards a network. The UE communicates with the network (e.g., a Core Network (CN), an Evolved Packet Core (EPC) network, an Evolved Universal Terrestrial Radio Access Network (E-UTRAN), a 5G Core (5GC), or the internet), through a RAN established by one or more base stations.

It should be noted that, in the present disclosure, UE may include, but is not limited to, a mobile station, a mobile terminal or device, or a user communication radio terminal. For example, UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access network.

A base station NW may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A base station NW may include but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The BS NW may connect to serve one or more UEs through a radio interface to the network.

The base station (BS) NW (or called network device) may be operable to provide radio coverage to a specific geographical area using a plurality of cells included in the RAN. The BS NW may support the operations of the cells. Each cell may be operable to provide services to at least one UE within its radio coverage. Specifically, each cell (often referred to as a serving cell) may provide services to serve one or more UEs within its radio coverage (e.g., each cell schedules the Downlink (DL) and optionally Uplink (UL) resources to at least one UE within its radio coverage for DL and optionally UL packet transmission). The BS NW may communicate with one or more UEs in the radio communication system through the plurality of cells. It should be noted that for UL, a UE is a transmitter performing UL transmission, and a network (node) is a receiver performing UL reception. For DL, a UE is a receiver performing DL reception, and a network (node) is a transmitter performing DL transmission.

The base station NW may include a network node NN and one or more TRPs, such as TRP#1 and TRP#2.

A network node NN may be, but is not limited to, a node B (NB) as in the LTE, an evolved node B (eNB) as in the LTE-A, a radio network controller (RNC) as in the UMTS, a base station controller (BSC) as in the GSM/GERAN, a new radio evolved node B (NR eNB) as in the NR, a next generation node B (gNB) as in the NR, and any other apparatus capable of controlling radio communication and managing radio resources within one or more cells.

A TRP (e.g., TRP#1 or TRP#2), which may also be regarded as a remote radio head (RRH), maybe a transceiver under the protocols of 5G NR wireless communication system and/or the protocols of a 4G wireless communication system. A TRP may be communicatively connected to a network node NN. The network node NN may connect to serve one or more UEs through one or more TRPs in the radio communication system. For example, TRP#1 and TRP#2 serve one UE, and TRP#2 serves another UE, but is not limited thereto.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

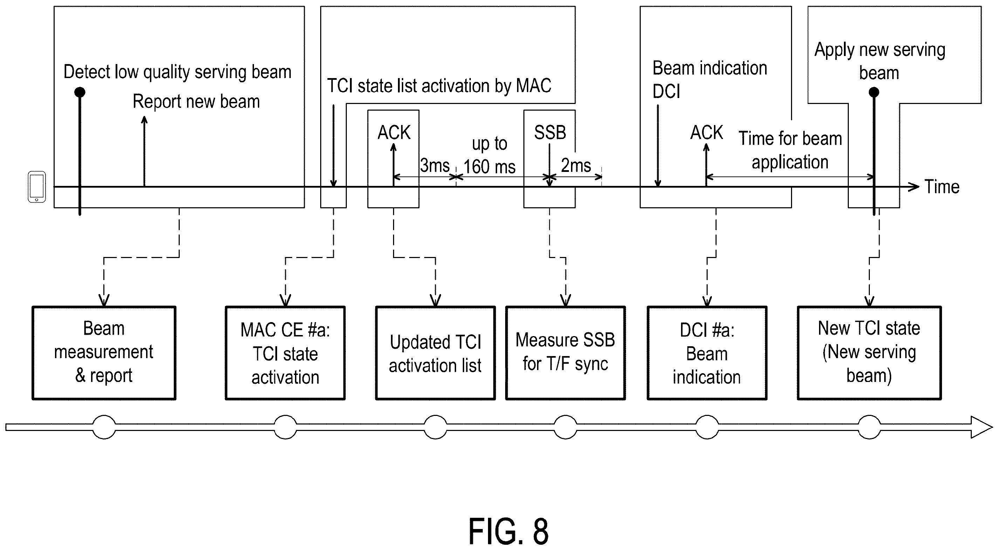

FIG. 8 is a schematic diagram illustrating function modularization according to an exemplary embodiment of the present disclosure. Referring to FIG. 8, the beam measurement and report function may include detection of low-quality serving beam and new beam report. The TCI state activation function may include TCI state list activation by MAC CE. The updated TCO activation list function may include ACK for the TCI state list activation. The measurement of SSB for T/F synchronization function may include measuring the SSB. The beam indication function may include beam indication and ACK for the indication. The new TCI state function may include applying the new serving beam.

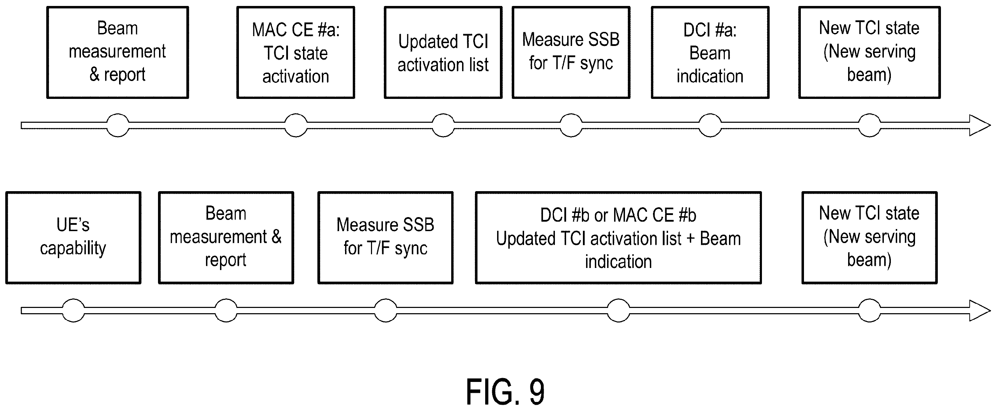

FIG. 9 is a schematic diagram illustrating multiple procedures according to an exemplary embodiment of the present disclosure. Referring to FIG. 9, there are multiple procedures corresponding multiple embodiments would be introduced later.
Regrading updated TCI activation and beam indication:
In one embodiment, DCI based Latency Reduction & TCI State Activation List Determined by a Rule is introduced.
In one embodiment, MAC CE based Latency Reduction & TCI State Activation List Determined by a Rule is introduced.
In one embodiment, MAC CE based Latency Reduction & TCI State Activation List Determined by NW is introduced.
Regarding UE's capability related measurement:
   In one embodiment, Latency Reduction based on UE's Capability is introduced.

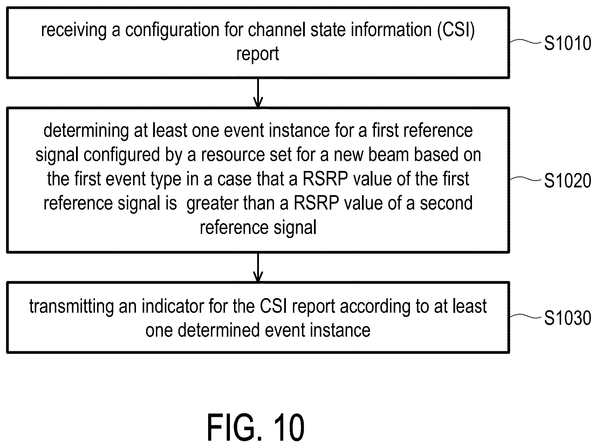

FIG. 10 is a flowchart illustrating a method performed by a user equipment (UE) according to an exemplary embodiment of the present disclosure. Referring to FIG. 10, the method may be performed by a UE. The UE receives a configuration for channel state information (CSI) report (step S1010). Specifically, the configuration for the CSI report serves as a control instruction set that defines the autonomous monitoring and reporting behavior of the UE (Elaborate). Specifically, the configuration allows the network to offload the beam monitoring responsibility to the UE by setting specific criteria. This configuration may be provided via RRC signaling (e.g., *CSI-ReportConfig*) and includes parameters such as an event type identifier *(eventType-r19),* a time window length, and threshold values. The configuration is associated with a first event type. For example, as mentioned in Table (2), *eventType-r19* is a parameter that may be used to inform an event type for UE-initiated/event-driven beam reporting. In one embodiment, the first event type is the event-2 (i.e., the quality of at least one new beam, such as L1-RSRP, becomes a threshold value better than the current beam).

In one embodiment, the second reference signal is a third reference signal associated with an indicated transmission configuration indicator (TCI) state in a case that the resource set for the new beam is a channel state information-reference signal (CSI-RS) resource set configured with repetition. For example, the reference signal indicated by the DCI field *tci-PresentInDCI* in a same CC of *CSI-ReportConfig,* or provided by a RRC parameter in the *CSI-ReportConfig, if* the *NZP-CSI-RS-ResourceSet* is configured with *repetition* set to 'on'.

In one embodiment, the second reference signal is a synchronization signal block (SSB) which is quasi-co-location (QCL) with a third reference signal associated with an indicated transmission configuration indicator (TCI) state in a case that the resource set for the new beam is a SSB resource set. For example, the SSB, which may be QCLed with the measured reference signal.

The UE determines at least one event instance for a first reference signal configured by a resource set for a new beam based on the first event type in a case that a RSRP value of the first reference signal is greater than a RSRP value of a second reference signal (step S1020). Specifically, the event instance is a specific occurrence where the channel quality satisfies a predefined inequality condition (e.g., the quality of at least one new beam, such as L1-RSRP, becomes a threshold value better than the current beam). The determination is performed in a case where an RSRP value of the first reference signal is greater than an RSRP value of a second reference signal.

In one embodiment, the UE may determine the event instance for the first reference signal in a case that the RSRP value of the first reference signal is an event threshold greater than the RSRP value of the second reference signal. The L1-RSRP value determined for each occurrence of any of the reference signals configured by the *newBeamResourceSetEvent2-r19* (in the same CC of *CSI-ReportConfig,* or provided by the carrier in the *CSI-ReportConfig*) may be at least eventInstanceCount-r19 times an *eventThreshold-r19* greater than the L1-RSRP of the reference signal. For instance, if the parameter *eventThreshold-r19* is set to 3dB, the UE determines an event instance only when RSRP_{new} > RSRP_{current} + 3dB. In one embodiment, the event threshold is associated with an event instance count.

The UE transmits an indicator for the CSI report according to at least one determined event instance (step S1030). The "Indicator" is a signal that informs the network that the beam switching criteria have been met. The transmission is not immediate but is gated by a mechanism related to the determined event instance.

In one embodiment, the indicator for the CSI report comprises the UE initiated report indicator (UEIRI). The UE may transmit a UEIRI on a first physical uplink control channel (PUCCH) in a PUCCH resource configured by the configuration for CSI report in a case that the number of the at least one determined event instance determined by a counter is greater than or equal to an event instance count. For example, *eventInstanceCount-r19* is the parameter may be used to inform the number of event 2 instances for at least one same new beam within a configured time window that the UE can initiate UEIBM report.

In one embodiment, the event instance count is used to inform the number of the at least one event instance of the first event type for at least one same new beam within a configured time window that the UE is able to initiate a UE-initiated beam management (UEIBM) report. For example, *eventInstanceCount-r19* is a parameter that may be used to inform the number of event 2 instances for at least one same new beam within a configured time window that the UE can initiate UEIBM report.

In one embodiment, UE may reset the counter for determining the at least one determined event instance in a case that a third reference signal associated with an indicated transmission configuration indicator (TCI) state or a synchronization signal block (SSB), which is quasi-co-location (QCL) with the third reference signal associated with the indicated TCI state is updated. For example, if the DCI field tci-PresentInDCI is updated compared to the previously indicated one, or at each CSI report (re)configuration, or receive a response from NW corresponding to CSI/beam report associated with a UE-initiated beam report (or event type), the counter is reset.

In one embodiment, the configuration for CSI report comprises an event detection time window length, which is used to inform a time window length for triggering event determination regarding the first event type. For example, *eventDetectionTimeWindowLength-r19* is a parameter may be used to inform the time window length for triggering event determination regarding Event-2.

In one embodiment, UE may transmit a CSI report on a physical uplink shared channel (PUSCH) indicated by a DCI format in a case that a report transmission mode for the CSI report is configured as a first mode and a CSI trigger state in a CSI request field is indicated in the DCI format. For example, the UE sends the CSI report on PUSCH indicated by the DCI format 0_1/0_2 if reportTransmissionMode-r19 is configured as 'ModeA' and the CSI trigger state in the CSI request field may be indicated in the DCI format 0_1/0_2.

In one embodiment, the first mode (e.g., 'ModeA') is associated with an uplink control information (UCI) in a dynamically scheduled PUSCH.

In one embodiment, UE may transmit the CSI report on configured-grant physical uplink shared channel (CG-PUSCH) and at least one symbol after the end of a physical uplink control channel (PUCCH) in a case that a report transmission mode for the CSI report is configured as a second mode. For example, the UE sends the CSI report on type 1 CG-PUSCH configured by configuredResourceForSecondChannelOfModeB-r19 and X symbols after the end of the PUCCH if reportTransmissionMode-r19 is configured as 'ModeB' and/or as indicated by configuredResourceForSecondChannelOfModeB-r19 and X symbols after sending the PUCCH, and where the periodicity of the PUCCH and CG-PUSCH channels may be the same.

In one embodiment, the periodicity of the PUCCH and the periodicity of the CG-PUSCH are the same.

In one embodiment, the second mode (e.g., 'ModeB') is associated with an uplink control information (UCI) in a pre-configured uplink (UL) resource.

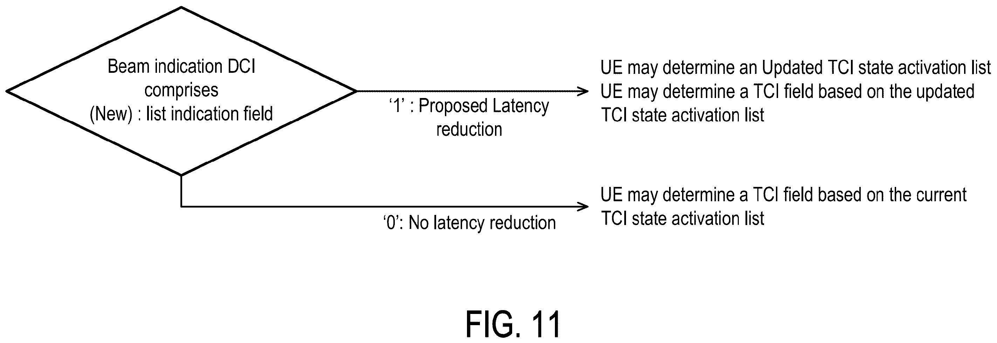

FIG. 11 is a schematic diagram illustrating DCI field according to an exemplary embodiment of the present disclosure. Referring to FIG. 11, a new DCI field in proposed. The beam indication DCI (or DL assignment DCI, e.g., DCI format 1_1, 1_2, or 1_3) may include a (New) list indication field. In one embodiment, in the case that the codepoint is set to "1", the proposed latency reduction is indicated to be performed. UE may determine an Updated TCI state activation list. UE may determine a TCI field based on the updated TCI state activation list. In one embodiment, in the case that the codepoint is set to "0", no proposed latency reduction would be performed. UE may determine a TCI field based on the current TCI state activation list.

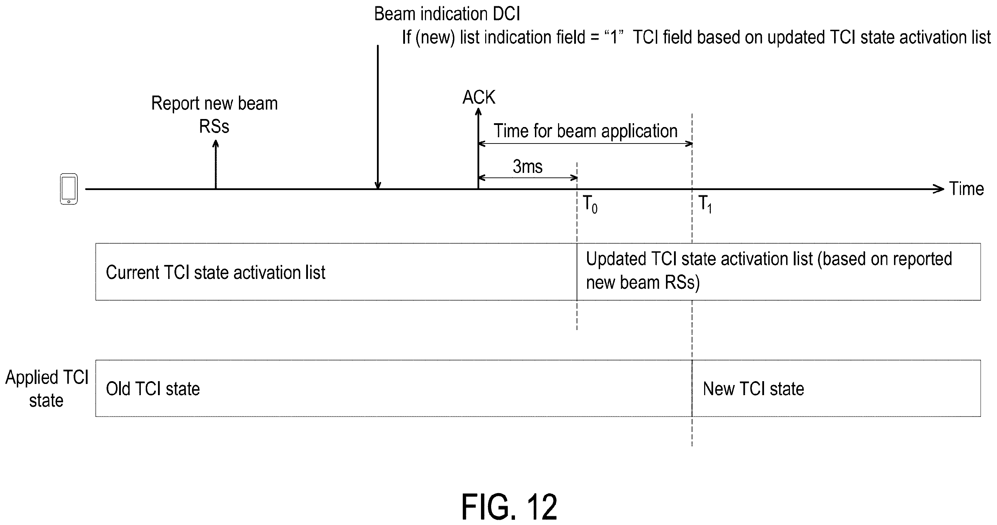

FIG. 12 is a schematic diagram illustrating beam indication DCI according to an exemplary embodiment of the present disclosure. Referring to FIG. 12, beam indication DCI may include a (New) list indication field:
If the list indication field indicates a first value (e.g., 1),
UE may stop beam report (or stop the procedure of UE initial beam report or reset the counter of new beams); and/ or
UE may establish an updated TCI state activation list,
where at least one TCI state in the updated TCI state activation list may be determined by a (pre-determined) rule, and/ or
where the at least one TCI state may be determined according to CSI report of the new beam RS TCI state(s) indicated by codepoints of TCI field may be associated with the updated TCI state activation list.

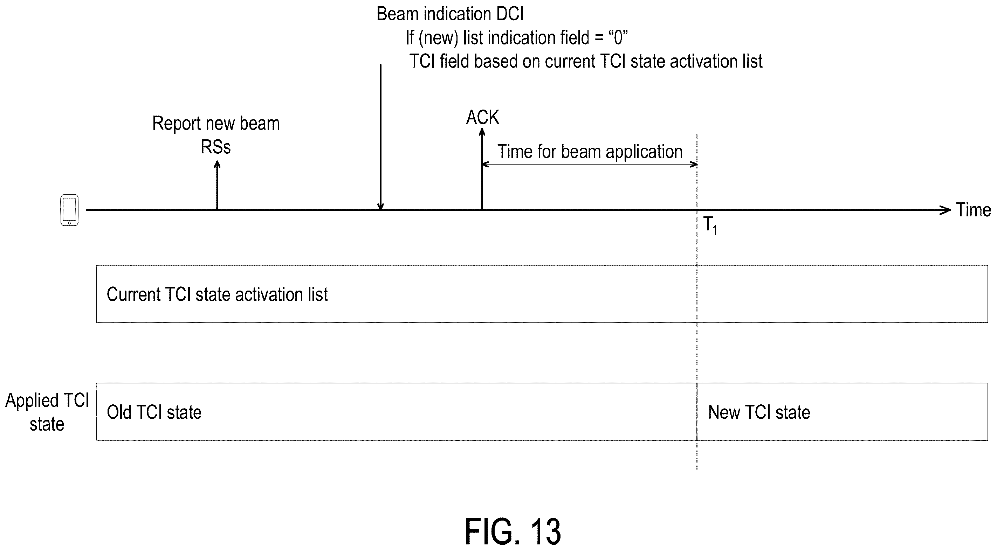

FIG. 13 is a schematic diagram illustrating beam indication DCI according to an exemplary embodiment of the present disclosure. Referring to FIG. 13, beam indication DCI may include a (New) list indication field:
If the list indication field indicates a second value (e.g., 0),
UE may stop beam report (or stop the procedure of UE initial beam report or reset the counter of new beams); and/ or
TCI state(s) indicated by codepoints of TCI field may be associated with the current TCI state activation list.

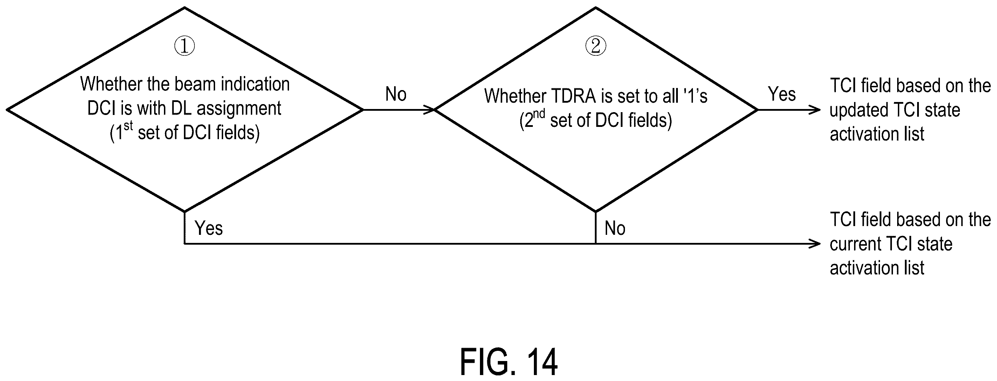

FIG. 14 is a schematic diagram illustrating TCI state activation list determination according to an exemplary embodiment of the present disclosure. Regarding to FIG. 14, regarding reusing the current field, if the beam indication DCI is configured without DL assignment, the values of the following DCI fields may be set as follows:
1st set of DCI fields:
   RV = all '1's;
   MCS = all '1's;
   NDI = 0;
   Set to all '0's for FDRA Type 0, or all '1's for FDRA Type 1, or all '0's for dynamicSwitch.
   2nd set of DCI fields:
      May set to all '1's for TDRA · TCI field based on the updated TCI state activation list.
Therefore, the1st set of DCI fields could be used for determining whether the beam indication DCI is with DL assignment. The 2nd set of DCI fields could be used for determining whether TDRA is set to all '1's.

In one embodiment, UE may transmit a TCI state activation list by, e.g., a MAC CE (or a UCI), where the TCI state activation list may be determined by a pre-determined rule.

In one embodiment, UE may transmit a CSI report, where the CSI report comprises at least one of the following pieces of information in a single reporting instance:
a channel state information-reference signal resource indicator (CRI) or a synchronization signal block resource indicator (SSBRI);
reference signal receiving power (RSRP);
a condition met indicator; or
a differential L1-RSRP of current beam.

In one embodiment, the CRI or the SSBRI is corresponding to a fourth reference signal provided by the resource set for the new beam.

In one embodiment, for each of the CRI or the SSBRI, the CSI report comprises an absolute L1-RSRP or a second differential L1-RSRP.

In one embodiment, the condition met indicator indicates whether a fifth reference signal indicated by a reported CRI or SSBRI triggers a UE-initiated report indicator (UEIRI) transmission.

In one embodiment, the differential L1-RSRP of the current beam is a differential L1-RSRP corresponding to a third reference signal associated with an indicated transmission configuration indicator (TCI) state, or to a synchronization signal block (SSB) which is quasi-co-location (QCL) with the third reference signal in the indicated TCI state.

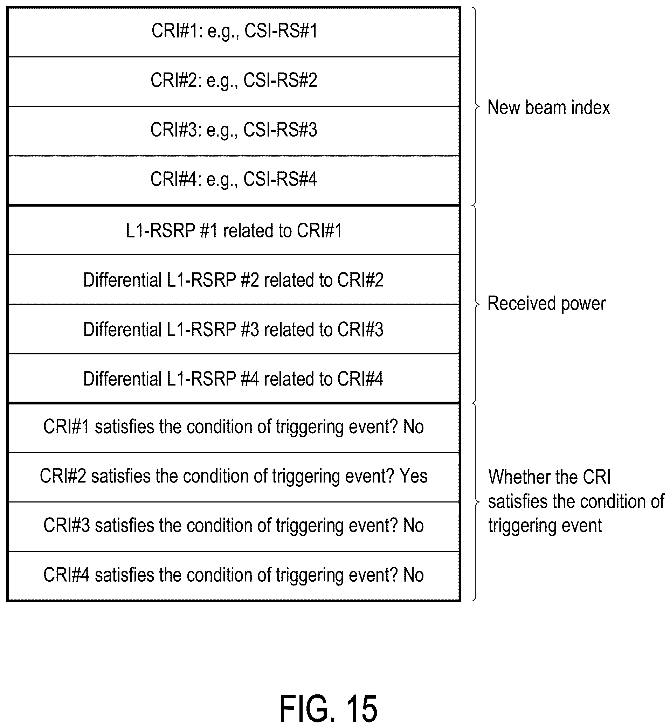

FIG. 15 is a schematic diagram illustrating a CSI report according to an exemplary embodiment of the present disclosure. Referring to FIG. 15, UE may report CSI including at least one of the following:
CRI and/or SSBRI associated with the new beam resource set/ current beam RS;
L1-RSRP (or L1-SINR) corresponding to the CSI-RS indicated by CRI or SSB indicated by SSBRI or current beam RS;
Indication of whether the CRI/SSBRI satisfies the condition of the triggering event;
Event ID;
CSI report configuration ID.
In one embodiment, UE may be configured with the number of report beam RS, i.e., *nrofReportedRS-UEIBR,* M = e.g., 4.

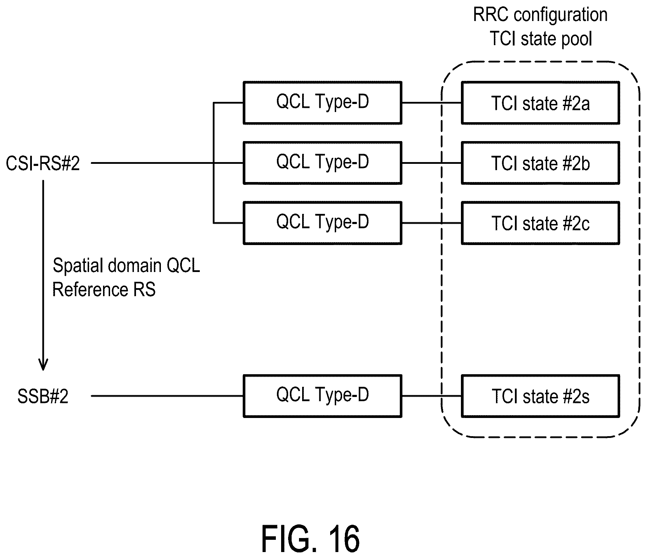

FIG. 16 is a schematic diagram illustrating an association of RS, QCL type, and TCI state according to an exemplary embodiment of the present disclosure. Referring to FIG. 16, a first RS (e.g., CSI-RS#2) indicated by a QCL type (e.g., QCL type-D) may be associated with at least one TCI state (e.g., TCI state #2a, #2b, #2c) in the RRC configured TCI state pool. In one embodiment, a first RS may be configured with a TCI state, where the QCL type D of the TCI state may be a second RS (e.g., SSB#2).

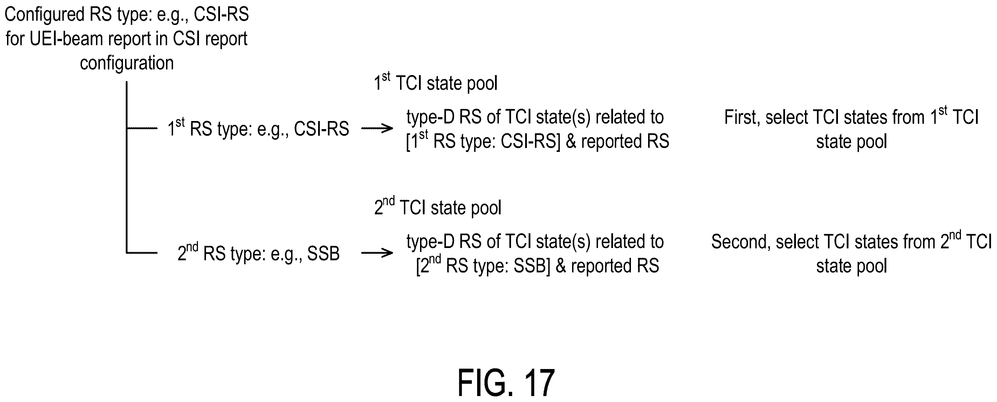

FIG. 17 is a schematic diagram illustrating configured RS type according to an exemplary embodiment of the present disclosure. Referring to FIG. 17, UE may determine a first RS type and/or a second RS type, where
the first RS type may be associated with a RS type of reported RS(s), and the RS type of reported RS(s) may be configured in CSI report configuration; and/ or
the second RS type may be different from the first RS type.
In one embodiment, UE may determine a first TCI state pool and/or a second TCI state pool, where type-D RS(s) of the TCI states in the first TCI state pool may be related to the 1st RS type (e.g., CSI-RS) and/or reported RS; and/ or
type-D RS(s) of the TCI states in the second TCI state pool may be related to the 2nd RS type (e.g., SSB) and/or reported RS.
In one embodiment, UE may determine/select at least one TCI state from the first TCI state pool to an updated TCI state activation list,
If all the TCI states in the first TCI state pool are selected and/or if there is no TCI state in the first TCI state pool and/or if the number of selected TCI states is less than the number of codepoint is the TCI field, UE may determine/select at least one TCI state from the second TCI state pool to an updated TCI state activation list.

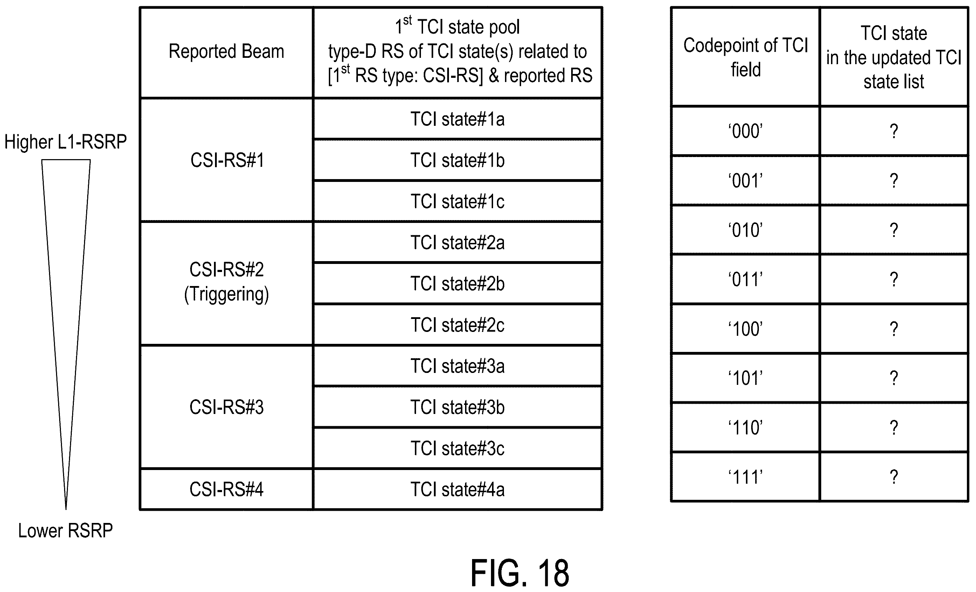

FIG. 18 is a schematic diagram illustrating an association of reported beam and TCI state pool according to an exemplary embodiment of the present disclosure. Referring to FIG. 18, UE may determine a first TCI state pool, where type-D RS(s) of the TCI states in the first TCI state pool may be related to the 1st RS type and/or reported RS. In one embodiment, UE may determine/select at least one TCI state from the first TCI state pool to an updated TCI state activation list, where the maximum number of selected TCI states may be less than or equal to the number of codepoints of TCI field.

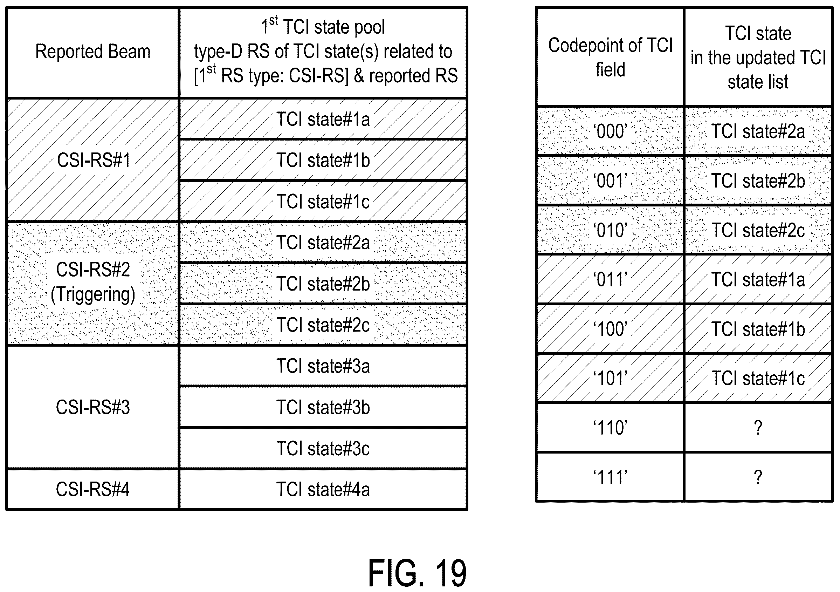

FIG. 19 is a schematic diagram illustrating a selection based on the association of reported beam and TCI state pool according to an exemplary embodiment of the present disclosure. Referring to FIG. 19, in the 1st TCI state pool, in step 1, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.
In step 2, UE may select at least one TCI state which is associated with reported RS, where
the type-D RS of the selected at least one TCI state may be associated with at least one reported RS (e.g., with T/F synchronization); and/ or
the at least one reported RS may have higher RSRP value than the RSRP values of the RS satisfying the condition of triggering event.

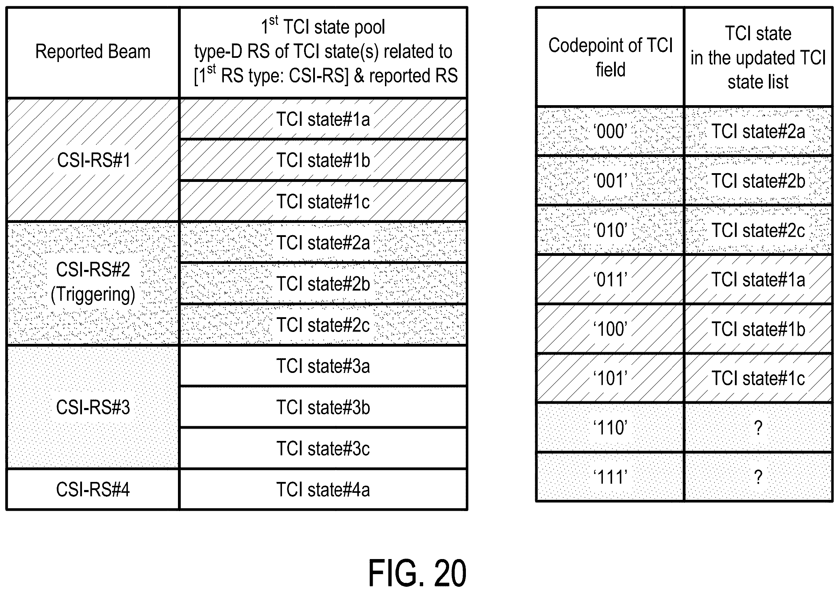

FIG. 20 is a schematic diagram illustrating a selection based on the association of reported beam and TCI state pool according to an exemplary embodiment of the present disclosure. Referring to FIG. 20, in step 3, UE may select at least one TCI state which is associated with reported RS, where
the type-D RS of the selected at least one TCI state may be associated with at least one reported RS (e.g., with T/F synchronization); and/ or
the at least one reported RS may have higher RSRP value within the remaining un-selected reported RS(s).

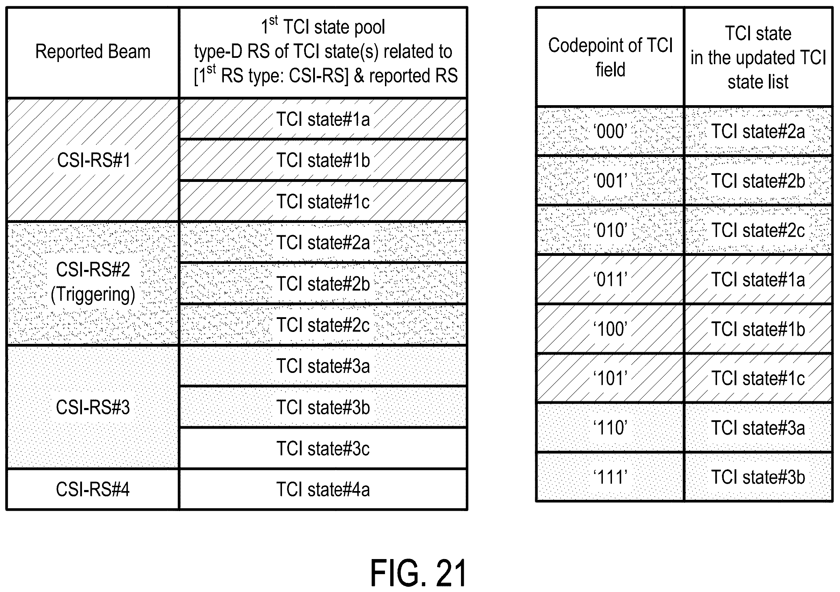

FIG. 21 is a schematic diagram illustrating a selection based on the association of reported beam and TCI state pool according to an exemplary embodiment of the present disclosure. Referring to FIG. 21, in step 3, UE may select at least one TCI state which is associated with reported RS, where
the type-D RS of the selected at least one TCI state may be associated with at least one reported RS (e.g., with T/F synchronization); and/ or
the at least one reported RS may have the highest RSRP value within the remaining un-selected reported RS(s), if the number of above associated TCI states is larger than the number of un-determined codepoint(s) of the TCI field, UE may select TCI state(s) from e.g., the lowest (or the highest/fixed/predetermined) TCI state ID.

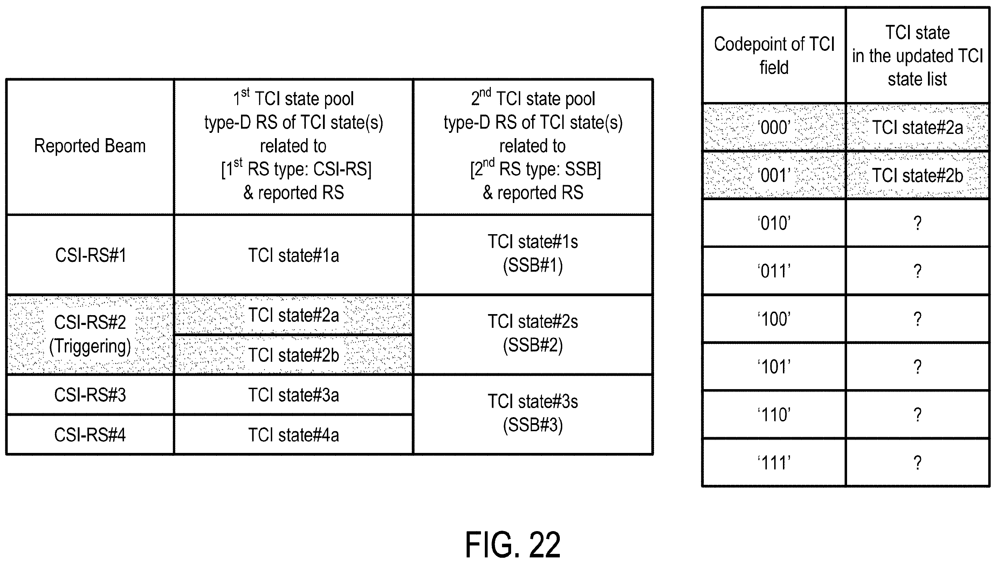

FIG. 22 is a schematic diagram illustrating an association of reported beam and TCI state pools according to an exemplary embodiment of the present disclosure. Referring to FIG. 22, in the 1st TCI state pool, in step 1, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.

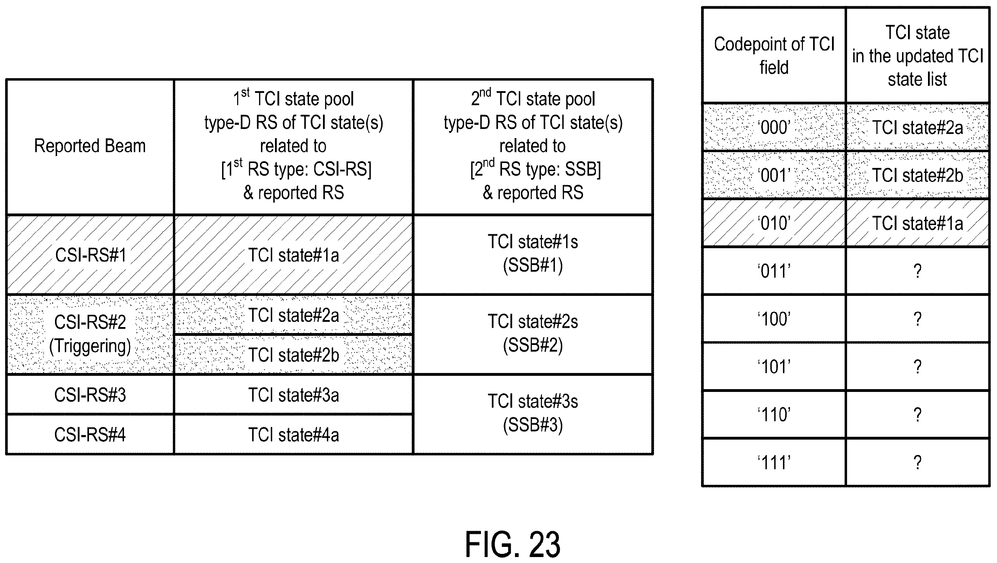

FIG. 23 is a schematic diagram illustrating a selection based on the association of reported beam and TCI state pools according to an exemplary embodiment of the present disclosure. Referring to FIG. 23, in step 2, UE may select at least one TCI state which is associated with reported RS, where
the type-D RS of the selected at least one TCI state may be associated with at least one reported RS (e.g., with T/F synchronization); and/ or
the at least one reported RS may have higher RSRP value than the RSRP values of the RS satisfying the condition of triggering event.

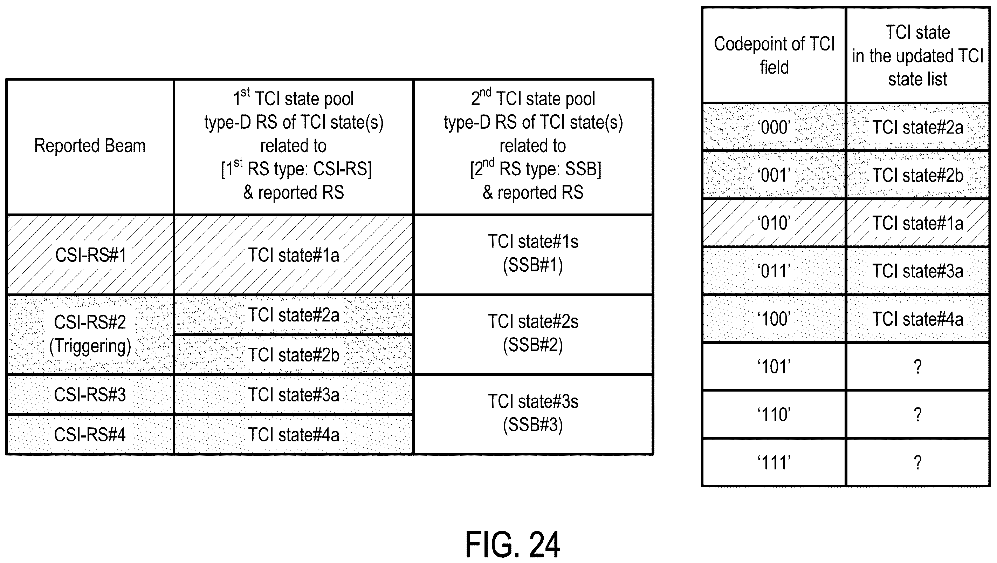

FIG. 24 is a schematic diagram illustrating a selection based on the association of reported beam and TCI state pools according to an exemplary embodiment of the present disclosure. Referring to FIG. 24, in step 3, UE may select at least one TCI state which is associated with reported RS, where
the type-D RS of the selected at least one TCI state may be associated with at least one reported RS (e.g., with T/F synchronization); and/ or
the at least one reported RS may have higher RSRP value within the remaining un-selected reported RS(s).

In one embodiment, if UE may select at least one TCI state which is associated with reported RS, UE may select at least one TCI state which is associated with reported RS.

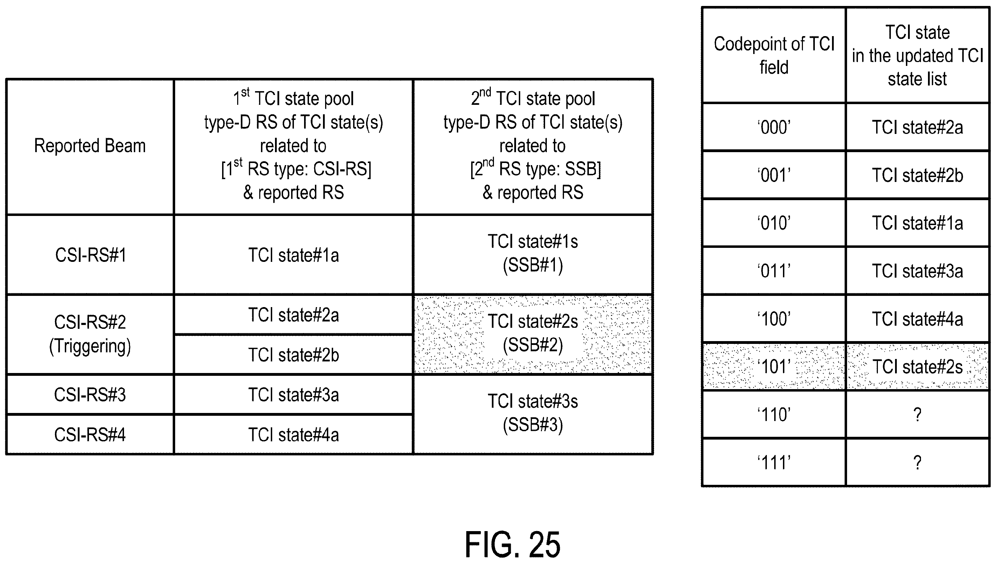

FIG. 25 is a schematic diagram illustrating an association of reported beam and TCI state pools according to an exemplary embodiment of the present disclosure. Referring to FIG. 25, in the 2nd TCI state pool, in step 1, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.

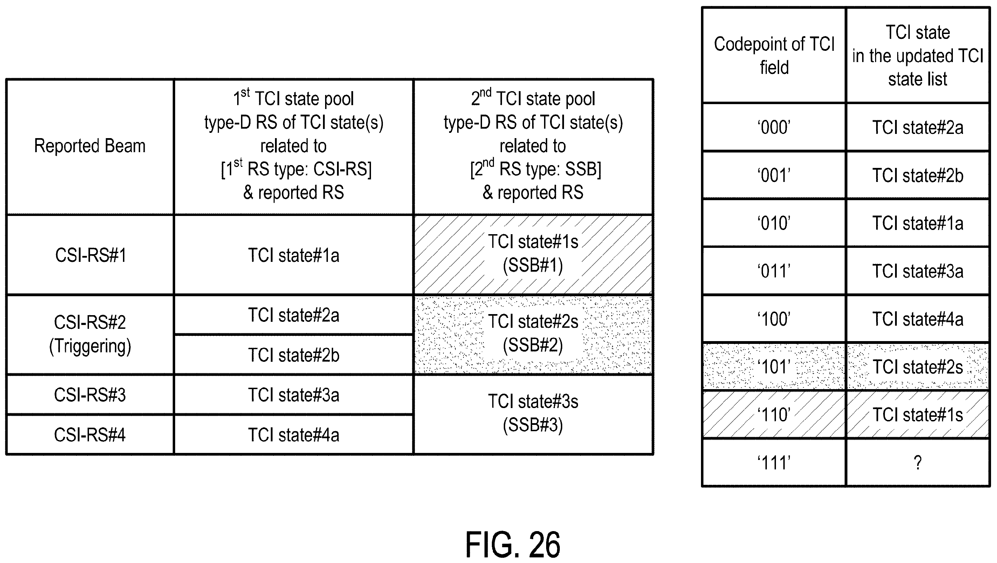

FIG. 26 is a schematic diagram illustrating a selection based on the association of reported beam and TCI state pools according to an exemplary embodiment of the present disclosure. Referring to FIG. 26, in step 3, UE may select at least one TCI state which is associated with reported RS, where
the type-D RS of the selected at least one TCI state may be associated with at least one reported RS (e.g., with T/F synchronization); and/ or
the at least one reported RS may have higher RSRP value than the RSRP values of the RS satisfying the condition of triggering event.

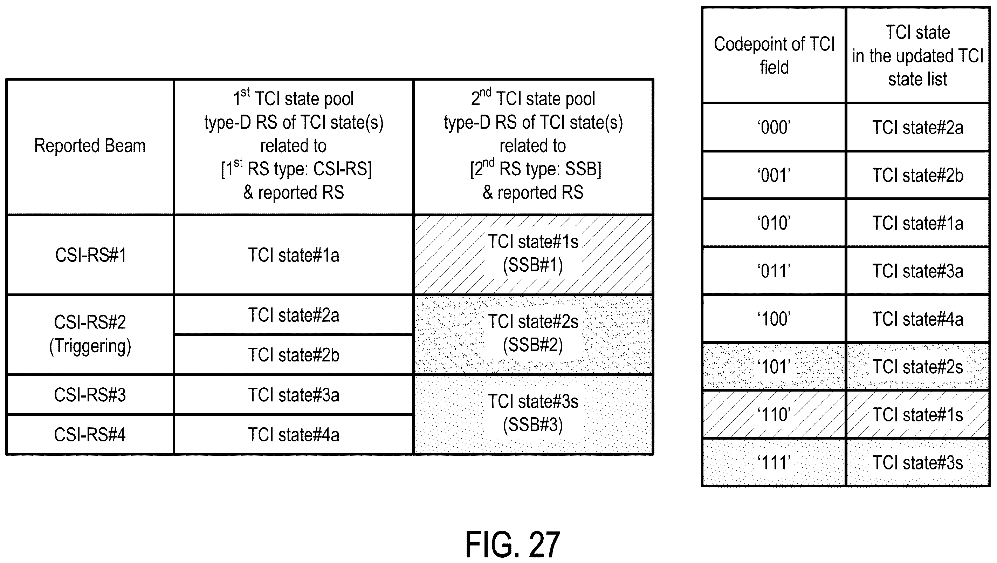

FIG. 27 is a schematic diagram illustrating a selection based on the association of reported beam and TCI state pools according to an exemplary embodiment of the present disclosure. Referring to FIG. 27, in step 3, UE may select at least one TCI state which is associated with reported RS, where
the type-D RS of the selected at least one TCI state may be associated with at least one reported RS (e.g., with T/F synchronization); and/ or
the at least one reported RS may have higher RSRP value within the remaining un-selected reported RS(s).

In one embodiment, for determining the selection of TCI state for activation, step 1,2,3 (e.g., as described above pages) may not be in order, and TCI state selection for activation may be based on at least one of step1, 2, or 3.

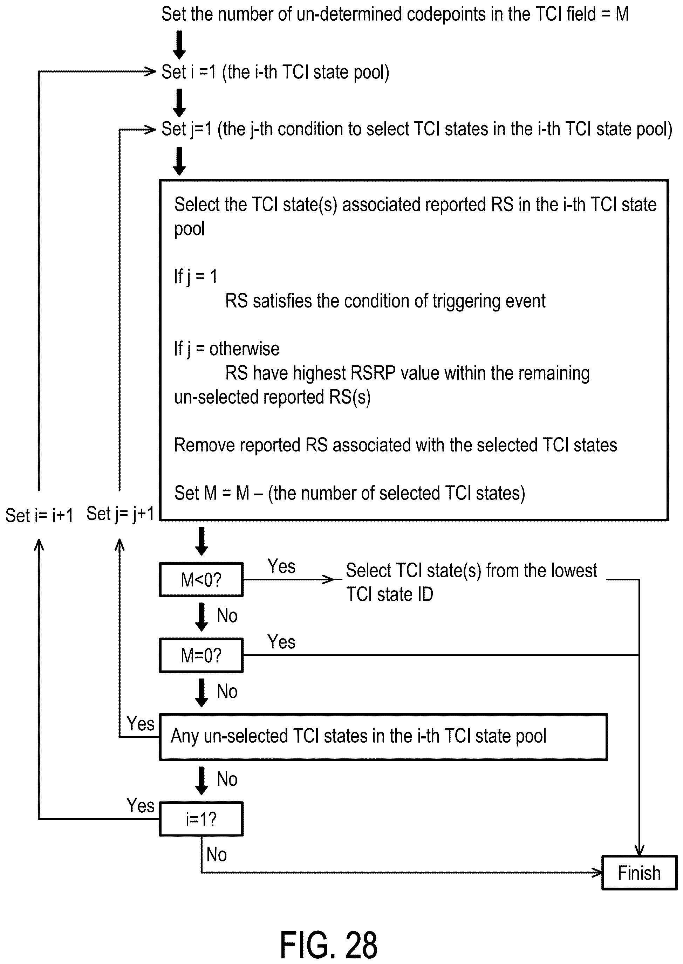

FIG. 28 is a schematic diagram illustrating a selection of TCI state for activation according to an exemplary embodiment of the present disclosure. Referring to FIG. 28, the number of un-determined codepoints in the TCI field is set to M, i (for the i-th TCI state pool) is set to 1, and j (for the j-th condition to select TCI states in the i-th TCI state pool) is set to 1. The TCI state(s) associated reported RS in the i-th TCI state pool is selected,
if j = 1, RS satisfies the condition of triggering event
if j = otherwise, RS have highest RSRP value within the remaining un-selected reported RS(s) Remove reported RS associated with the selected TCI states.
Set M = M - (the number of selected TCI states).
If M is less than 0, the TCI state(s) is selected from the lowest TCI state ID.

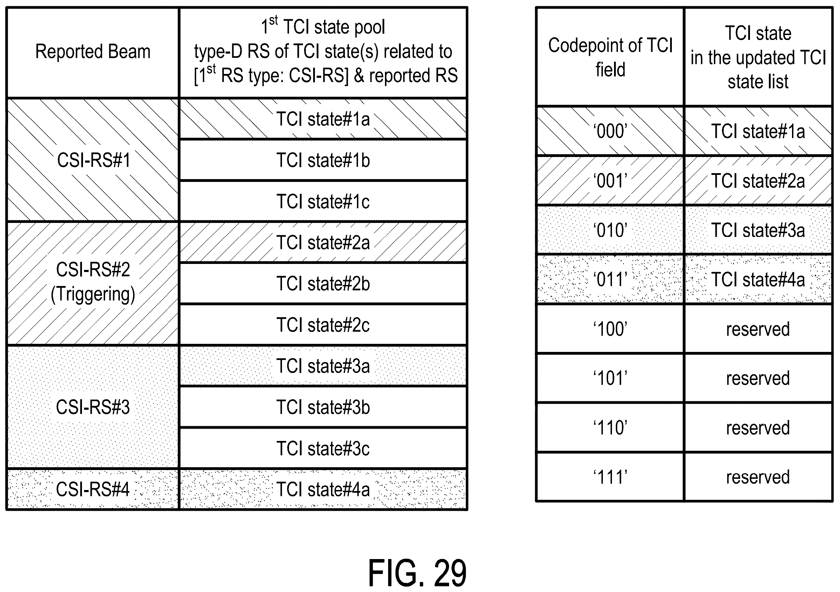

FIG. 29 is a schematic diagram illustrating an association of reported beam and TCI state pool according to an exemplary embodiment of the present disclosure. Referring to FIG. 29, in the 1st TCI state pool, in step 1, UE may select at least one TCI state which is associated with reported RS, where
the type-D RS of the selected at least one TCI state may be associated with at least one reported RS (e.g., with T/F synchronization); and/ or
if more than one TCI states associated a reported RS, UE may select lowest (or highest) TCI state ID among the more than one TCI states.

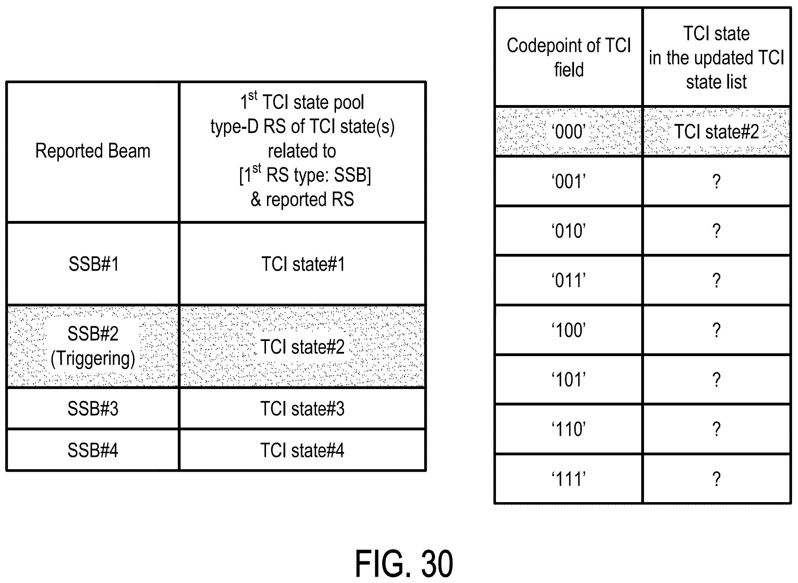

FIG. 30 is a schematic diagram illustrating a selection based on the association of reported beam and TCI state pool according to an exemplary embodiment of the present disclosure. Referring to FIG. 30, in the 1st TCI state pool, in step 1, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.

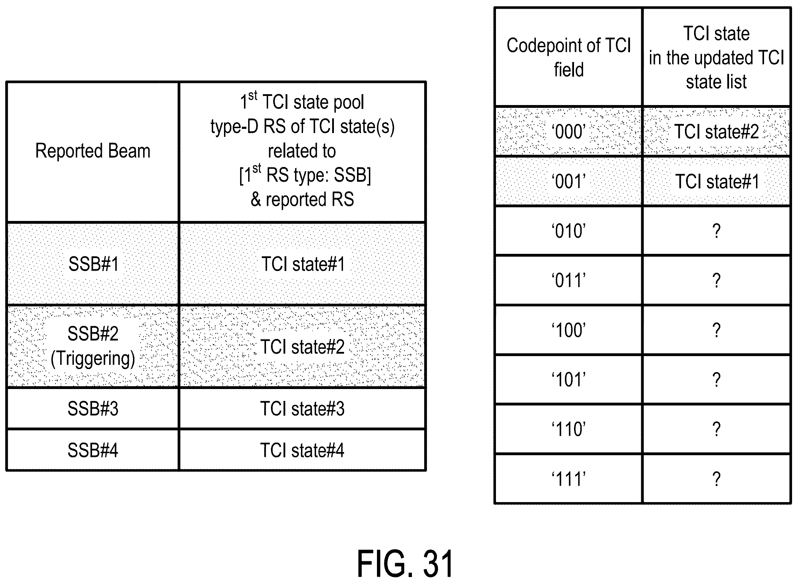

FIG. 31 is a schematic diagram illustrating a selection based on the association of reported beam and TCI state pool according to an exemplary embodiment of the present disclosure. Referring to FIG. 31, in step 2, UE may select at least one TCI state which is associated with reported RS, where
the type-D RS of the selected at least one TCI state may be associated with at least one reported RS (e.g., with T/F synchronization); and/ or
the at least one reported RS may have higher RSRP value than the RSRP values of the RS satisfying the condition of triggering event.

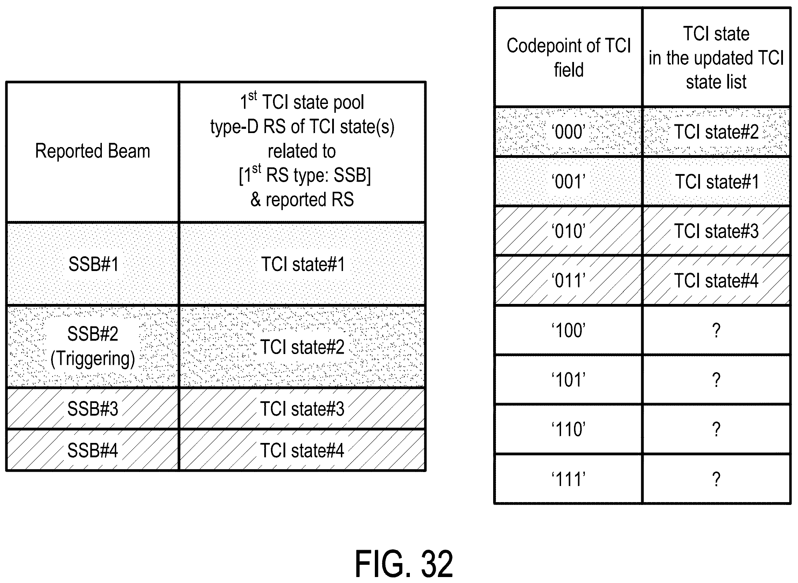

FIG. 32 is a schematic diagram illustrating a selection based on the association of reported beam and TCI state pool according to an exemplary embodiment of the present disclosure. Referring to FIG. 32, in step 3, UE may select at least one TCI state which is associated with reported RS, where
the type-D RS of the selected at least one TCI state may be associated with at least one reported RS (e.g., with T/F synchronization); and/ or
the at least one reported RS may have higher RSRP value within the remaining un-selected reported RS(s).

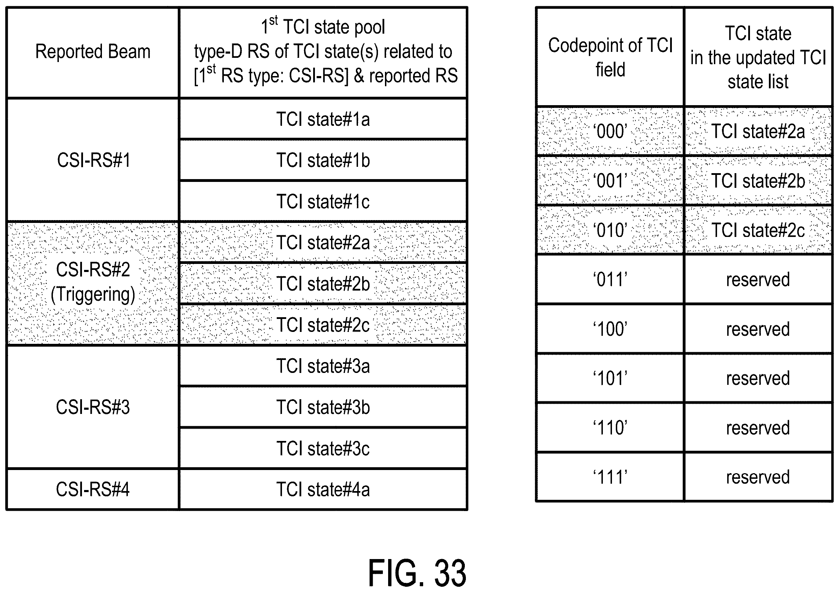

FIG. 33 is a schematic diagram illustrating an association of reported beam and TCI state pool according to an exemplary embodiment of the present disclosure. Referring to FIG. 33, the at least one reported RS may have higher RSRP value within the remaining un-selected reported RS(s), where
the type-D RS of the selected at least one TCI state may be associated with at least one reported RS (e.g., with T/F synchronization); and/ or
the at least one reported RS may satisfy the condition of triggering event, if the number of above associated TCI states is larger than the number of un-determined codepoint(s) of the TCI field, UE may select TCI state(s) from e.g., the lowest (or the highest/fixed/predetermined) TCI state ID.

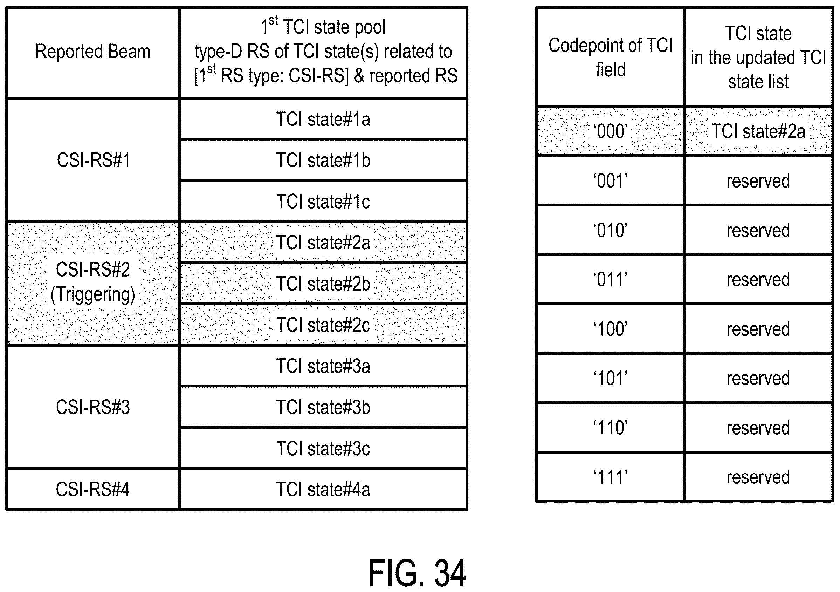

FIG. 34 is a schematic diagram illustrating a selection based on the association of reported beam and TCI state pool according to an exemplary embodiment of the present disclosure. Referring FIG. 34, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.
In one embodiment, if more than one TCI states are associated with the reported RS, UE may select the lowest ID (or highest ID) among the more than one TCI states.
In one embodiment, in this case, UE may expect the TCI field indicates the lowest codepoint (or highest codepoint) or UE may not read the TCI field.

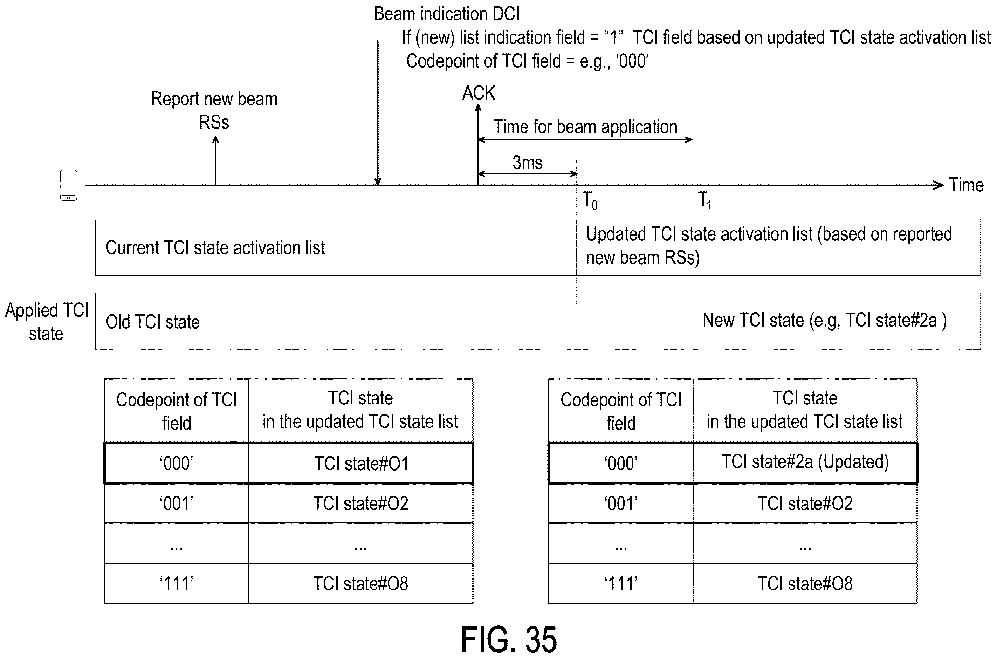

FIG. 35 is a schematic diagram illustrating a selection TCI state associated with reported RS(s) satisfying triggering condition according to an exemplary embodiment of the present disclosure. Referring to FIG. 35, if (new) list indication field = "1", the TCI field is determined based on updated TCI state activation list. For example, in the current TCI state activation list, TCI field "000" indicates TCI state#01. However, in the updated TCI state activation list (based on reported new beam RSs), TCI field "000" indicates TCI state#2a. Therefore, the new TCI state would be determined as TCI state#2a.

In one embodiment, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.
In one embodiment, if more than one TCI states are associated with the reported RS, UE may select the lowest ID (or highest ID) among the more than one TCI states, the lowest codepoint of TCI field may be updated by the lowest ID of the TCI state, and the other TCI states indicated by codepoints other than the lowest codepoint (e.g., '000' ) may be kept.

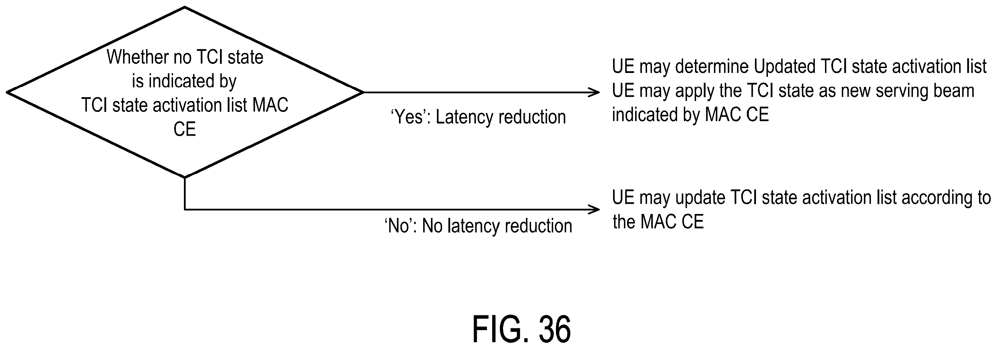

FIG. 36 is a schematic diagram illustrating MAC CE based latency reduction according to an exemplary embodiment of the present disclosure. Referring to FIG. 36, in the case that no TCI state is indicated by TCI state activation list MAC CE, the proposed latency reduction is indicated to be performed. UE may determine an Updated TCI state activation list. UE may apply the TCI state as a new serving beam indicated by MAC CE. In one embodiment, in the case that the TCI state is indicated by TCI state activation list MAC CE, no proposed latency reduction would be performed. UE may update TCI state activation list according to the MAC CE.

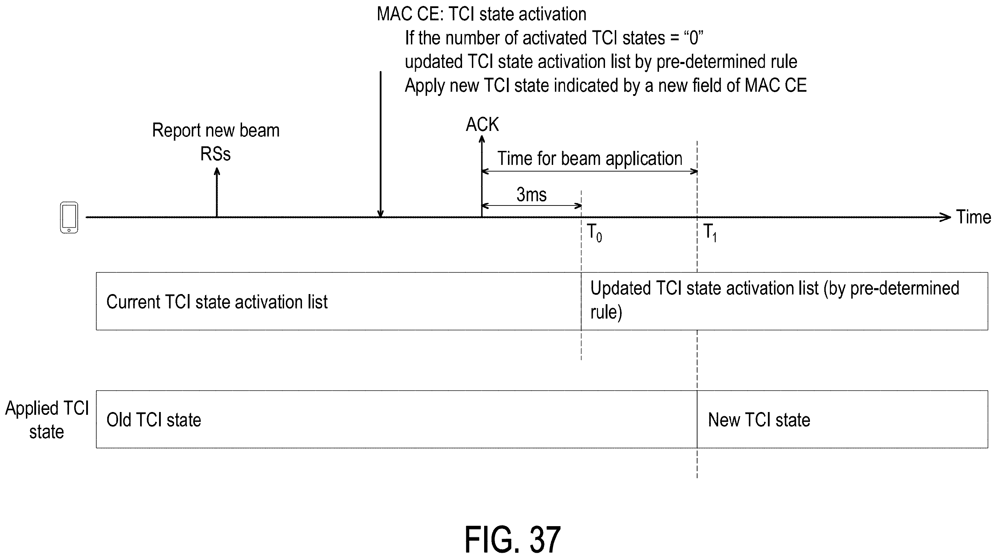

FIG. 37 is a schematic diagram illustrating TCI state activation by MAC CE according to an exemplary embodiment of the present disclosure. Referring to FIG. 37, if TCI state activation MAC CE activates NO TCI state,
UE may stop beam report (or stop the procedure of UE initial beam report or reset the counter of new beams; and/ or
UE may determine TCI state activation list by e.g., a pre-determined rule; and/ or
UE may apply the TCI state as new serving beam indicated by MAC CE; and/ or
where the MAC CE includes a new field to indicate which TCI state is applied as new TCI state. For example, if the number of activated TCI states = "0", updated TCI state activation list is determined by a pre-determined rule, and new TCI state indicated by a new field of MAC CE is applied.

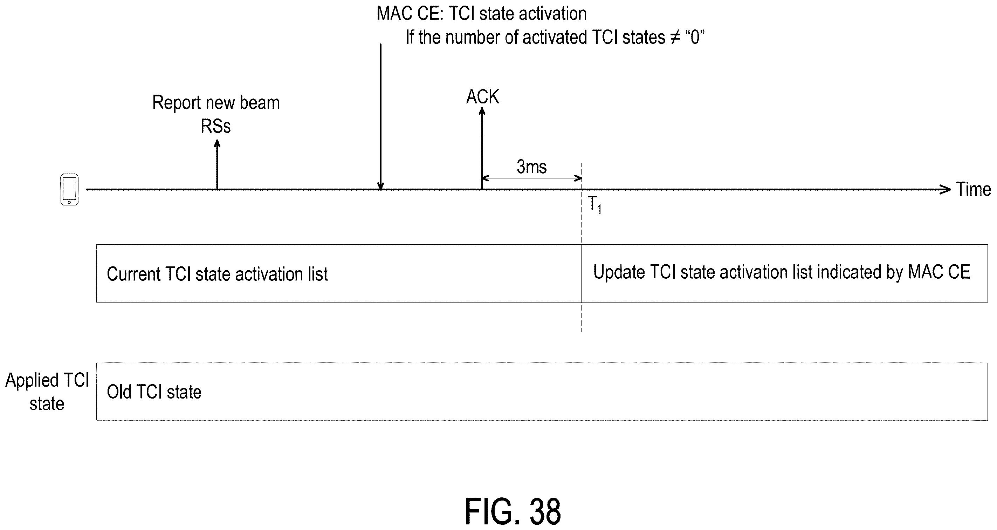

FIG. 38 is a schematic diagram illustrating TCI state activation by MAC CE according to an exemplary embodiment of the present disclosure. Referring to FIG. 38, UE may receive TCI state activation MAC CE which activates at least one TCI state,
after ACK corresponding to TCI state activation MAC CE; and/ or
UE may update TCI state activation list according to the MAC CE.
For example, the number of the activated TCI state is not 0.

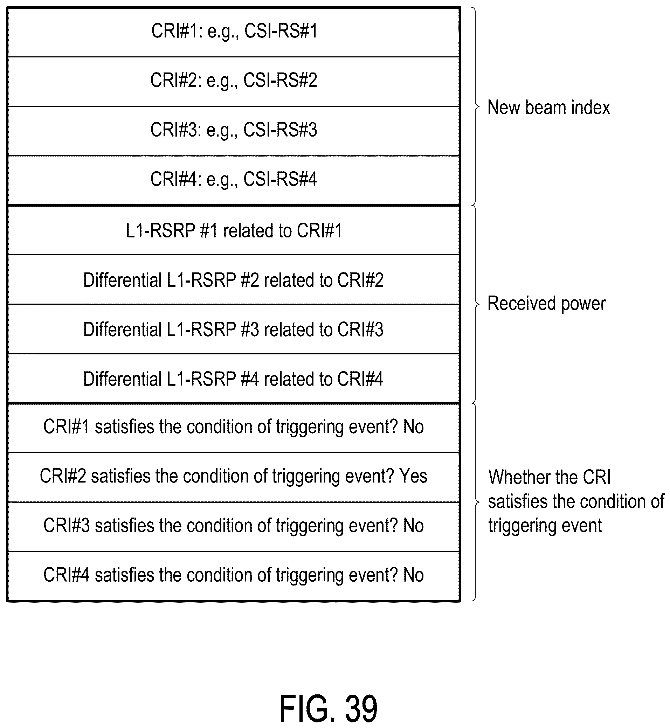

FIG. 39 is a schematic diagram illustrating a CSI report according to an exemplary embodiment of the present disclosure. Referring to FIG. 39, UE may report CSI, including at least one of the following:
CRI and/or SSBRI;
L1-RSRP (or L1-SINR) corresponding to the CSI-RS indicated by CRI or SSB indicated by SSBRI or current beam RS;
Indication of whether the CRI/SSBRI satisfies the condition of triggering event;
Event ID;
CSI report configuration ID.
In one embodiment, UE may be configured with the number of report beam RS, i.e., M = e.g., 4.

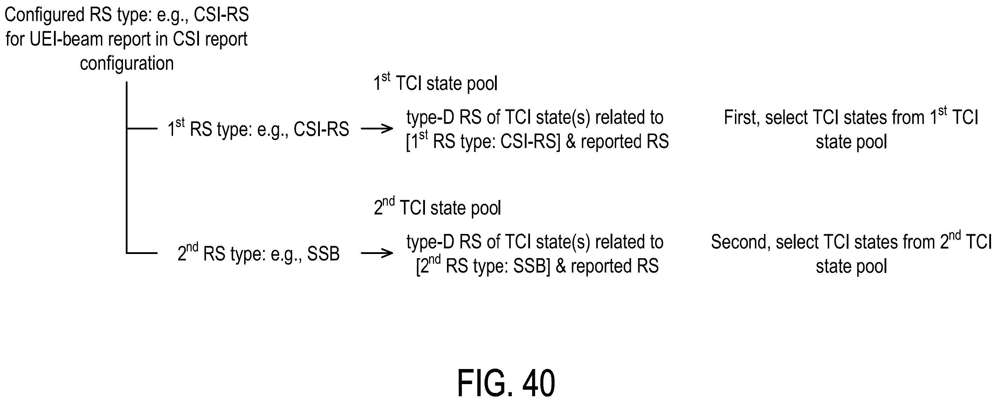

FIG. 40 is a schematic diagram illustrating an association of RS and TCI state pool according to an exemplary embodiment of the present disclosure. Referring to FIG. 40, UE may determine a first RS type and/or a second RS type, where
the first RS type may be associated with a RS type of reported RS(s); and/ or
the RS type of reported RS(s) may be configured in CSI report configuration; and/ or
the second RS type may be different from the first RS type.
In one embodiment, UE may determine a first TCI state pool and/or a second TCI state pool, where type-D RS(s) of the TCI states in the first TCI state pool may be related to the 1st RS type (e.g., CSI-RS) and/or reported RS; and/ or type-D RS(s) of the TCI states in the second TCI state pool may be related to the 2nd RS type (e.g., SSB) and/or reported RS.
In one embodiment, UE may determine/select at least one TCI state from the first TCI state pool to an updated TCI state activation list,
if all the TCI state in the first TCI state pool are selected and/or if there is no TCI state in the first TCI state pool and/or if the number of selected TCI states is less than the number of codepoint is the TCI field. UE may determine/select at least one TCI state from the second TCI state pool to an updated TCI state activation list.

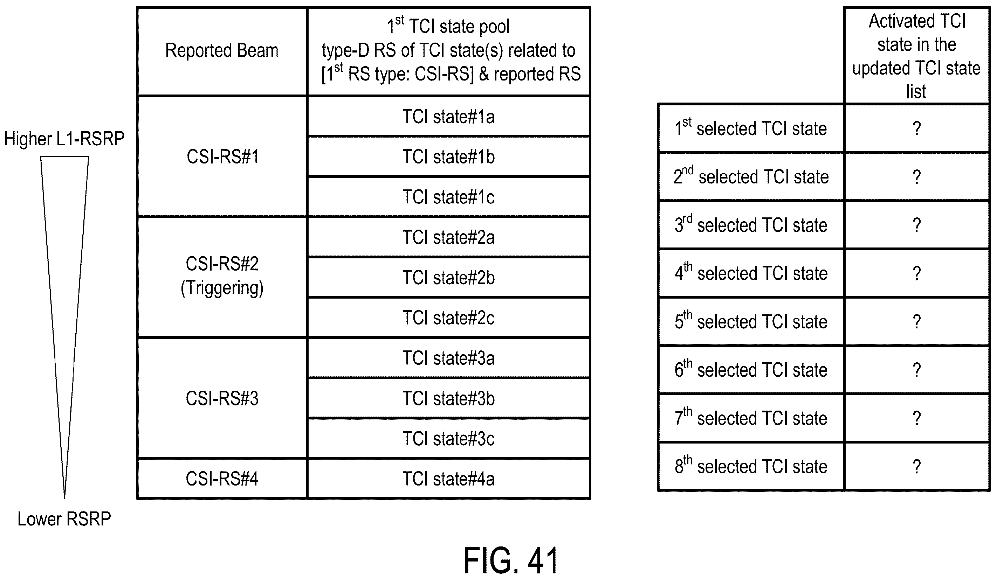

FIG. 41 is a schematic diagram illustrating an association of reported beam and TCI state pool according to an exemplary embodiment of the present disclosure. Referring to FIG. 41, UE may determine a first TCI state pool, where type-D RS(s) of the TCI states in the first TCI state pool may be related to the 1^{st} RS type and/or reported RS. In one embodiment, UE may determine/select at least one TCI state from the first TCI state pool to an updated TCI state activation list, where the maximum number of selected TCI states may be less than or equal to the number of codepoints of TCI field.

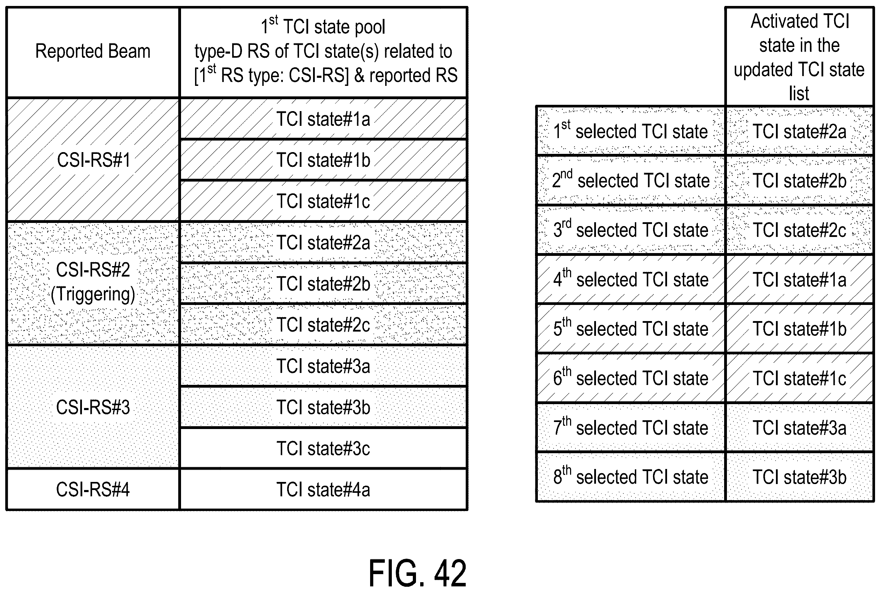

FIG. 42 is a schematic diagram illustrating an association of reported beam and TCI state pool according to an exemplary embodiment of the present disclosure. Referring to FIG. 42, UE may determine TCI state activation list by, e.g., a pre-determined rule. In one embodiment, UE may select at least one TCI state which is associated with reported RS, where
the at least one reported RS may satisfy the condition of triggering event; and/ or
the at least one reported RS may have higher RSRP value than the RSRP values of the RS satisfying the condition of triggering event; and/ or
the at least one reported RS may have highest RSRP value within the remaining un-selected reported RS(s).

In one embodiment, in step 1, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.

In one embodiment, in step 2, UE may select the TCI states associated reported RS, where
the type-D RS of the selected at least one TCI state may be associated with at least one reported RS (e.g., with T/F synchronization); and/ or
the at least one reported RS may have higher RSRP value than the RSRP values of the RS satisfying the condition of triggering event.

In one embodiment, in step 3, UE may select the TCI states associated reported RS, where
the type-D RS of the selected at least one TCI state may be associated with at least one reported RS (e.g., with T/F synchronization); and/ or
the at least one reported RS may have highest RSRP value within the remaining un-selected reported RS(s), if the number of above associated TCI states is larger than the number of un-determined codepoint(s) of the TCI field, UE may select TCI state(s) from e.g., the lowest (or the highest/fixed/predetermined) TCI state ID.

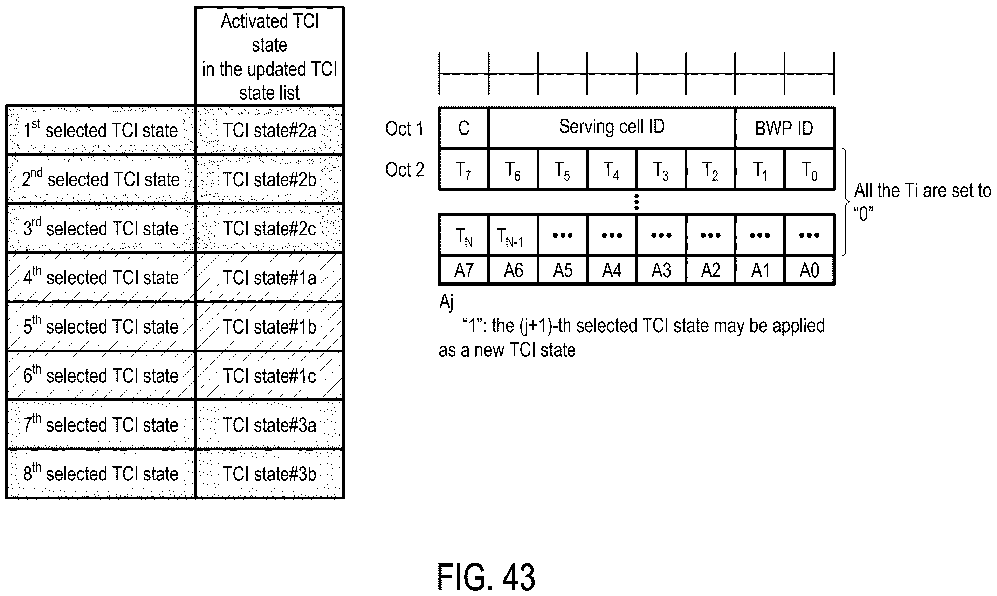

FIG. 43 is a schematic diagram illustrating a TCI state list according to an exemplary embodiment of the present disclosure. Referring to FIG. 43, in the TCI States Activation/Deactivation,
Ti: This field may indicate the activation/deactivation status of the TCI state with TCI-StateId i. When all the Ti are set to "0", the UE may read the new field, e.g., A0~A7.
Aj: This field may indicate whether UE applies the (j+1)-th selected TCI state as a new TCI state for serving UE.
The Aj field may be set to 1 to indicate that the (j+1)-th selected TCI state may be applied as a new TCI state for serving UE.
The Aj field may be set to 0 to indicate that the (j+1)-th selected TCI state may not be applied as a new TCI state for serving UE.

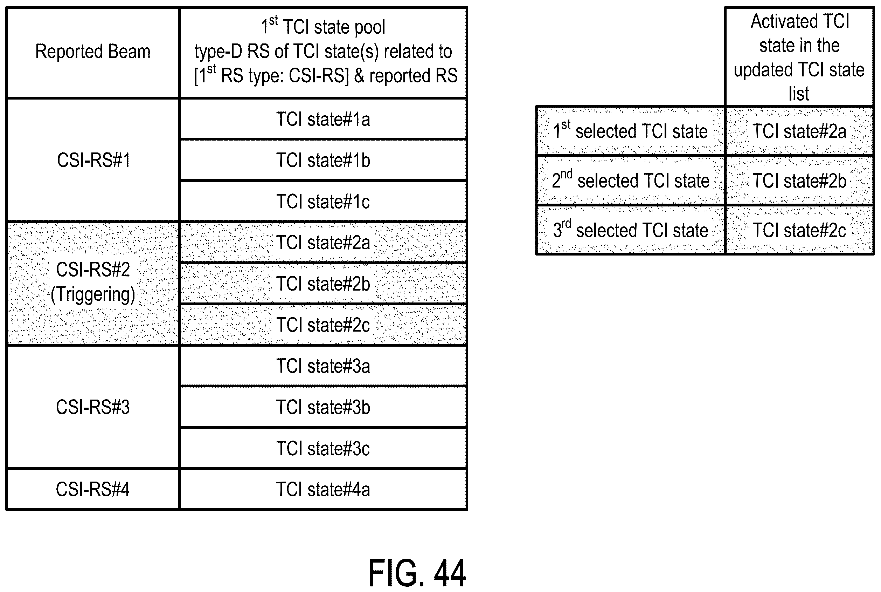

FIG. 44 is a schematic diagram illustrating an association of reported beam and TCI state pool according to an exemplary embodiment of the present disclosure. Referring to FIG. 44, UE may determine TCI state activation list by e.g., a pre-determined rule. In one embodiment, UE may select at least one TCI state which is associated with reported RS, where
the type-D RS of the selected at least one TCI state may be associated with at least one reported RS (e.g., with T/F synchronization); and/ or
the at least one reported RS may satisfy the condition of triggering event.

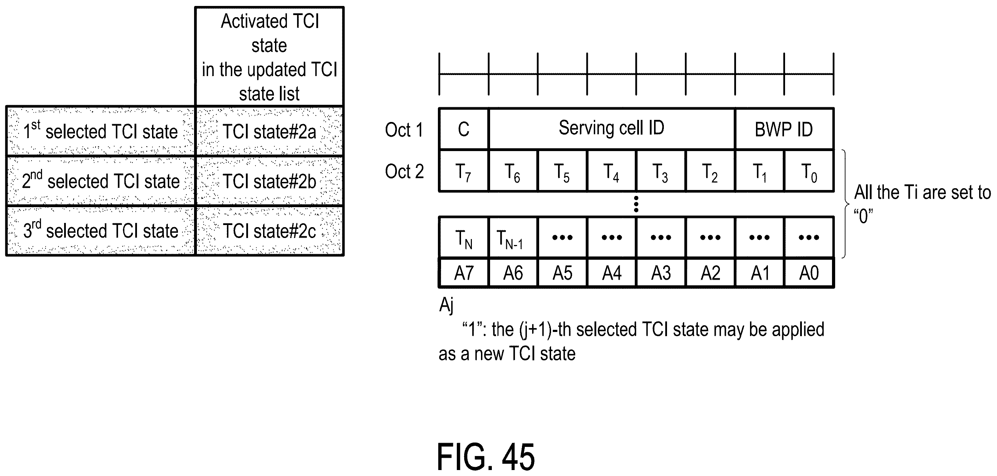

FIG. 45 is a schematic diagram illustrating a selection of TCI states associated with reported RS satisfying triggering condition according to an exemplary embodiment of the present disclosure. Referring to FIG. 45, in the TCI States Activation/Deactivation,
Ti: This field may indicate the activation/deactivation status of the TCI state with TCI-StateId i. When all the Ti are set to "0", the UE may read the new field, e.g., A0~A7.
Aj: This field may indicate whether UE applies the (j+1)-th selected TCI state as a new TCI state for serving UE.
The Aj field may be set to 1 to indicate that the (j+1)-th selected TCI state may be applied as a new TCI state for serving UE.
The Aj field may be set to 0 to indicate that the (j+1)-th selected TCI state may not be applied as a new TCI state for serving UE.

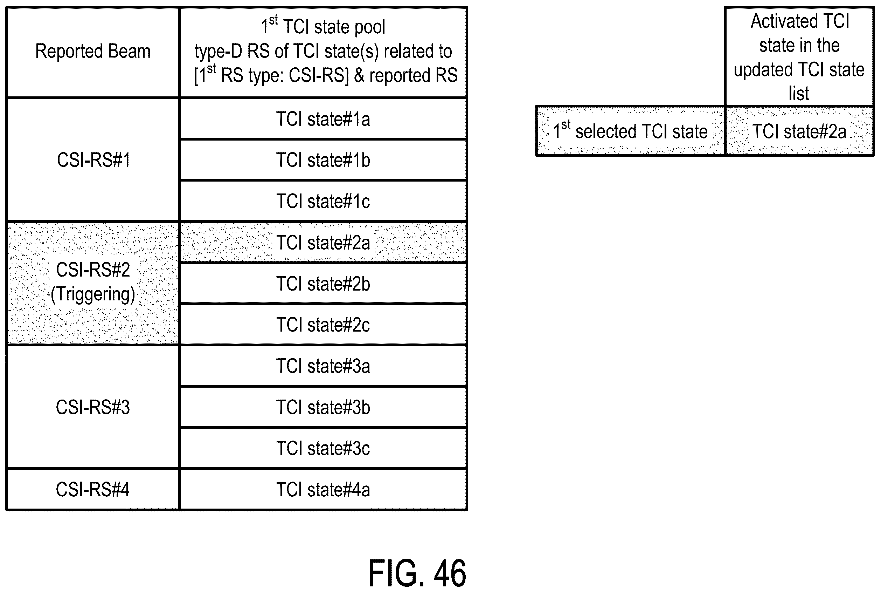

FIG. 46 is a schematic diagram illustrating an association of reported beam and TCI state pool according to an exemplary embodiment of the present disclosure. Referring to FIG. 46, UE may determine TCI state activation list by, e.g., a pre-determined rule. In one embodiment, UE may select at least one TCI state which is associated with reported RS, where
the at least one reported RS may satisfy the condition of triggering event; and/ or
if more than one TCI states associated the reported RS, UE may select the lowest (or highest/fixed/predetermined) TCI state ID among the TCI states.

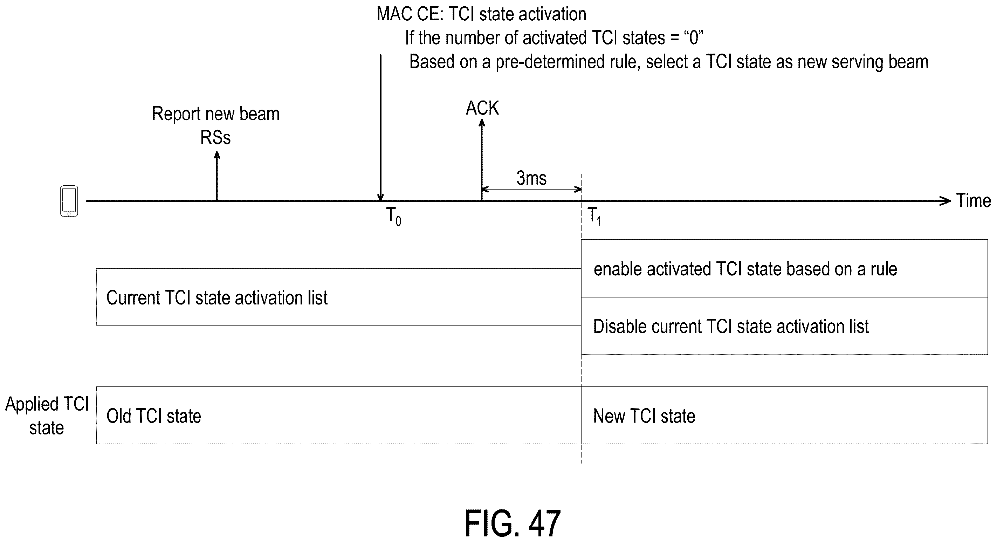

FIG. 47 is a schematic diagram illustrating TCI state activation by MAC CE according to an exemplary embodiment of the present disclosure. Referring to FIG. 47, if TCI state activation MAC CE activates NO TCI state,
UE may stop beam report (or stop the procedure of UE initial beam report or reset the counter of new beams; and/ or
UE may determine a new TCI state for activation, e.g., based on a (pre-determined) rule.
In one embodiment, after ACK corresponding to TCI state activation MAC CE is transmitted, current TCI state activation list may be disable; and/ or
UE may apply the new TCI state.
For example, if the number of activated TCI states = "0", a TCI state is selected as new serving beam based on a pre-determined rule.

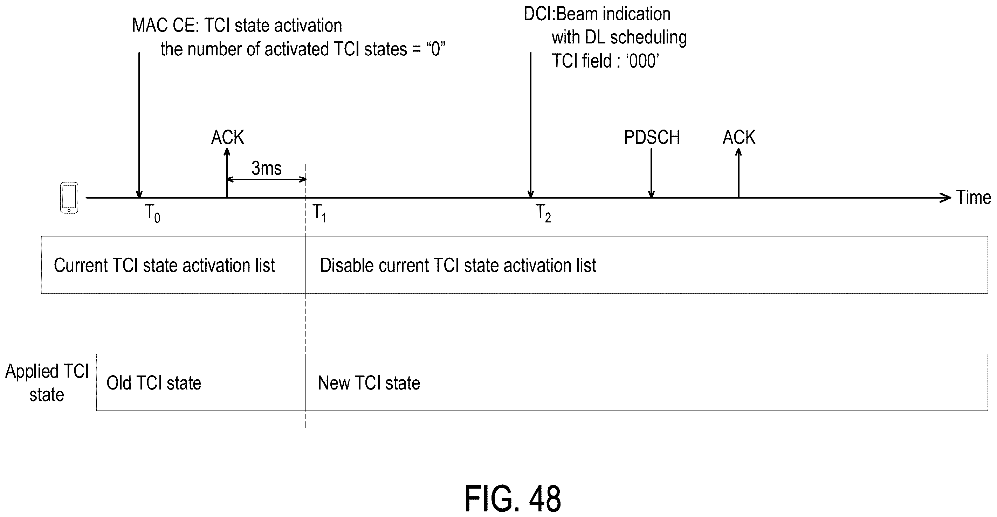

FIG. 48 is a schematic diagram illustrating TCI state activation by MAC CE according to an exemplary embodiment of the present disclosure. Referring to FIG. 48, if TCI state activation MAC CE activates NO TCI state,
UE may stop beam report (or stop the procedure of UE initial beam report or reset the counter of new beams; and/ or
UE may determine a new TCI state for activation, e.g., based on a (pre-determined) rule.
In one embodiment, after ACK corresponding to TCI state activation MAC CE is transmitted, UE may apply the new TCI state; and/ or
current TCI state activation list may be disabled; and/ or
when current TCI state activation list is disabled, UE may expect the TCI field in the beam indication DCI indicate the lowest codepoint (or the highest/fixed/predetermined codepoint). For example, the number of activated TCI states = "0", and beam indication DCI with DL scheduling TCI field: '000' is transmitted.

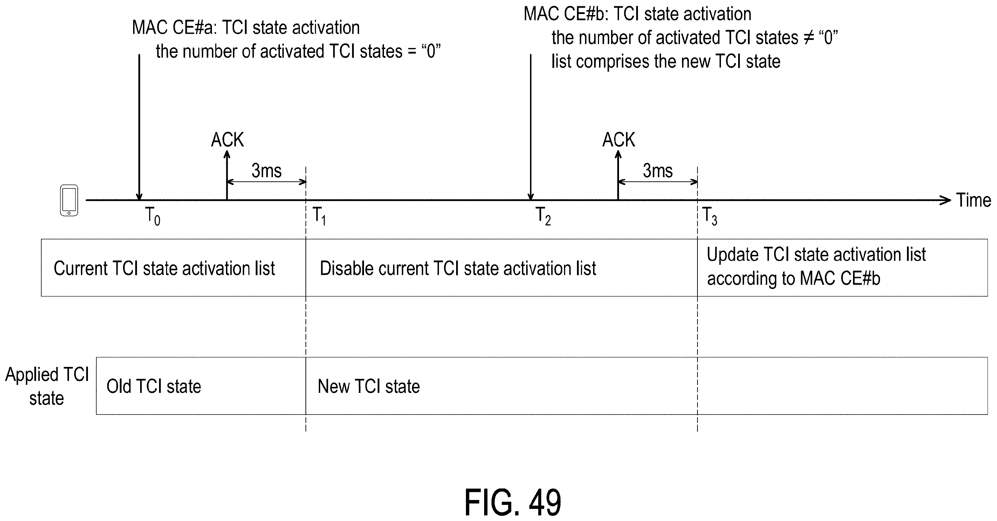

FIG. 49 is a schematic diagram illustrating TCI state activation by MAC CEs according to an exemplary embodiment of the present disclosure. Referring to FIG. 49, UE may receive TCI state activation MAC CE which activates at least one TCI state,
after ACK corresponding to TCI state activation MAC CE and/or when current TCI state activation list is disabled; and/ or
UE may update TCI state activation list according to the MAC CE; and/ or UE may expect update TCI state activation list to comprise the new TCI state.
For example, the number of activated TCI states = "0", and TCI state activation by MAC CE#b indicates the number of activated TCI states is not 0, and the list include the new TCI state.

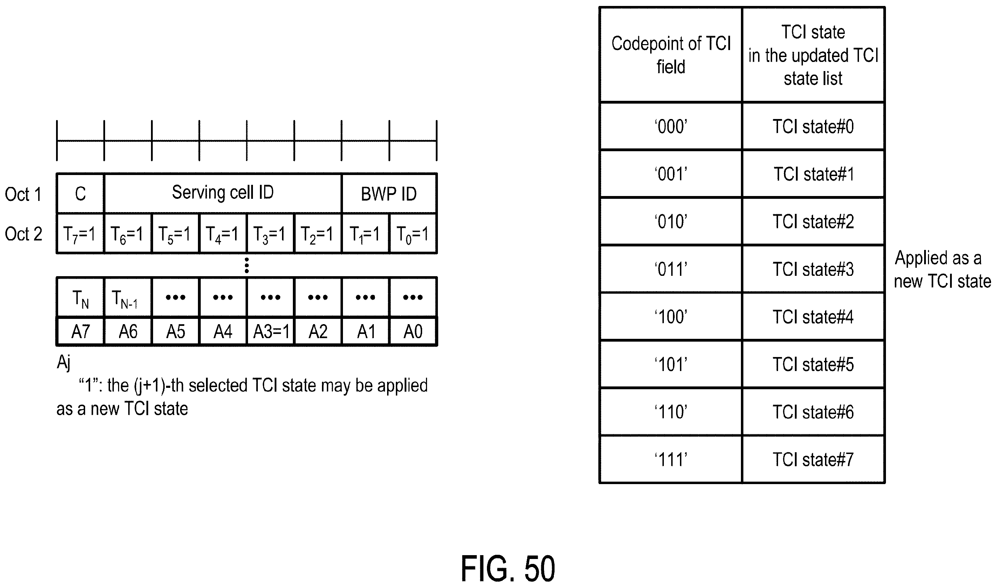

FIG. 50 is a schematic diagram illustrating a new field for TCI state activation/ deactivation according to an exemplary embodiment of the present disclosure. Referring to FIG. 50, a new field is proposed, in the TCI States Activation/Deactivation,
Ti: This field may indicate the activation/deactivation status of the TCI state with TCI-StateId i.
Aj: This field may indicate whether UE applies the (j+1)-th selected TCI state as a new TCI state for serving UE.
The Aj field may be set to 1 to indicate that the (j+1)-th selected TCI state may be applied as a new TCI state for serving UE.
The Aj field may be set to 0 to indicate that the (j+1)-th selected TCI state may not be applied as a new TCI state for serving UE.

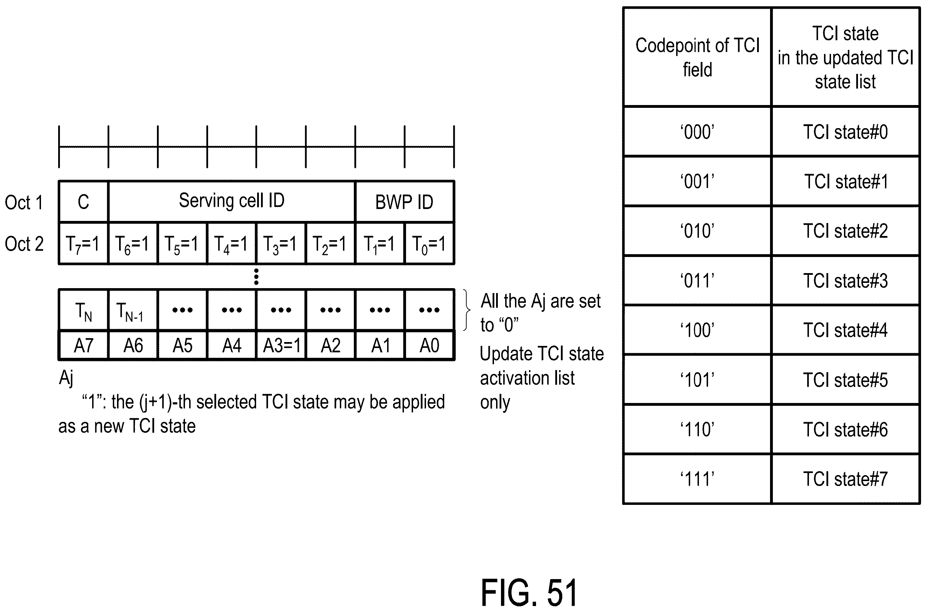

FIG. 51 is a schematic diagram illustrating a new field for TCI state activation/ deactivation according to an exemplary embodiment of the present disclosure. Referring to FIG. 51, a new field is proposed, in the TCI States Activation/Deactivation,
Ti: This field may indicate the activation/deactivation status of the TCI state with TCI-StateId i.
Aj : This field may indicate whether UE applies the (j+1)-th selected TCI state as a new TCI state for serving UE.
The Aj field may be set to 1 to indicate that the (j+1)-th selected TCI state may be applied as a new TCI state for serving UE.
The Aj field may be set to 0 to indicate that the (j+1)-th selected TCI state may not be applied as a new TCI state for serving UE.
When all the Aj are set to "0", the UE may update TCI state activation according to the MAC CE.

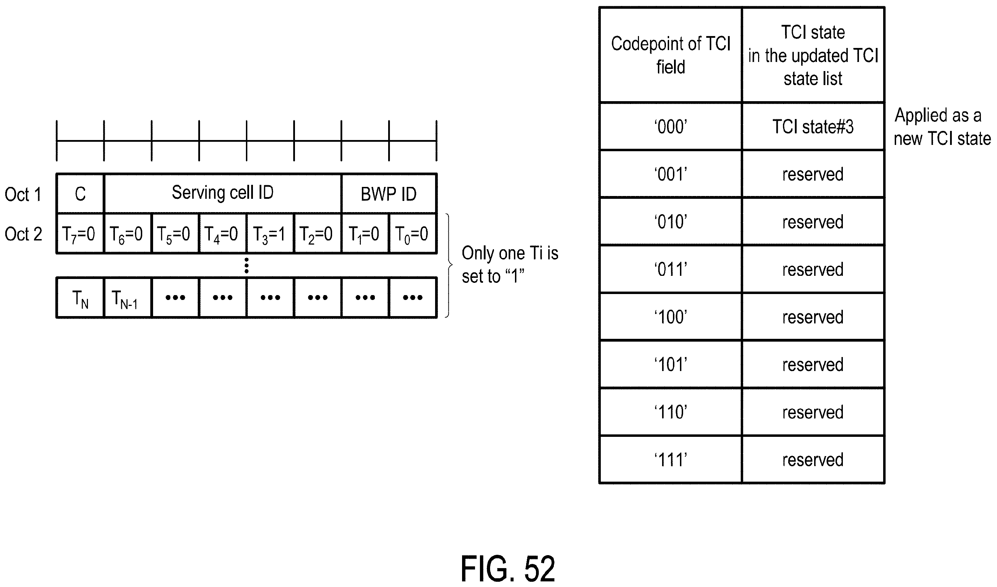

FIG. 52 is a schematic diagram illustrating reusing field for TCI state activation/ deactivation according to an exemplary embodiment of the present disclosure. Regarding reusing current field, in the TCI States Activation/Deactivation,
Ti: This field may indicate the activation/deactivation status of the TCI state with TCI-StateId i. When only one Ti is set to "1", TCI state ID#i may be applied as a new TCI state for serving UE. In one embodiment, UE may expect the TCI field in the beam indication DCI indicate a the lowest codepoint (or the highest/fixed/predetermined codepoint).

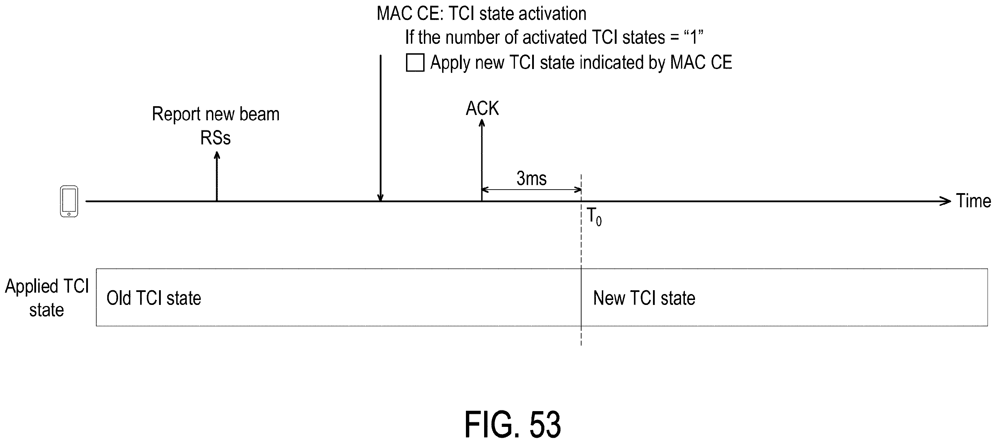

FIG. 53 is a schematic diagram illustrating TCI state activation by MAC CE according to an exemplary embodiment of the present disclosure. Referring to FIG. 53, if UE may expect the TCI field in the beam indication DCI indicate the lowest codepoint (or the highest/fixed/predetermined codepoint),
UE may stop beam report (or stop the procedure of UE initial beam report or reset the counter of new beams; and/ or
UE may apply the TCI state as new serving beam indicated by MAC CE.
For example, if the number of activated TCI states = "1", the new TCI state indicated by MAC CE is applied.

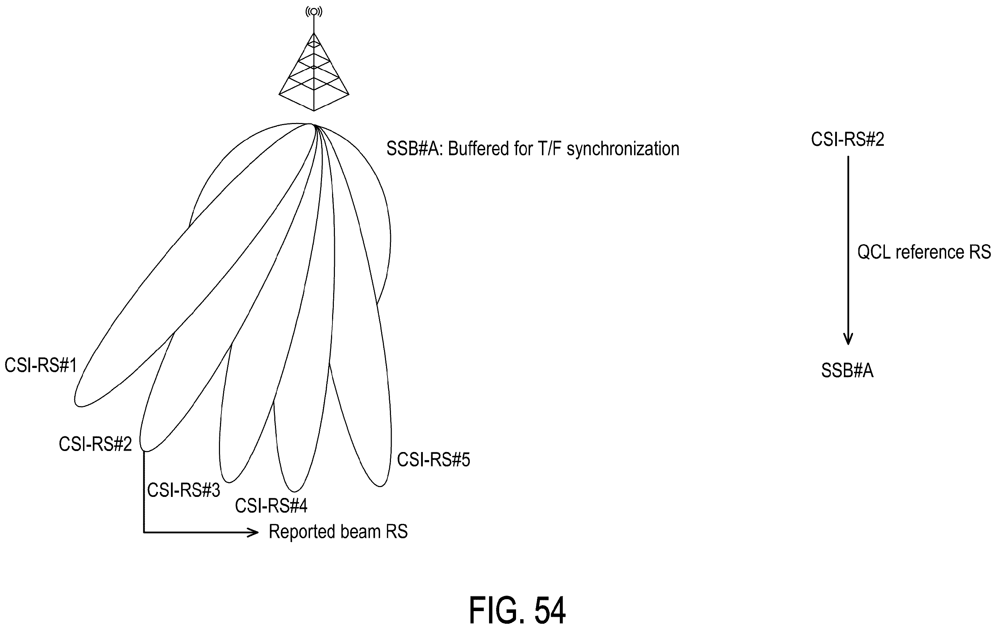

FIG. 54 is a schematic diagram illustrating RS for new beam measurement according to an exemplary embodiment of the present disclosure. Referring to FIG. 54, at least one RS for new beam measurement may be associated with one SSB for T/F synchronization. For example, CSI-RS#2 is associated with SSB#A for T/F synchronization.

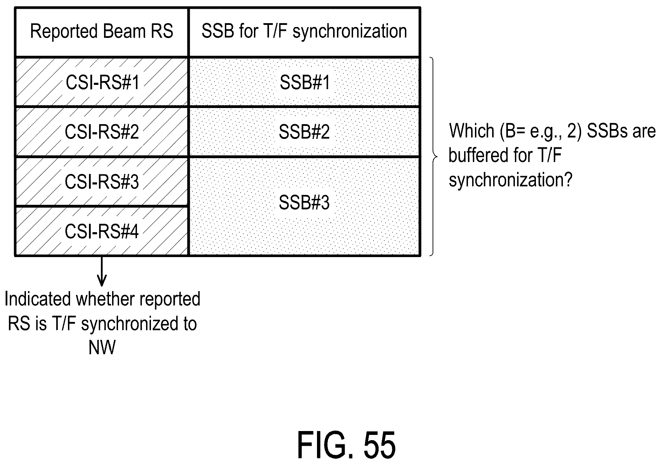

FIG. 55 is a schematic diagram illustrating an association of reported beam and SSB according to an exemplary embodiment of the present disclosure. Referring to FIG. 55, UE may report a capability of the number of SSBs that are buffered for T/F synchronization when/after new beam RS set measurement. In one embodiment, UE may receive a configuration/indication to indicate the number of SSBs that are buffered for T/F synchronization when/after new beam RS set measurement.
UE may determine which SSBs are buffered for T/F synchronization; and/ or
UE may indicate whether the reported RS is T/F synchronized.
However, if the number of SSBs (e.g., B) which are buffered for T/F synchronization is e.g., 2, which (B= e.g., 2) SSBs are buffered for T/F synchronization?

In one embodiment, UE may measure (or maintain) SSB for T/F synchronization before or after CSI report, where
the SSB may be associated with the resource configured in the CSI-RS resource set with triggering event; and/ or
the SSB may be associated with the resource reported in the CSI report instance.

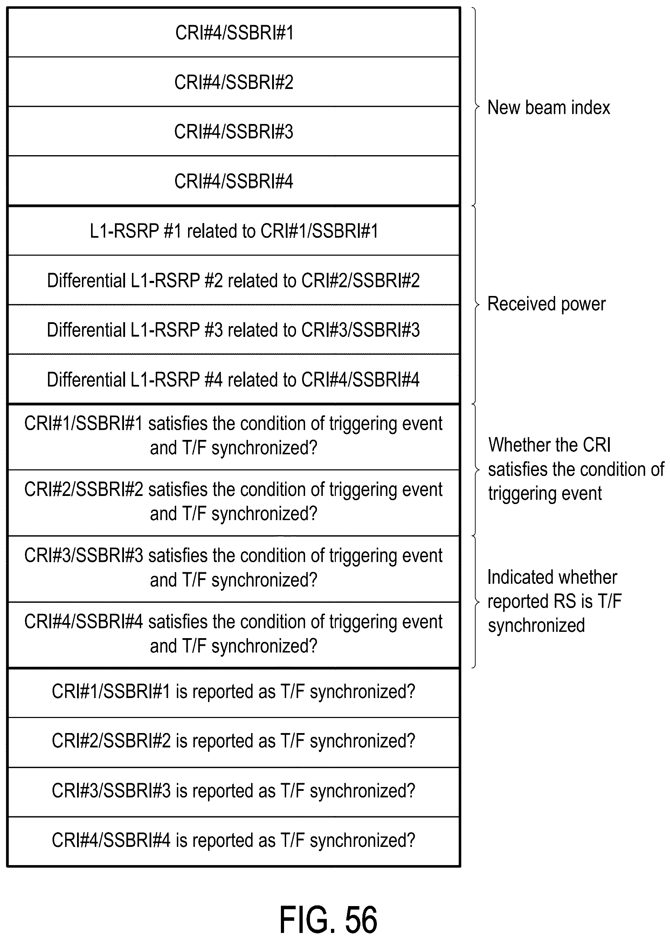

FIG. 56 is a schematic diagram illustrating a CSI report according to an exemplary embodiment of the present disclosure. Referring to FIG. 56, CSI report may indicate whether reported RS is T/F synchronized. In one embodiment, in explicit manners,
UE may determine which SSBs are buffered for T/F synchronization, e.g., based on UE's implementation; and/ or
UE may be configured with information to indicate whether reported RS is T/F synchronized; and/ or
UE may indicate whether reported RS is T/F synchronized, e.g., in a beam report contents (report CSI according to CSI report configuration).

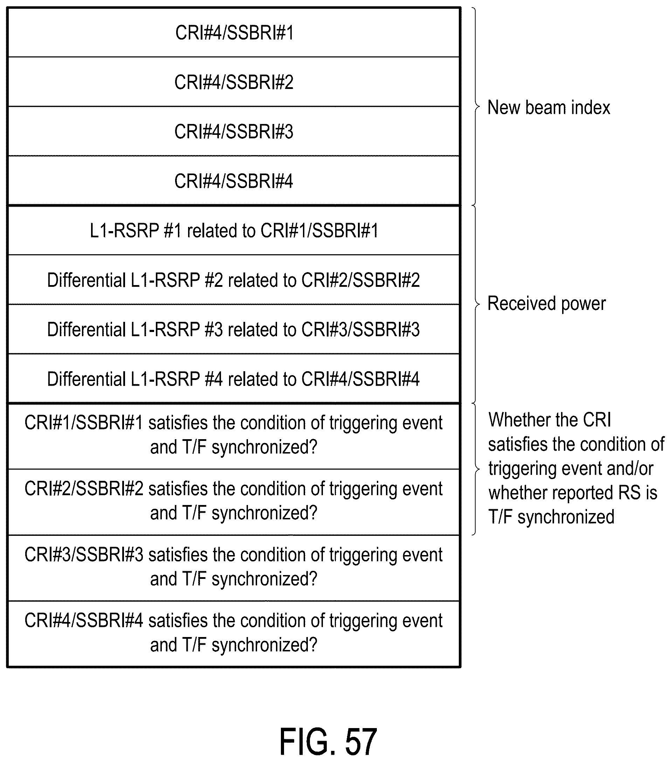

FIG. 57 is a schematic diagram illustrating a CSI report according to an exemplary embodiment of the present disclosure. Referring to FIG. 57, CSI report may indicate whether reported RS is T/F synchronized. In one embodiment, regarding reusing current fields,
UE may determine which SSBs are buffered for T/F synchronization, e.g., based on UE's implementation; and/ or
UE may be configured with information to indicate whether reported RS is T/F synchronized; and/ or
UE may indicate the CRI satisfies the condition of triggering event and/or reported RS is T/F synchronized, e.g., in a beam report contents (report CSI according to CSI report configuration).

In one embodiment, UE may receive a first configuration (e.g., CSI report configuration) for CSI report, where the first configuration may configure the report quantity in a CSI report comprising at least one of followings. For example, CRI/SSBRI, L1-RSRP/L1-SINR of corresponding CRI/SSBRI, a first field to indicate whether CRI/SSBRI satisfies the condition of triggering event.

In one embodiment, UE may receive a second configuration for CSI report, where
the first configuration may configure the number of reported RS associated with T/F sync. (or QCL type A/C); and/ or
the first configuration may configure the number of SSB associated with T/F sync. (or QCL type A/C); and/ or
the first configuration may configure the number of TCI state associated with T/F sync. (or QCL type A/C); and/ or
the first configuration may configure report quantity in a CSI report, including a second field to indicate whether the RS indicated by CRI/SSBRI is synchronized in time/frequency domain.
In one embodiment, the first configuration and the second configuration may be the same. In one embodiment, the first field and the second field may be the same.

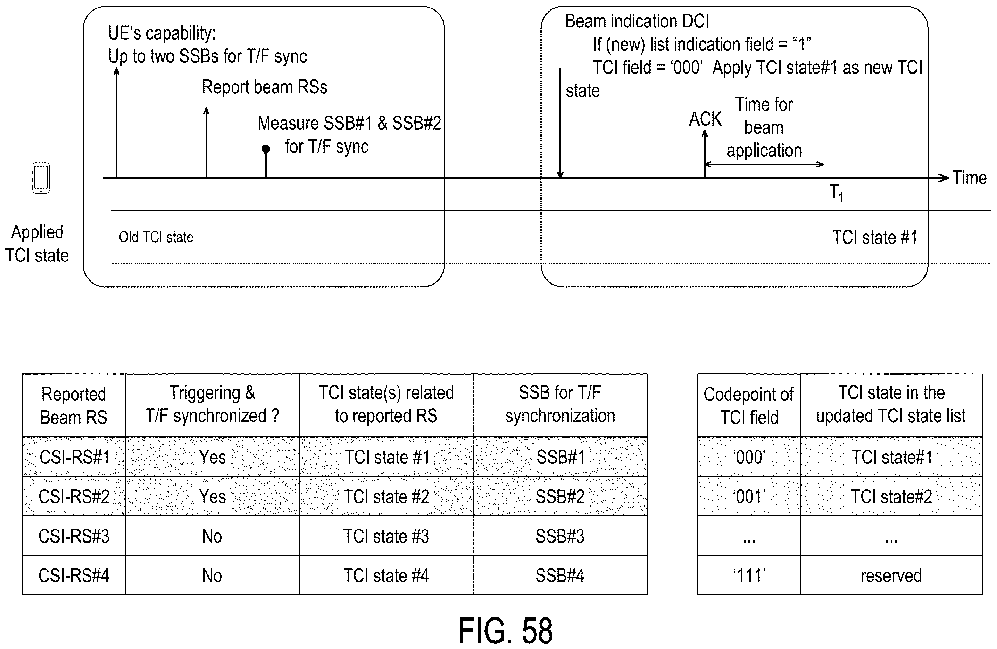

FIG. 58 is a schematic diagram illustrating a CSI report for T/F synchronization according to an exemplary embodiment of the present disclosure. Referring to FIG. 48, the UE's capability states up to two SSBs for T/F sync. Therefore, UE may measure SSB#1 & SSB#2 for T/F sync. In the beam indication DCI, if (new) list indication field = "1" and TCI field = '000', TCI state#1 is applied as the new TCI state.

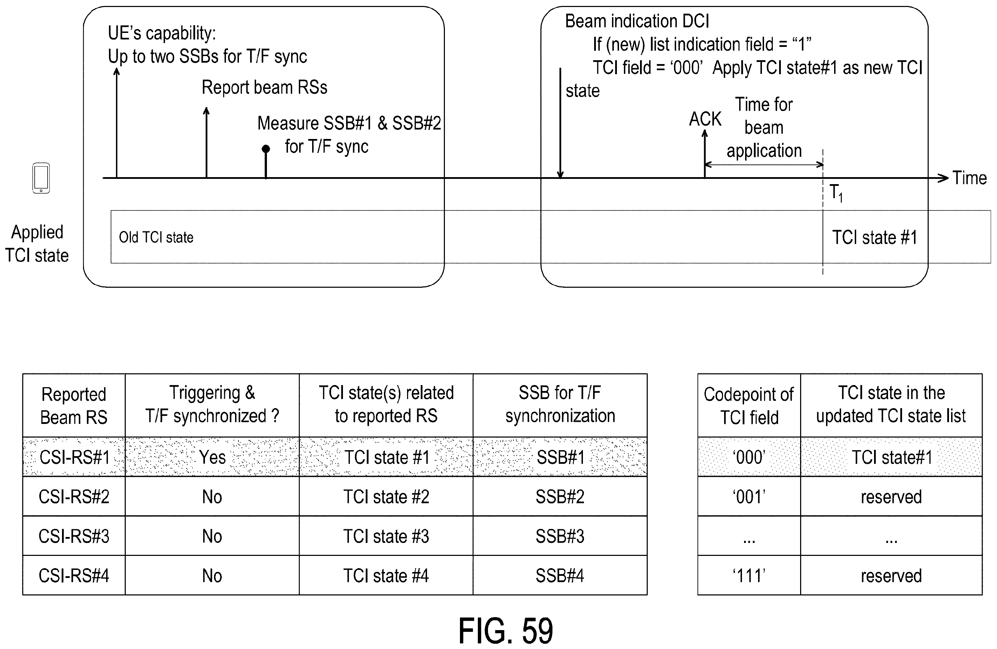

FIG. 59 is a schematic diagram illustrating a CSI report for T/F synchronization according to an exemplary embodiment of the present disclosure. Referring to FIG. 59, the UE's capability states up to two SSBs for T/F sync. Therefore, UE may measure SSB#1 & SSB#2 for T/F sync. In the beam indication DCI, if (new) list indication field = "1" and TCI field = '000', TCI state#1 is applied as the new TCI state. Only one reported RS satisfied triggering condition and is T/F synchronized.

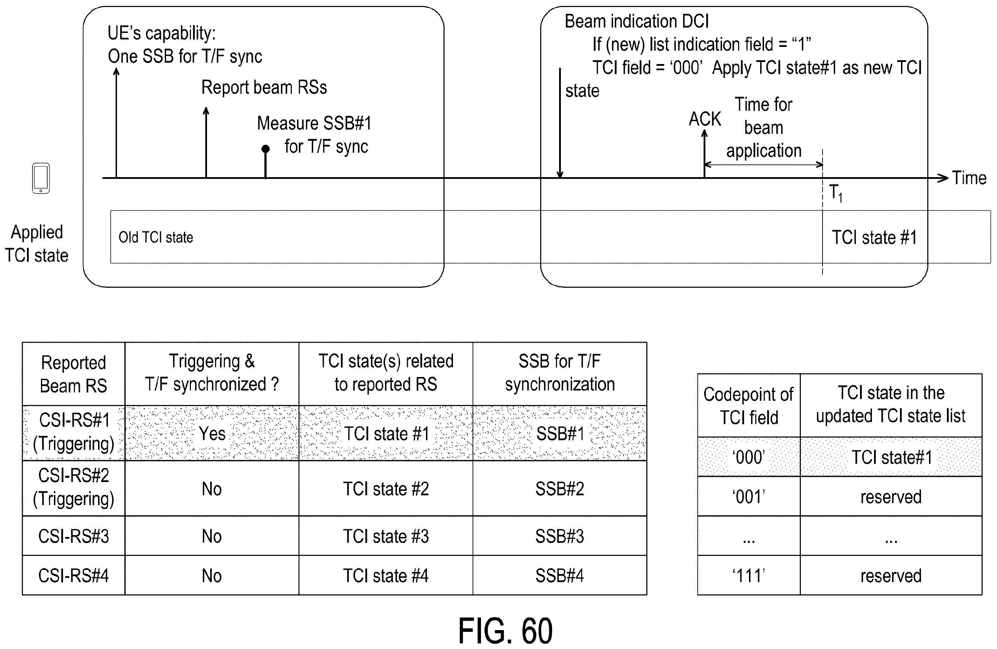

FIG. 60 is a schematic diagram illustrating a CSI report for T/F synchronization according to an exemplary embodiment of the present disclosure. Referring to FIG. 60, the UE's capability states only one SSB for T/F synchronization. Therefore, UE may measure SSB#1 for T/F synchronization. In the beam indication DCI, if (new) list indication field = "1" and TCI field = '000', TCI state#1 is applied as the new TCI state. If the number of reported RSs satisfying triggering condition is larger than the number of SSBs buffered for T/F synchronization, UE may select SSBs associated with reported RSs of higher L1-RSRP values (This selection also may up to UE's implementation). For example, CSI-RS#1 and CSI-RS#2 satisfy triggering condition, and SSB#1 associated with CSI-RS#1 having higher L1-RSRP value is selected.

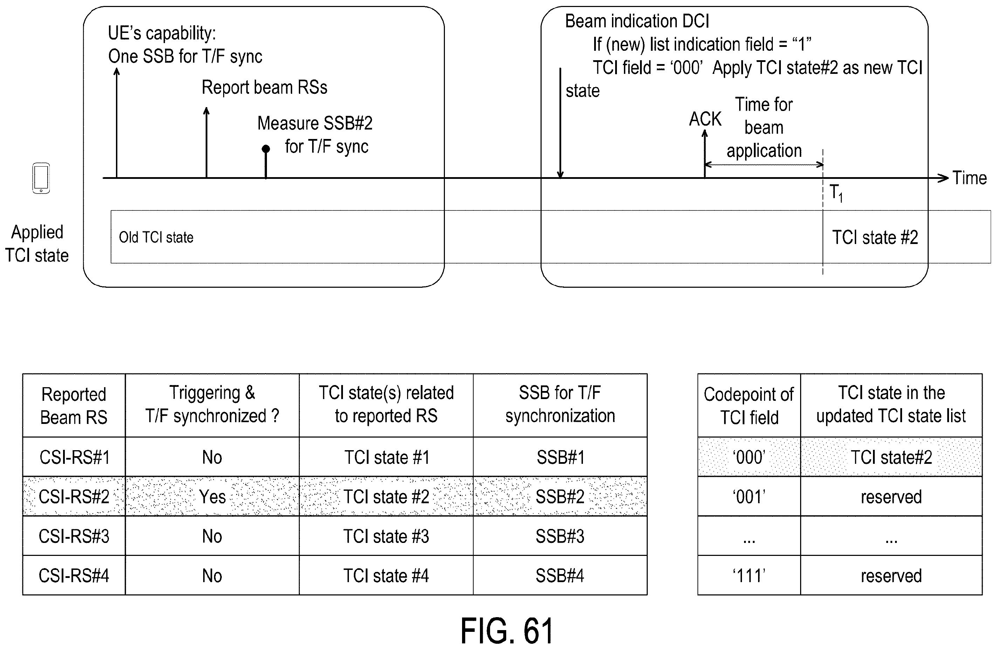

FIG. 61 is a schematic diagram illustrating a CSI report for T/F synchronization according to an exemplary embodiment of the present disclosure. Referring to FIG. 61, the UE's capability states only one SSB for T/F sync. Therefore, UE may measure SSB#2 for T/F sync. In the beam indication DCI, if (new) list indication field = "1" and TCI field = '000', TCI state#1 is applied as the new TCI state. UE may select SSB#2 buffered for T/F synchronization.

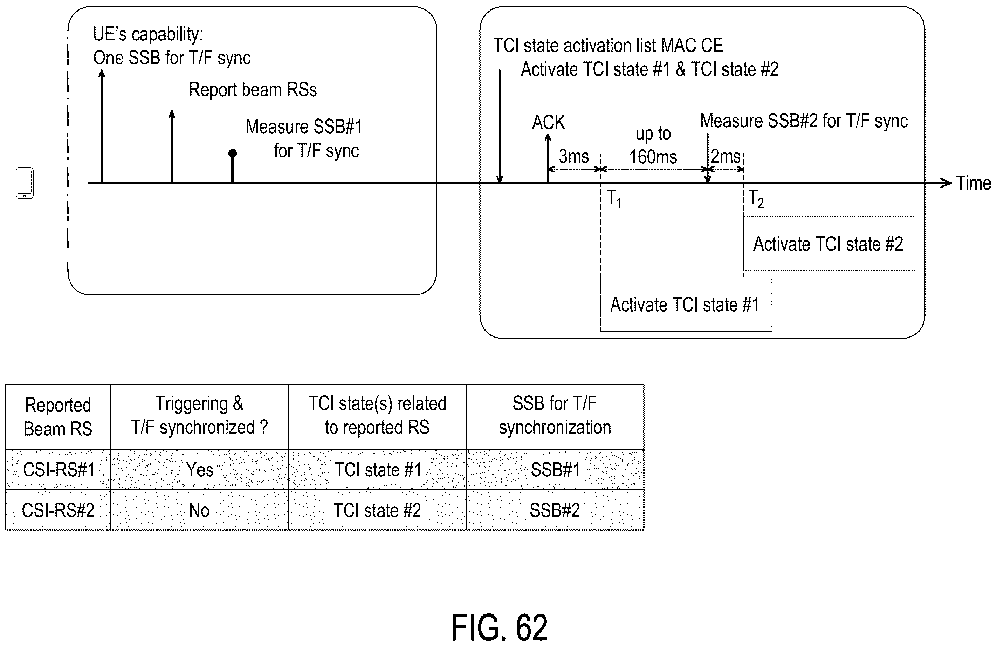

FIG. 62 is a schematic diagram illustrating a CSI report for T/F synchronization according to an exemplary embodiment of the present disclosure. Referring to FIG. 62, the UE's capability states only one SSB for T/F synchronization. Therefore, UE may measure SSB#1 for T/F synchronization. In the TCI state activation list by MAC CE, TCI state #1 and TCI state #2 are activated. After ACK is transmitted, the TCI state #1 is activated. Then, UE may measure SSB#2 for T/F synchronization, and the TCI state #2 is activated.

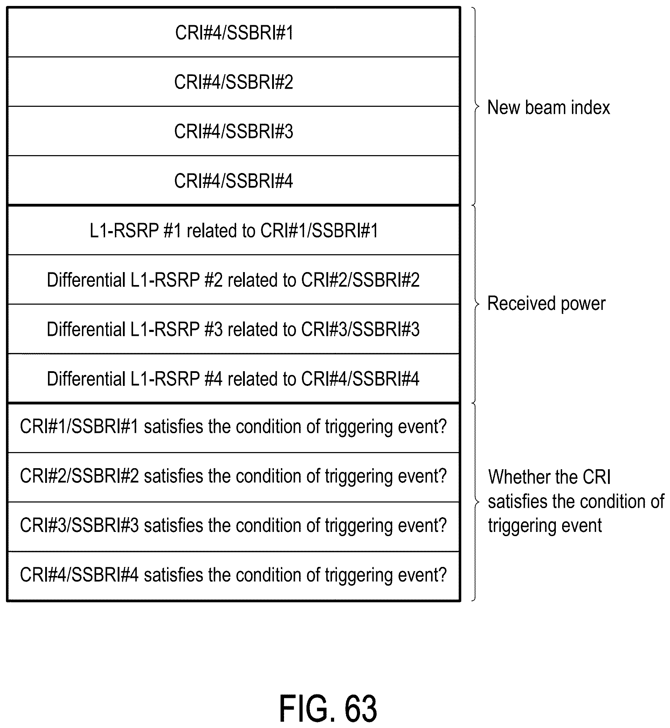

FIG. 63 is a schematic diagram illustrating a selection of SSB for T/F synchronization according to an exemplary embodiment of the present disclosure. Referring to FIG. 63, UE may indicate whether reported RS indicated by the CRI/SSBRI satisfies the condition of triggering event.

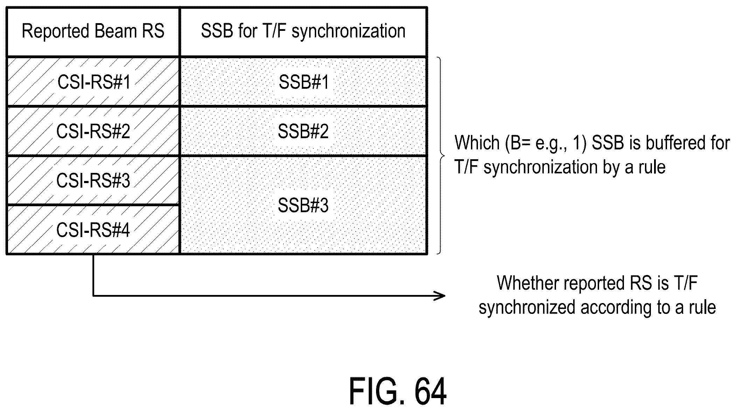

FIG. 64 is a schematic diagram illustrating an association of reported beam and SSB according to an exemplary embodiment of the present disclosure. In one example, UE may report a capability of the number of SSBs that are buffered for T/F synchronization when/after new beam RS set measurement. In one embodiment, UE may receive a configuration/indication to indicate the number of SSBs that are buffered for T/F synchronization when/after new beam RS set measurement, where
UE may determine which SSBs are buffered for T/F synchronization; and/ or
UE may indicate whether reported RS is T/F synchronized.
In one embodiment, UE may receive a configuration/indication to indicate, e.g., only one SSB which is buffered for T/F synchronization.
However, which (B= e.g., 1) SSB is buffered for T/F synchronization by a rule?

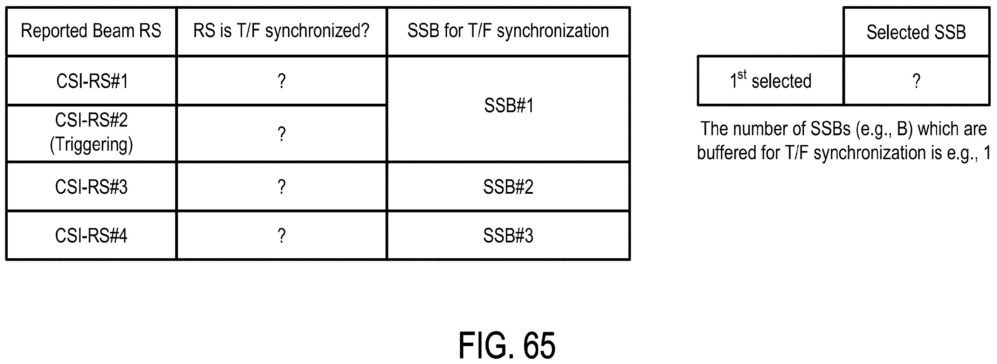

FIG. 65 is a schematic diagram illustrating an association of reported beam, RS, and SSB according to an exemplary embodiment of the present disclosure. Referring to FIG. 65, UE may determine which SSBs are buffered for T/F synchronization, e.g., based on pre-determined rule. For example, UE and gNB may know the relation of new beam RS and SSB according to the configuration and/or the QCL relation. The number of SSBs (e.g., B) which are buffered for T/F synchronization is, e.g., 1.

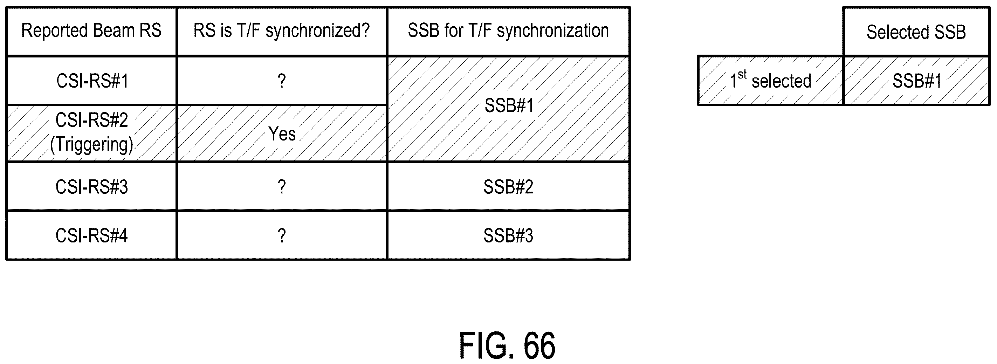

FIG. 66 is a schematic diagram illustrating a selection of SSB based on the association of reported beam, RS, and SSB according to an exemplary embodiment of the present disclosure. Referring to FIG. 66, in step 1, UE may select at least one SSB, where
selected SSB may be associated with at least one reported RS with T/F synchronization; and/ or
the at least one reported RS may satisfy the condition of triggering event.

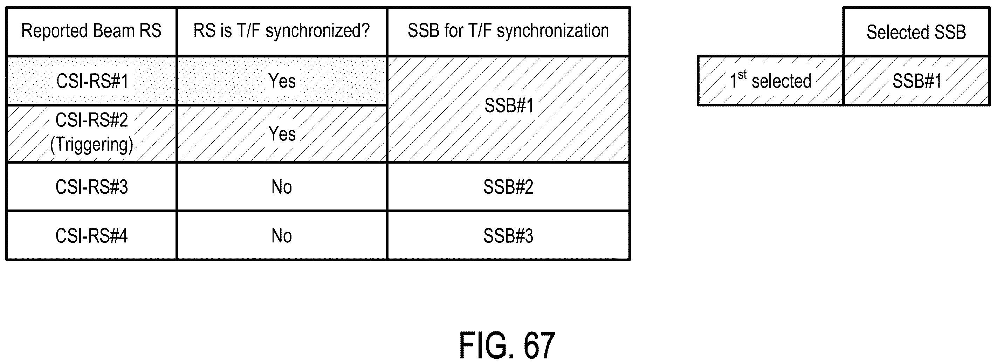

FIG. 67 is a schematic diagram illustrating a selection of SSB based on the association of reported beam, RS, and SSB according to an exemplary embodiment of the present disclosure. Referring to FIG. 67, in step 2, UE may select at least one SSB, where
selected SSB may be associated with at least one reported RS with T/F synchronization; and/ or the at least one reported RS may satisfy the condition of triggering event; and/ or
at least one reported RS the selected SSB may be reported/marked as T/F synchronized.

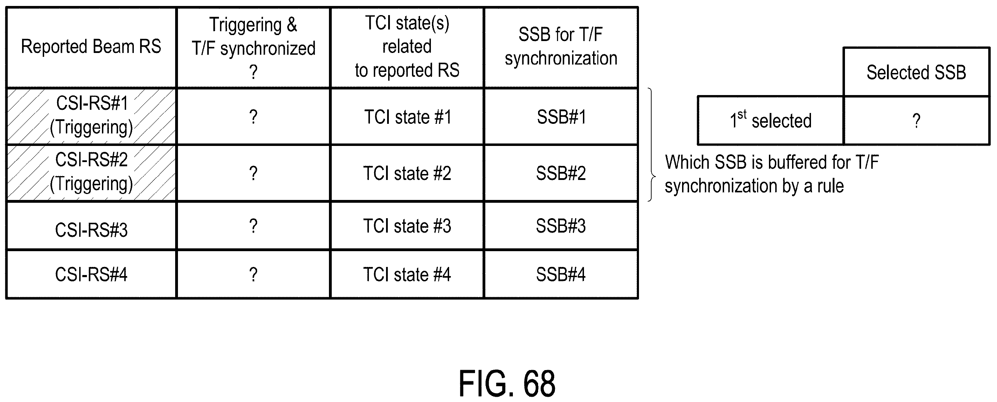

FIG. 68 is a schematic diagram illustrating a selection of SSB based on the association of reported beam, RS, and SSB according to an exemplary embodiment of the present disclosure. Referring to FIG. 68, UE may determine which SSBs are buffered for T/F synchronization, e.g., based on pre-determined rule. For example, if two RSs are triggered, which SSB is buffered for T/F synchronization by a rule.

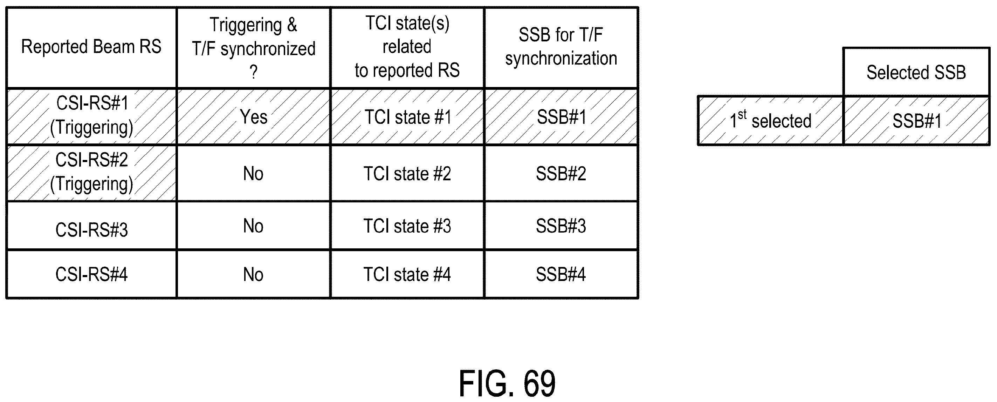

FIG. 69 is a schematic diagram illustrating a selection of SSB based on the association of reported beam, RS, and SSB according to an exemplary embodiment of the present disclosure. Referring to FIG. 69, in step 1, UE may select at least one SSB, where
selected SSB may be associated with at least one reported RS with T/F synchronization; and/ or the at least one reported RS may satisfy the condition of triggering event.
In step 2, if the number of reported RSs satisfying triggering condition is larger than the number of SSBs buffered for T/F synchronization,
UE may select SSBs associated with reported RSs of higher L1-RSRP values; and/ or
UE may select SSBs associated with reported RSs starting from the lowest RS ID (or highest RS ID); and/ or
UE may select one SSB associated with reported RS which firstly satisfies the condition of triggering event among reported RSs.

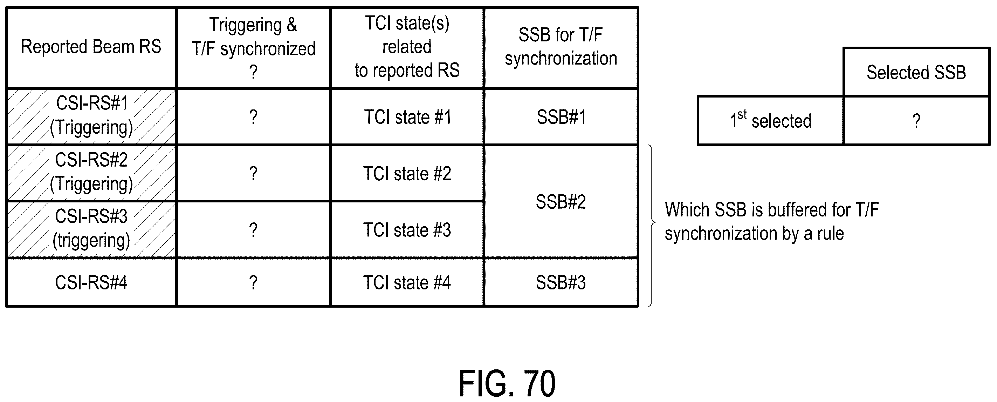

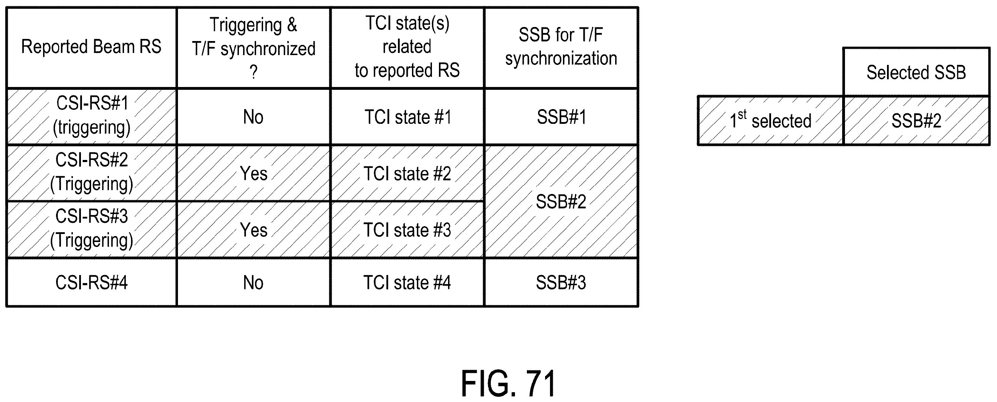

FIG. 70 is a schematic diagram illustrating a selection of SSB based on the association of reported beam, RS, and SSB according to an exemplary embodiment of the present disclosure. Referring to FIG. 70, UE may determine which SSBs are buffered for T/F synchronization, e.g., based on pre-determined rule. For example, if three RSs are triggered, which SSB is buffered for T/F synchronization by a rule.

FIG. 71 is a schematic diagram illustrating a selection of SSB based on the association of reported beam, RS, and SSB according to an exemplary embodiment of the present disclosure. Referring to FIG. 71, in step 1, UE may select at least one SSB, where
selected SSB may be associated with at least one reported RS with T/F synchronization; and/ or the at least one reported RS may satisfy the condition of triggering event.
In step 2, if the number of reported RSs satisfying triggering condition is larger than the number of SSBs buffered for T/F synchronization,
UE may select SSBs associated with the greatest number of reported RSs.

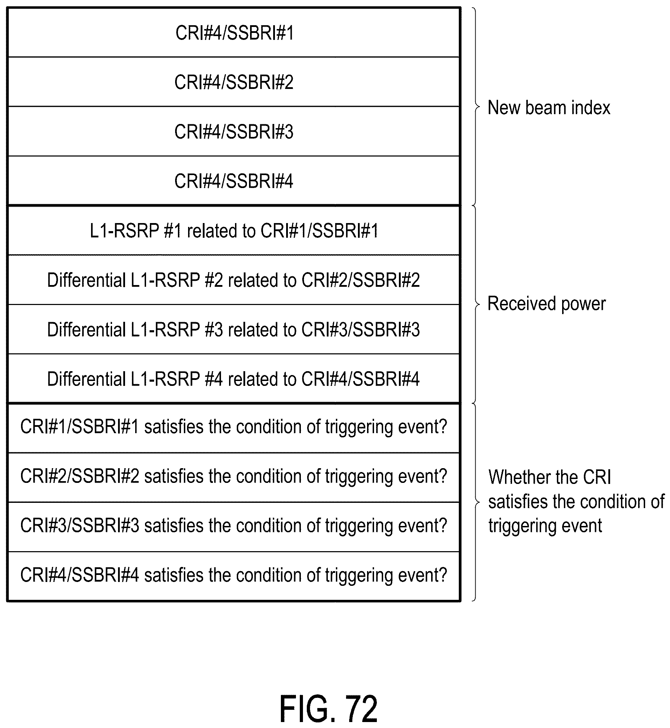

FIG. 72 is a schematic diagram illustrating a CSI report according to an exemplary embodiment of the present disclosure. Referring to FIG. 72, UE may indicate whether reported RS indicated by the CRI/SSBRI satisfies the condition of triggering event.

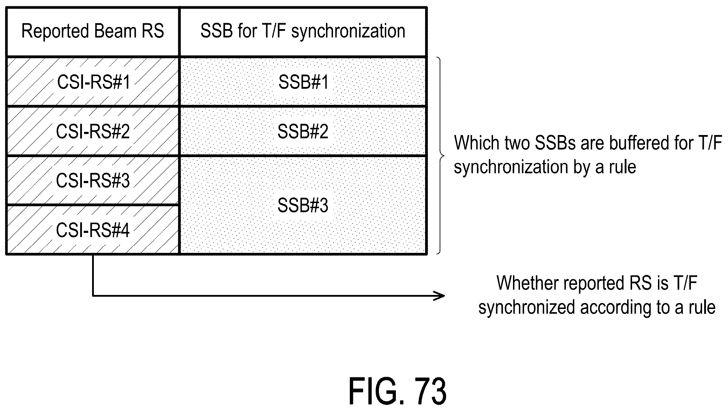

FIG. 73 is a schematic diagram illustrating an association of reported beam and SSB according to an exemplary embodiment of the present disclosure. Referring to FIG. 73, UE may indicate whether reported RS indicated by the CRI/SSBRI satisfies the condition of triggering event. In one embodiment, UE may receive a configuration/indication to indicate the number of SSBs that are buffered for T/F synchronization when/after new beam RS set measurement, where UE may determine which SSBs are buffered for T/F synchronization; and/ or
UE may indicate whether reported RS is T/F synchronized.
In one embodiment, UE may receive a configuration/indication to indicate e.g., up to two SSBs which is buffered for T/F synchronization. However, if three SSBs corresponding to four reported BSs exist, which two SSBs are buffered for T/F synchronization by a rule.

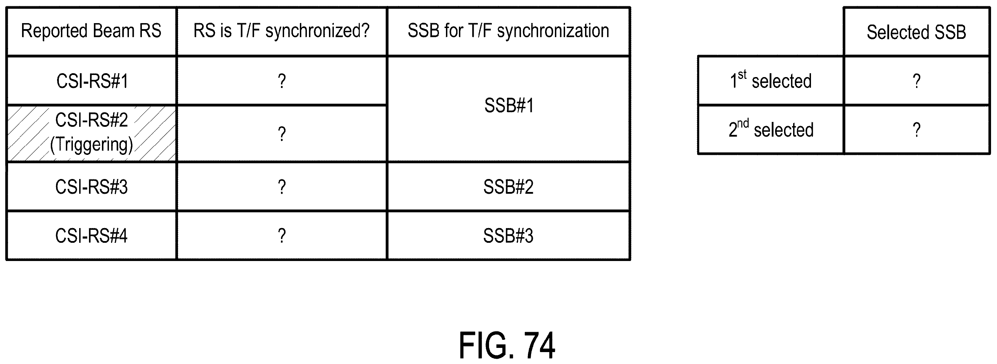

FIG. 74 is a schematic diagram illustrating an association of reported beam, RS, and SSB according to an exemplary embodiment of the present disclosure. Referring to FIG. 74, UE may determine which SSBs are buffered for T/F synchronization, e.g., based on pre-determined rule. For example, if three RSs are triggered, which SSB is buffered for T/F synchronization by a rule. UE and gNB may know the relation of new beam RS and SSB according to the configuration and/or the QCL relation. The number of SSBs (e.g., B) which are buffered for T/F synchronization is, e.g., 2.

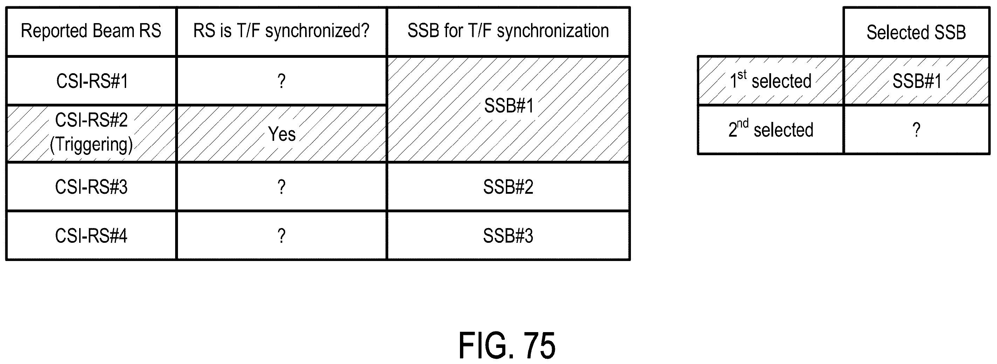

FIG. 75 is a schematic diagram illustrating a selection of SSB based on the association of reported beam, RS, and SSB according to an exemplary embodiment of the present disclosure. Referring to FIG. 75, in step 1, UE may select at least one SSB, where
selected SSB may be associated with at least one reported RS with T/F synchronization; and/ or
the at least one reported RS may satisfy the condition of triggering event.

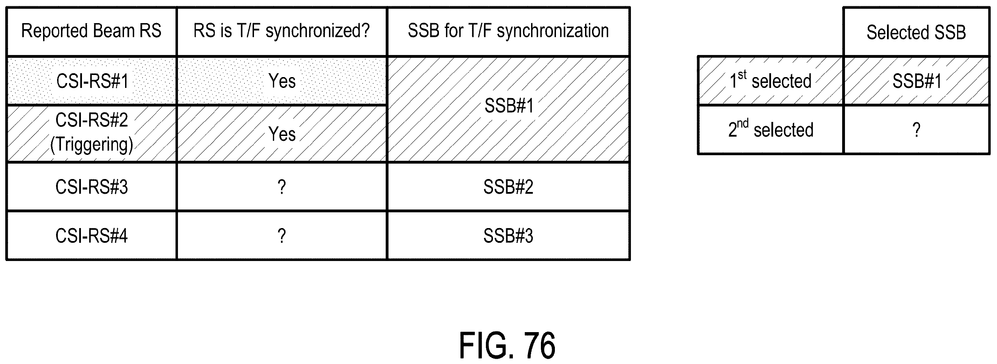

FIG. 76 is a schematic diagram illustrating a selection of SSB based on the association of reported beam, RS, and SSB according to an exemplary embodiment of the present disclosure. Referring to FIG. 76, in step 2, UE may select at least one SSB, where
selected SSB may be associated with at least one reported RS with T/F synchronization; and/ or
the at least one reported RS may satisfy the condition of triggering event; and/ or
at least one reported RS the selected SSB may be reported/marked as T/F synchronized.

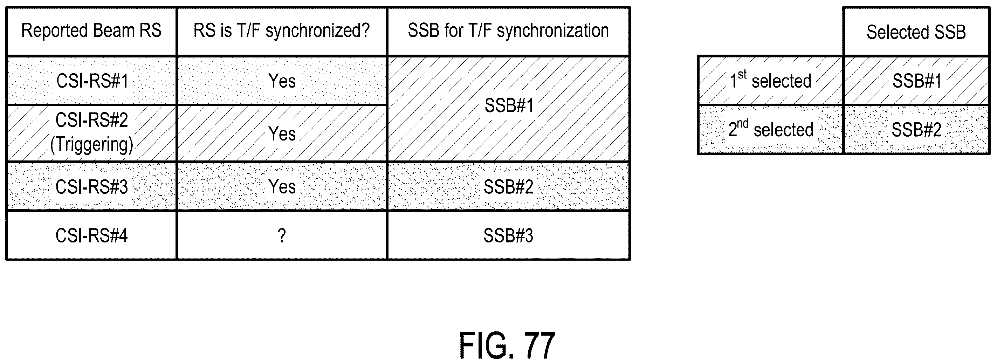

FIG. 77 is a schematic diagram illustrating a selection of SSB based on the association of reported beam, RS, and SSB according to an exemplary embodiment of the present disclosure. Referring to FIG. 77, in step 3, UE may select at least one SSB, where
selected SSB may be associated with at least one reported RS with T/F synchronization; and/ or
the at least one reported RS may have higher RSRP value among the un-selected reported RS.

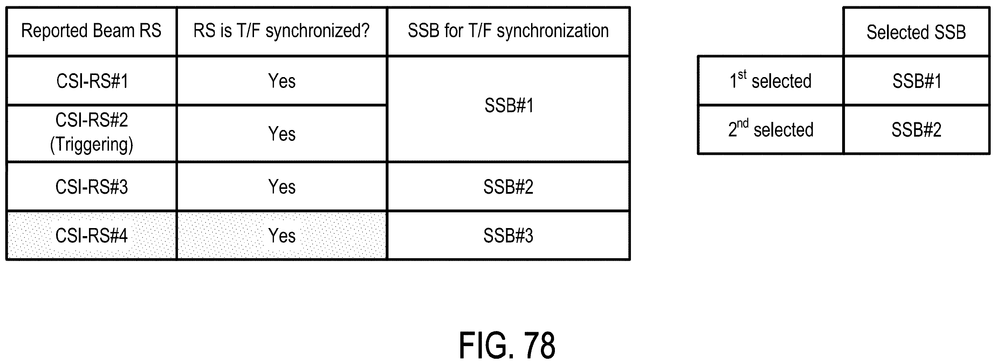

FIG. 78 is a schematic diagram illustrating a selection of SSB based on the association of reported beam, RS, and SSB according to an exemplary embodiment of the present disclosure. Referring to FIG. 78, in step 4, if the number of selected SSB is equal the number of SSB for T/F synchronization indicated by the capability, the unselected reported RS may be reported/marked as not synchronized. For example, CSI-RS#4 would not be used for synchronization.

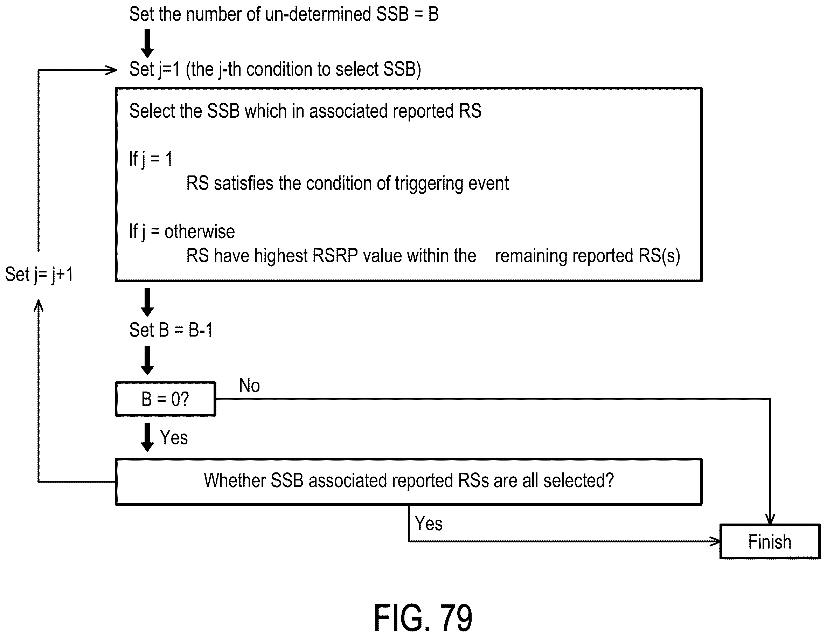

FIG. 79 is a schematic diagram illustrating a selection of SSB according to an exemplary embodiment of the present disclosure. Referring to FIG. 79, the number of un-determined SSB is set to B, and j is set to "1" (for the j-th condition to select SSB). The SSB which is associated with the reported RS is selected,
if j = 1, RS satisfies the condition of triggering event;
if j = otherwise, RS have highest RSRP value within the remaining reported RS(s).

In one embodiment, after UE receives a list indication/acknowledgement from the NW, UE may apply a new beam without RRC configuration signaling or MAC-CE signaling, where the new beam may be a TCI state associated with RS indicated by CRI/SSBRI in a CSI report, and or the CSI report may be configured in a CSI report configuration associated with a event type; and' or
after UE sending a UE-initiated beam report, UE may store the QCL properties of the SSB associated with the reference signal reported in the beam report; and/ or
UE may update TCI state(s) with the reported new beam(s); and/ or
UE may activate new beam(s) without additional first SSB reception, for example, UE may be able to receive DL (or UL) channel/RS with target/updated TCI state of the serving cell on which TCI state switch occurs at a first slot, where the first slot may be after slot n+ T_HARQ + 3*N_slot^(subframe,µ) / NR slot length.
In one embodiment, QCL properties may be QCL type A, QCL type B, QCL type C, or QCL type D. In one embodiment, QCL properties may be for T/F synchronization.

In one embodiment, after the UE receives a TCI state activation command to activate a TCI state(s), if the new beam(s) associated with the TCI state(s) is reported as synchronized in the UE-initiated beam report, the TCI state(s) may become applicable for DL reception without additional first SSB reception. For example, UE may be able to receive DL (or UL) channel/RS with target/updated TCI state of the serving cell on which TCI state switch occurs at a first slot, where the first slot may be after slot n+ T_HARQ + 3*N_slot^(subframe,µ) / NR slot length. Note: A reported new beam may be determined as synchronized by UE, if the UE stores the QCL properties associated with the reported new beam(s) after the UE-initiated beam report is sent. A reported new beam in a UEI/ED beam report, i.e., introducing a one-bit indicator for each reported new beam, or all the reported new beam are assumed to be synchronized.

In one embodiment, after UE sends a UE-initiated beam report, the UE may store the QCL properties of the SSB associated with the reference signal reported in the beam report. In one embodiment, in such case, at the reception of a subsequent reception of Unified TCI States Activation/Deactivation MAC CE, the UE may activate new beam(s) without additional first SSB reception. For example, UE may be able to receive DL (or UL) channel/RS with target/updated TCI state of the serving cell on which TCI state switch occurs at a first slot, where the first slot may be after slot n+ T_HARQ + 3*N_slot^(subframe,µ) / NR slot length.

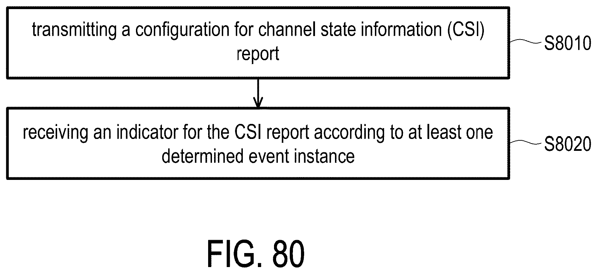

FIG. 80 is a flowchart illustrating a method performed by a network device according to an exemplary embodiment of the present disclosure. Referring to FIG. 80, the method may be performed by a network device, such as a base station NW. The base station NW transmits a configuration for channel state information (CSI) report, wherein the configuration is associated with a first event type (step S8010). The base station NW receives an indicator for the CSI report according to at least one determined event instance (step 8020). At least one event instance for a first reference signal configured by a resource set for a new beam based on the first event type is determined in a case that the reference signal receiving power (RSRP) value of the first reference signal is greater than the RSRP value of a second reference signal.

In one embodiment, the second reference signal is a third reference signal associated with an indicated transmission configuration indicator (TCI) state in a case that the resource set for the new beam is a channel state information-reference signal (CSI-RS) resource set configured with repetition.

In one embodiment, the second reference signal is a synchronization signal block (SSB) which is quasi-co-location (QCL) with a third reference signal associated with an indicated transmission configuration indicator (TCI) state in a case that the resource set for the new beam is a SSB resource set.

In one embodiment, the event instance for the first reference signal is determined in a case that the RSRP value of the first reference signal is an event threshold greater than the RSRP value of the second reference signal.

In one embodiment, the base station NW may receive a UE initiated report indicator (UEIRI) on a first physical uplink control channel (PUCCH) in a PUCCH resource configured by the configuration for CSI report in a case that a number of the at least one determined event instance determined by a counter is greater than or equal to an event instance count, where the indicator for the CSI report comprises the UEIRI.

In one embodiment, the event instance count is used to inform a number of the at least one event instance of the first event type for at least one same new beam within a configured time window that the UE is able to initiate a UE initiated beam management (UEIBM) report.

In one embodiment, the configuration for CSI report comprises an event detection time window length, which is used to inform a time window length for triggering event determination regarding the first event type.

In one embodiment, the base station NW may receive a CSI report, wherein the CSI report comprises at least one of the following pieces of information in a single reporting instance: a channel state information-reference signal resource indicator (CRI) or a synchronization signal block resource indicator (SSBRI), reference signal receiving power (RSRP), a condition met indicator, or a differential L1-RSRP of current beam.

In one embodiment, the CRI or the SSBRI is corresponding to a fourth reference signal provided by the resource set for the new beam.

In one embodiment, for each of the CRI or the SSBRI, the CSI report comprises an absolute L1-RSRP or a second differential L1-RSRP.

In one embodiment, the condition met indicator indicates whether a fifth reference signal indicated by a reported CRI or SSBRI triggers a UE initiated report indicator (UEIRI) transmission.

In one embodiment, the differential L1-RSRP of the current beam is a differential L1-RSRP corresponding to a third reference signal associated with an indicated transmission configuration indicator (TCI) state, or to asynchronization signal block (SSB) which is quasi-co-location (QCL) with the third reference signal in the indicated TCI state.

In one embodiment, the base station NW may receive a CSI report on a physical uplink shared channel (PUSCH) indicated by a DCI format in a case that a report transmission mode for the CSI report is configured as a first mode and a CSI trigger state in a CSI request field is indicated in the DCI format.

In one embodiment, the first mode is associated with an uplink control information (UCI) in a dynamically scheduled PUSCH.

In one embodiment, the base station NW may receive the CSI report on configured-grant physical uplink shared channel (CG-PUSCH) and at least one symbol after the end of a physical uplink control channel (PUCCH) in a case that a report transmission mode for the CSI report is configured as a second mode.

In one embodiment, the periodicity of the PUCCH and the periodicity of the CG-PUSCH are the same.

In one embodiment, the second mode is associated with an uplink control information (UCI) in a pre-configured uplink (UL) resource.

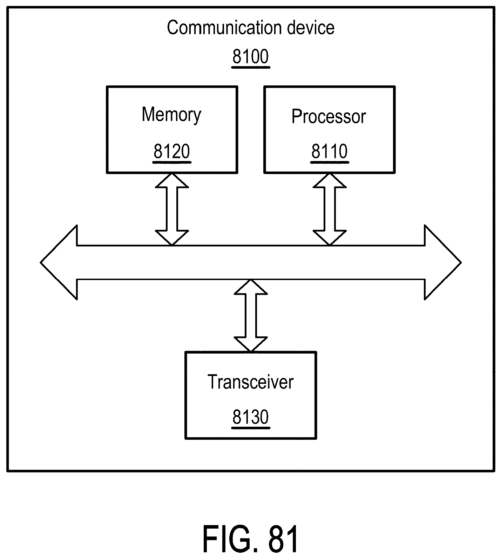

FIG. 81 is a block diagram that illustrates a communication device 8100 according to an exemplary embodiment of the present disclosure. Referring to FIG. 81, the communication device 8100 may be a UE or a network device. The communication device 8100 may include, but is not limited to, a processor 8110. The processor 8110 (e.g., having processing circuitry) may include an intelligent hardware device, e.g., a Central Processing Unit (CPU), a microcontroller, an ASIC, etc. The processor 8110 can call and run a computer program from memory to implement the method in the embodiment of the disclosure.

Since the program code stored in the communication device 8100 adopts all the technical solutions of all the foregoing embodiments when being executed by the processor 8110, it at least has all the advantageous effects brought by all the technical solutions of all the foregoing embodiments, and no further description is incorporated herein.

Optionally, as shown in FIG. 81, the communication device 8100 may further include a memory 8120. The memory 8120 may include computer-storage media in the form of volatile and/or non-volatile memory. The memory 8120 may be removable, non-removable, or a combination thereof. Exemplary memory includes solid-state memory, hard drives, optical-disc drives, etc. The processor 8110 may call and run a computer program from the memory 8120 to implement the method in the embodiment of the disclosure.

The memory 8120 may be a separate device independent of the processor 8110, or may be integrated in the processor 8110.

Optionally, as shown in FIG. 81, the communication device 8100 may further include a transceiver 8130, and the processor 8110 may control the transceiver 8130 to communicate with other devices. The transceiver 8130, having a transmitter (e.g., transmitting/transmission circuitry) and a receiver (e.g., receiving/reception circuitry) may be configured to transmit and/or receive time and/or frequency resource partitioning information. In some implementations, the transceiver 8130 may be configured to transmit in different types of subframes and slots, including, but not limited to, usable, non-usable and flexibly usable subframes and slot formats. The transceiver 8130 may be configured to receive data and control channels.

Specifically, the transceiver 8130 may send information or data to other devices, or receive information or data sent by other devices.

Specifically, the transceiver 8130 may include a transmitter and a receiver. The transceiver 8130 may further include an antenna, and the number of antennas may be one or more.

Optionally, the communication device 8100 may specifically be a network device in an embodiment of the disclosure, and the communication device 8100 may implement the corresponding process implemented by the network device in various methods of the embodiment of the disclosure. For the conciseness, related descriptions are omitted.

Optionally, the communication device 8100 may specifically be a mobile terminal, a terminal device, or a UE in an embodiment of the disclosure, and the communication device 8100 may implement the corresponding process implemented by the mobile terminal, the terminal device, or the UE in various methods in the embodiment of the disclosure. For conciseness, a related description is omitted.

## Claims

1. A method, performed by a user equipment (UE), the method comprising:
receiving a configuration for channel state information, CSI, report, wherein the configuration is associated with a first event type;
determining at least one event instance for a first reference signal configured by a resource set for a new beam based on the first event type in a case that a reference signal receiving power, RSRP, value of the first reference signal is greater than a RSRP value of a second reference signal; and
transmitting an indicator for the CSI report according to at least one determined event instance.

2. The method according to claim 1, wherein
the second reference signal is a third reference signal associated with an indicated transmission configuration indicator, TCI, state in a case that the resource set for the new beam is a channel state information-reference signal, CSI-RS, resource set configured with repetition; or
the second reference signal is a synchronization signal block, SSB, which is quasi-co-location, QCL, with a third reference signal associated with an indicated transmission configuration indicator, TCI, state in a case that the resource set for the new beam is a SSB resource set.

3. The method according to claim 1, wherein determining the event instance for the first reference signal comprises:
determining the event instance for the first reference signal in a case that the RSRP value of the first reference signal is an event threshold greater than the RSRP value of the second reference signal.

4. The method according to any one of claims 1-3, wherein transmitting the indicator for the CSI report according to at least one determined event instance comprises:
transmitting a UE initiated report indicator, UEIRI, on a first physical uplink control channel, PUCCH, in a PUCCH resource configured by the configuration for CSI report in a case that a number of the at least one determined event instance determined by a counter is greater than or equal to an event instance count, wherein the indicator for the CSI report comprises the UEIRI.

5. The method according to claim 4, wherein the event instance count is used to inform a number of the at least one event instance of the first event type for at least one same new beam within a configured time window that the UE is able to initiate a UE initiated beam management, UEIBM, report.

6. The method according to claim 4, further comprising:
resetting the counter for determining the at least one determined event instance in a case that a third reference signal associated with an indicated transmission configuration indicator, TCI, state or a synchronization signal block, SSB, which is quasi-co-location, QCL, with the third reference signal associated with the indicated TCI state is updated.

7. The method according to claim 4, wherein the configuration for CSI report comprises an event detection time window length, which is used to inform a time window length for triggering event determination regarding the first event type.

8. The method according to any one of claims 1-7, further comprising:
transmitting a CSI report, wherein the CSI report comprises at least one of the following pieces of information in a single reporting instance:
a channel state information-reference signal resource indicator, CRI, or a synchronization signal block resource indicator, SSBRI;
reference signal receiving power, RSRP;
a condition met indicator; or
a differential L1-RSRP of current beam.

9. The method according to claim 8, wherein
the CRI or the SSBRI is corresponding to a fourth reference signal provided by the resource set for the new beam; or
for each of the CRI or the SSBRI, the CSI report comprises an absolute L1-RSRP or a second differential L1-RSRP.

10. The method according to claim 8, wherein the condition met indicator indicates whether a fifth reference signal indicated by a reported CRI or SSBRI triggers a UE initiated report indicator, UEIRI, transmission.

11. The method according to claim 8, wherein the differential L1-RSRP of the current beam is a differential L1-RSRP corresponding to a third reference signal associated with an indicated transmission configuration indicator, TCI, state, or to an asynchronization signal block, SSB, which is quasi-co-location, QCL, with the third reference signal in the indicated TCI state.

12. The method according to any one of claims 1-7, further comprising:
transmitting a CSI report on a physical uplink shared channel, PUSCH, indicated by a DCI format in a case that a report transmission mode for the CSI report is configured as a first mode and a CSI trigger state in a CSI request field is indicated in the DCI format; or
transmitting a CSI report on configured-grant physical uplink shared channel, CG-PUSCH, and at least one symbol after an end of a physical uplink control channel, PUCCH, in a case that a report transmission mode for the CSI report is configured as a second mode.

13. The method according to claim 12, wherein the first mode is associated with an uplink control information, UCI, in a dynamically scheduled PUSCH.

14. The method according to claim 12, wherein a periodicity of the PUCCH and a periodicity of the CG-PUSCH are the same.

15. The method according to claim 12, wherein the second mode is associated with an uplink control information, UCI, in a pre-configured uplink, UL, resource.

16. A user equipment (UE), comprising:
a transceiver (8130); and
a processor (8110), coupled to the transceiver (8130), and configured for:
receiving, through the transceiver (8130), a configuration for channel state information, CSI, report, wherein the configuration is associated with a first event type;
determining at least one event instance for a first reference signal configured by a resource set for a new beam based on the first event type in a case that a reference signal receiving power, RSRP, value of the first reference signal is greater than a RSRP value of a second reference signal; and
transmitting, through the transceiver (8130), an indicator for the CSI report according to at least one determined event instance.

17. A method, performed by a network device (NW), the method comprising:
transmitting a configuration for channel state information, CSI, report, wherein the configuration is associated with a first event type; and
receiving an indicator for the CSI report according to at least one determined event instance,
wherein at least one event instance for a first reference signal configured by a resource set for a new beam based on the first event type is determined in a case that a reference signal receiving power, RSRP, value of the first reference signal is greater than a RSRP value of a second reference signal.
